# EUROPEAN PATENT APPLICATION

(11) **EP 1 555 740 A2**
(43) Date of publication of application: **20.07.2005**
(21) Application number: 05000634.5
(22) Date of filing: 13.01.2005
(51) Int. Cl.: H02M 1/00, H02M 3/335

(54) **Switching power supply circuit**

(30) Priority: 14.01.2004 JP 2004006688; 23.01.2004 JP 2004015422; 09.02.2004 JP 2004032399; 12.02.2004 JP 2004034434; 17.09.2004 JP 2004271922
(71) Applicant: SONY CORPORATION, Tokyo (JP)
(72) Inventor: Yasumura, Masayuki, Shinagawa-ku Tokyo (JP)
(74) Representative: Müller - Hoffmann & Partner

(57) **Abstract**

A switching power supply circuit including a configuration for power factor correction is disclosed which minimizes ripples and achieves a high power conversion efficiency. For power factor correction of a composite resonance converter including a partial resonance voltage circuit combined with a current resonance converter according to a half-bridge connection, a power factor correction circuit is configured such that primary side series resonance current obtained by a primary side series resonance circuit is regenerated and fed back as electric power to a smoothing capacitor. An insulating converter transformer of the composite resonance converter is formed such that the magnetic flux density therein is set so as to allow a secondary side rectification current to exhibit a continuous mode irrespective of any variation of the secondary side dc output voltage.

## Description

### BACKGROUND OF THE INVENTION

This invention relates to a switching power supply circuit which includes a power factor correction circuit.

Various power supply circuits which include a resonance type converter on the primary side have been proposed by the assignee of the present invention. Also various power supply circuits which include a power factor correction circuit for achieving correction of the power factor for a resonance type converter have been proposed.

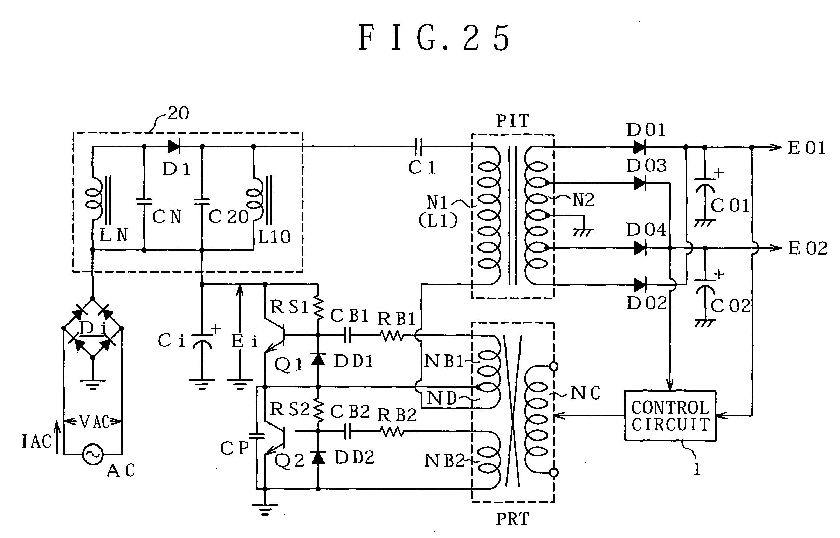

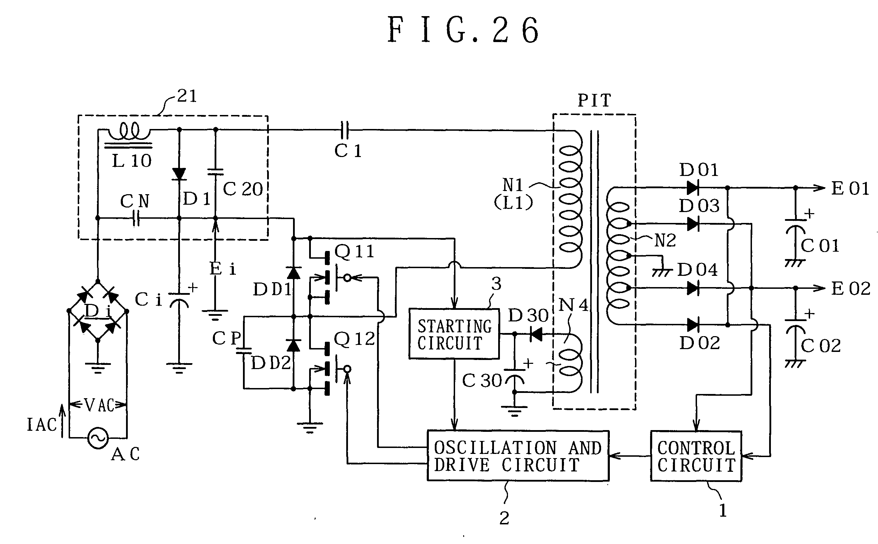

FIGS. 25 and 26 show switching power supply circuits configured based on the invention proposed by the assignee of the present invention and disclosed in Japanese Patent Laid-Open No. 2003-189614.

Referring first to FIG. 25, the power supply circuit shown includes a power factor correction circuit 20 in combination with a self-excited switching converter of the current resonance type. The switching converter of the power supply circuit is formed from a combination of a current resonance type converter of the half-bridge coupling type and a partial voltage resonance circuit which voltage resonates only upon turning off of a semiconductor switch (switching element).

The power supply circuit further includes a bridge rectification circuit Di for full-wave rectifying an ac input voltage VAC from a commercial ac power supply AC. A rectification output from the bridge rectification circuit Di is charged into a smoothing capacitor Ci through the power factor correction circuit 20. Consequently, a rectification smoothed voltage Ei corresponding to a level equal to that of_the ac input voltage VAC is obtained across the smoothing capacitor Ci.

The power factor correction circuit 20 is hereinafter described.

The self-excited current resonance type converter of the power supply circuit uses the rectification smoothed voltage Ei, which is a voltage across the smoothing capacitor Ci, as operation power thereof.

In the current resonance type converter, switching elements Q1 and Q2 each in the form of a bipolar transistor are connected in a half-bridge connection and inserted between the positive electrode side of the smoothing capacitor Ci and the primary side ground as seen in FIG. 25.

Starting resistors RS1 and RS2 are inserted between the collector and the base of the switching elements Q1 and Q2, respectively. Resistors RB1 and RB2 are connected to the bases of the switching elements Q1 and Q2 and provided to set base current (drive current) for the switching elements Q1 and Q2.

Clamp diodes DD1 and DD2 are inserted between the base and the emitter of the switching elements Q1 and Q2, respectively. The clamp diodes DD1 and DD2 form current paths along which clamp current flows between the base and the emitter within a period within which the switching elements Q1 and Q2 are off, respectively.

Resonance capacitors CB1 and CB2 cooperate with driving windings NB1 and NB2 of a drive transformer PRT (Power Regulating Transformer), which is described hereinbelow, to form series resonance circuits for self excitation (self-excited driving circuits), and are used to determine the switching frequency of the switching elements Q1 and Q2.

The drive transformer PRT in this instance is provided to drive the switching elements Q1 and Q2 and variably control the switching frequency to perform fixed voltage control. The drive transformer PRT in this instance is formed as a saturable reactor of the orthogonal type wherein the driving windings NB1 and NB2 are wound and a control winding NC is wound in a direction orthogonal to those of the driving windings NB1 and NB2.

The driving winding NB1 of the drive transformer PRT is connected at one end thereof to the base of the switching element Q1 through the series connection of the resistor RB1 and the resonance capacitor CB1. The other end of the driving winding NB1 is formed as a tap point which is a node to an end portion of a resonance current detection winding ND, and is connected to the emitter of the switching element Q1.

The driving winding NB2 is connected at an end thereof to the ground and at the other end thereof to the base of the switching element Q2 through the series connection of the resistor RB2 and the resonance capacitor CB2.

The driving winding NB1 and the driving winding NB2 are wound such that they generate voltages of the opposite polarities to each other.

An insulating converter transformer PIT (Power Isolation Transformer) transmits a switching output of the switching elements Q1 and Q2 to the secondary side.

A primary winding N1 of the insulating converter transformer PIT is connected at an end thereof to a node (switching output point) of the emitter of the switching element Q1 and the collector of the switching element Q2 through the resonance current detection winding ND so that a switching output may be obtained.

The primary winding N1 is connected at the other end thereof to the cathode of a high speed recovery type diode D1 in the power factor correction circuit 20 through a series resonance capacitor C1.

In this instance, the series resonance capacitor C1 and the primary winding N1 are connected in series. The capacitance of the series resonance capacitor C1 and the leakage inductance component L1 of the insulating converter transformer PIT including the primary winding N1 (series resonance winding) cooperatively form a primary side current resonance circuit for making operation of the switching converter as that of the current resonance type.

A parallel resonance capacitor Cp is connected in parallel between the collector and the emitter of the switching element Q2.

As the parallel resonance capacitor Cp is connected in this manner, voltage resonance operation is obtained only upon turning off of the switching elements Q1 and Q2 by the capacitance of the parallel resonance capacitor Cp and the leakage inductance component L1 of the primary winding N1. In other words, a partial voltage resonance circuit is formed.

On the secondary side of the insulating converter transformer PIT shown in FIG. 25, a center tap is provided for a secondary winding N2 and rectification diodes D01, D02, D03 and D04 and the smoothing capacitors C01 and C02 are connected in such a manner as seen in FIG. 25. Therefore, two sets of full-wave rectification circuits including a set of the rectification diodes D01 and D02 and the smoothing capacitor C01 and another set of the rectification diodes D03 and D04 and the smoothing capacitor C02 are provided. The full-wave rectification circuit formed from the rectification diodes D01 and D02 and the smoothing capacitor C01 produces a dc output voltage E01 while the full-wave rectification circuit formed from the rectification diodes D03 and D04 and the smoothing capacitor C02 produces a dc output voltage E02.

It is to be noted that, in the arrangement shown in FIG. 25, both of the dc output voltage E01 and the dc output voltage E02, are branched and inputted also to a control circuit 1. The control circuit 1 uses the dc output voltage E01 as a detection voltage and uses the dc output voltage E02 as operation power supply.

Further, for the rectification diodes D01 and D02 and the rectification diodes D03 and D04, for example, a Schottky diode is selectively used so that a high speed switching operation (rectification operation) according to a switching cycle may be obtained.

The control circuit 1 supplies, for example, dc current, whose level is varied in response to the level of the dc output voltage E01 of the secondary side, as control current to the control winding NC of the drive transformer PRT to perform fixed voltage control.

In switching operation of the power supply circuit having the configuration described above, when a commercial ac power supply is connected first, starting current is supplied to the bases of the switching elements Q1 and Q2, for example, through the starting resistors RS1 and RS2, respectively. If it is assumed that, for example, the switching element Q1 is turned on first, then the switching element Q2 is controlled to an off state. Then, as an output of the switching element Q1, resonance current flows along the resonance current detection winding ND, primary winding N1 series resonance capacitor C1. The switching elements Q1 and Q2 are controlled such that, when the resonance current approaches 0, the switching element Q2 is turned on and the switching element Q1 is turned off. Then, resonance current flows in the reverse direction to that described above through the switching element Q2. Therefore, switching operation of the self-excited type wherein the switching elements Q1 and Q2 are turned on alternately is started.

In this manner, the switching elements Q1 and Q2 repeat opening and closing operations alternately using the terminal voltage of the smoothing capacitor Ci as operation power supply to supply drive current having a waveform proximate to a resonance current waveform to the primary winding N1 of the insulating converter transformer PIT to obtain an alternating output at the secondary winding N2.

As described above, the control circuit 1 uses, for example, dc current whose level is varied in response to the level of the dc output voltage E01 on the secondary side, as control current to the control winding NC of the drive transformer PRT to perform fixed voltage control.

In particular, the control circuit 1 supplies control current corresponding to the level of the dc output voltage E01 to the control winding NC to vary the inductance values of the driving windings NB1 and NB2 thereby to vary the inductance value of the self-excited oscillation circuit. Where the inductance value is varied in this manner, the oscillation frequency of the self-excited oscillation circuit varies, and as a result, the switching frequency is variably controlled. Since the switching frequency of the switching elements Q1 and Q2 is variably controlled in response to the level of the dc output voltage E01 in this manner, the drive current to be supplied to the primary winding N1 of the primary side series resonance circuit is controlled to control the energy to be transmitted to the secondary side thereby to achieve fixed voltage control of the secondary side dc output voltage.

It is to be noted that the fixed voltage control method according to such a method as described above is hereinafter referred to as "switching frequency control method".

Now, a configuration of the power factor correction circuit 20 is described.

The power factor correction circuit 20 has a configuration of a power regeneration type power factor correction circuit according to a magnetic coupling type.

In the power factor correction circuit 20, a filter choke coil LN, a high speed recovery type diode D1 and a high frequency inductor L10 are connected in series and inserted between the positive output terminal of the bridge rectification circuit Di and the positive terminal of the smoothing capacitor Ci.

A filter capacitor CN is inserted between the anode side of the high speed recovery type diode D1 and the positive terminal of the smoothing capacitor Ci such that it cooperates with the filter choke coil LN to form a low-pass filter of a normal mode.

A parallel resonance capacitor C20 is connected in parallel to the high frequency inductor L10 such that a parallel resonance circuit is formed from the parallel resonance capacitor C20 and the high frequency inductor L10. The parallel resonance circuit acts to suppress a rise of the rectification smoothed voltage Ei when the load decreases.

The primary side current resonance circuit (N1, C1) described hereinabove is connected to a node of the cathode of the high speed recovery type diode D1 and the high frequency inductor L10 of the power factor correction circuit 20. Thus, current/voltage by the switching output obtained from the current resonance circuit may be fed back to the node.

In operation of the power factor correction circuit 20 having the configuration described above, primary side dc resonance current flowing through the primary side series resonance circuit (C1 - N1 (L1)) in response to switching outputs of the switching elements Q1 and Q2 is regenerated as power and fed back to the smoothing capacitor Ci through the parallel connection of the high frequency inductor L10 and the parallel resonance capacitor C20. Consequently, the power factor correction circuit 20 operates such that the high speed recovery type diode D1 is switched when the voltage fed back in this manner is higher than 1/2 a positive or negative peak value of the ac input voltage VAC.

Consequently, also within a period within which the rectification output voltage level is lower than the voltage across the smoothing capacitor Ci, charging current to the smoothing capacitor Ci flows.

As a result, an average waveform of the ac input current approaches the waveform of the ac input voltage and the continuity angle of the ac input current is expanded. As a result, the power factor is corrected.

FIG. 26 shows another configuration of a switching power supply circuit configured based on the invention proposed by the assignee of the present invention.

The power supply circuit shown in FIG. 26 also includes a current resonance type converter wherein two switching elements are connected in a half bridge connection. However, the current resonance type converter shown in FIG. 26 is of the separate excitation type. Further, also the power supply circuit includes a power factor correction circuit 21 for correcting the power factor.

It is to be noted that, in FIG. 26, like elements to those of FIG. 25 are denoted by like reference characters and overlapping description of them is omitted herein to avoid redundancy.

In the current resonance type converter of the primary side shown in FIG. 26, for example, a MOS-FET is selectively used for the two switching elements Q11 and Q12 connected in a half bridge connection.

Here, the drain of the switching element Q11 is connected to a line of a rectification smoothed voltage Ei, and the source of the switching element Q11 and the drain of the switching element Q12 are connected to each other while the source of the switching element Q2 is connected to the primary side ground to establish a half bridge connection suitable for the separate excitation system.

The switching elements Q11 and Q12 are driven for switching by an oscillation drive circuit 2 so that on/off operations are repeated alternately to intermittently connect and disconnect the rectification smoothed voltage Ei to produce a switching output.

Further, in this instance, clamp diodes DD1 and DD2 are connected in such directions as seen in FIG. 26 between the drain and the source of the switching elements Q11 and Q12, respectively.

Furthermore, in this instance, the primary winding N1 of the insulating converter transformer PIT is connected at an end thereof to a node (switching output point) of the drains and the sources of the switching elements Q11 and Q12 so that the switching output is supplied to the primary winding N1. The primary winding N1 is connected at the other end thereof to the anode of the high speed recovery type diode D1 of the power factor correction circuit 21 through the series resonance capacitor C1.

Also in this instance, the capacitance of the series resonance capacitor C1 and the leakage inductance component L1 of the insulating converter transformer PIT including the primary winding N1 form a current resonance circuit which makes the switching power supply circuit as that of the current resonance type.

Further, a parallel resonance capacitor Cp connected in parallel between the drain and the source of the switching element Q12 and the leakage inductance component L1 of the primary winding N1 form a partial voltage resonance circuit.

The control circuit 1 in this instance outputs a control signal having a level, for example, corresponding to the variation of the dc output voltage E01 to the oscillation drive circuit 2. The oscillation drive circuit 2 varies the frequency of the switching driving signals to be supplied to the gates of the switching elements Q11 and Q12 from the oscillation drive circuit 2 based on the control signal supplied thereto from the control circuit 1 to vary the switching frequency. Fixed voltage control is performed thereby similarly as in the circuit of FIG. 25.

A starting circuit 3 is provided to detect a voltage or electric current obtained from the rectification smoothing line after the power supply is connected to start the oscillation drive circuit 2. The starting circuit 3 uses, as operation power supply, a dc voltage of a low level obtained by rectifying electric current obtained by a winding N4 wound additionally in the insulating converter transformer PIT by means of a rectification diode D30 and a smoothing capacitor C30.

The power factor correction circuit 21 shown in FIG. 26 has a configuration of a power factor correction circuit of the power regeneration type based on an electrostatic coupling system.

In the power factor correction circuit 21, a high frequency inductor L10 and a high speed recovery type diode D1 are connected in series and inserted between the positive output terminal of the bridge rectification circuit Di and the positive terminal of the smoothing capacitor Ci. Here, a filter capacitor CN is connected in parallel to the series connection circuit of the high frequency inductor L10 and the high speed recovery type diode D1. The filter capacitor CN forms a low-pass filter of a normal mode together with the high frequency inductor L10 also by the connection scheme just described.

Further, the parallel resonance capacitor C20 is connected in parallel to the high speed recovery type diode D1.

Further, a current resonance circuit (N1, C1) is connected to a node of the high frequency inductor L10 and the anode of the high speed recovery type diode D1 of the power factor correction circuit 21.

Also in the power factor correction circuit 21 formed in such a manner as described above, the primary side series resonance current is regenerated as power and fed back to the smoothing capacitor Ci through the capacitor C20 so that the high speed recovery type diode D1 performs switching operation when the voltage to the smoothing capacitor Ci has a level higher than 1/2 the positive or negative peak value of the ac input voltage VAC.

Consequently, also where the rectification output voltage level is lower than the voltage across the smoothing capacitor Ci, charging current flows to the smoothing capacitor Ci. Therefore, an average waveform of the ac input current approaches the waveform of the ac input voltage and the continuity angle of the ac input current is expanded. As a result, the power factor is corrected.

It is known that, where the configurations of the power supply circuits described hereinabove with reference to FIGS. 25 and 26 are modified so as to be ready for a comparatively heavy load under the condition that a commercial ac power supply of the 100 V type is inputted, they have such configurations as shown in FIGS. 27 and 28, respectively.

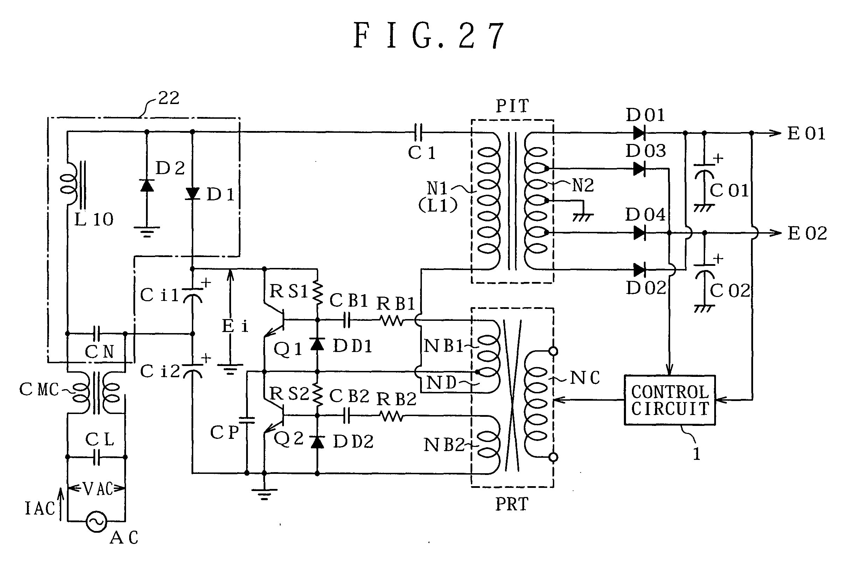

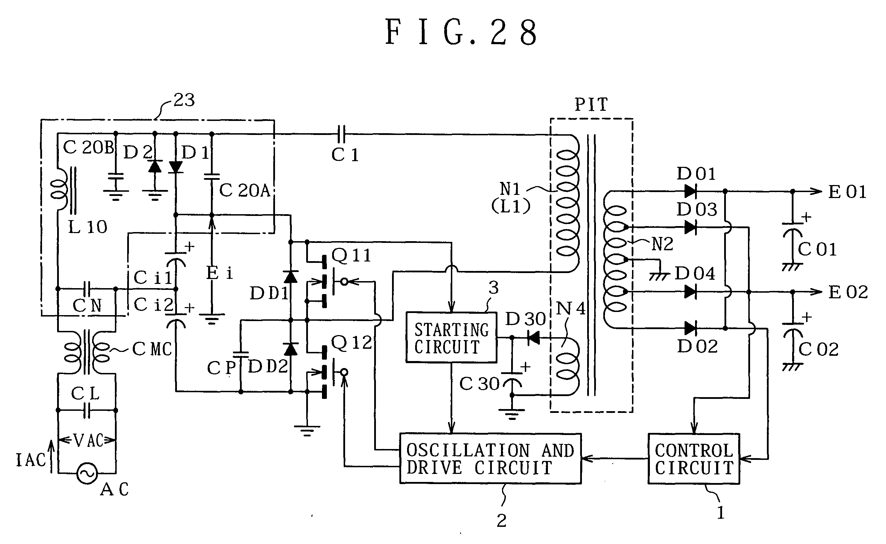

FIG. 27 shows a power supply circuit of a configuration wherein the configuration shown in FIG. 25 is modified such that the rectification circuit system for producing the rectification smoothed voltage Ei (dc input voltage) from the ac input voltage VAC from the commercial ac power supply AC is formed as a voltage doubler rectification circuit. Meanwhile, FIG. 28 shows a power supply circuit of a configuration wherein the configuration shown in FIG. 26 is modified such that the rectification circuit system for producing the rectification smoothed voltage Ei (dc input voltage) from the ac input voltage VAC is formed as a voltage doubler rectification smoothing circuit.

First, the power supply circuit shown in FIG. 27 is described. It is to be noted that, in FIG. 27, like elements to those of FIGS. 25 and 26 are denoted by like reference characters and overlapping description of them is omitted herein to avoid redundancy.

In the power supply circuit shown in FIG. 27, a common mode noise filter is formed from a filter capacitor CL and a common mode choke coil CMC for a commercial ac power supply AC.

The voltage doubler rectification smoothing circuit for producing the rectification smoothed voltage Ei from the ac input voltage VAC includes two rectification diodes D1 and D2 and a series connection circuit of a smoothing capacitor Ci1 and another smoothing capacitor Ci2. In this instance, the smoothing capacitors Ci1 and Ci2 have an equal capacitance value.

In the rectification smoothing circuit, the rectification diodes D1 and D2 are inserted individually in rectification current paths formed in different half cycles of the ac input voltage VAC. For example, within a half cycle within which the ac input voltage VAC exhibits the positive polarity, a rectification output of the rectification diode D1 is charged into the smoothing capacitor Ci1. On the other hand, within the other half cycle within which the ac input voltage VAC has the negative polarity, a rectification output of the rectification diode D2 is charged into the smoothing capacitor Ci2.

Consequently, within one cycle of the ac input voltage VAC, the rectification smoothed voltage Ei having a level corresponding to twice the level of the commercial ac power supply described above is obtained across the smoothing capacitors Ci1 and Ci2. It is to be noted that, a high speed recovery type diode is selectively used for the rectification diodes D1 and D2 in this instance.

Further, a power factor rectification circuit 22 shown in FIG. 27 adopts the power regeneration system according to the magnetic coupling system as described above, and the high frequency inductor L10 is connected to a node of the rectification diode D1 and the rectification diode D2 described above in such a manner as seen in FIG. 27. In this instance, the high frequency inductor L10 is connected between the node of the rectification diodes D1 and D2 and a node of the common mode choke coil CMC and the filter capacitor CN on the positive line of the commercial ac power supply AC.

The filter capacitor CN is inserted in the line of the commercial ac power supply AC such that it may have a parallel relationship to both of the series connection circuit of the rectification diode D1 and the high frequency inductor L10 and the series connection circuit of the rectification diode D2 and the high frequency inductor L10. Consequently, the filter capacitor CN suppresses normal mode noise generated on the rectification current path.

The series resonance circuit (C1 - N1 (L1)) on the primary side described above is connected to a node of the anode of the rectification diode D1, the cathode of the rectification diode D2 and an end of the high frequency inductor L10. Consequently, electric current/voltage of the switching output obtained by the series resonance circuit is fed back.

In the power factor rectification circuit 22 formed in such a manner as described above, primary side series resonance current flowing through the primary side series resonance circuit (C1 - N1 (L1)) in response to the switching output of the switching elements Q1 and Q2 is regenerated as power and fed back to the smoothing capacitor Ci through the inductance of the high frequency inductor L10. Consequently, the rectification diodes D1 and D2 of the high speed recovery type can operate so as to perform switching when the voltage at the smoothing capacitor Ci has a value, for example, higher than 1/2 the positive and negative peak values of the ac input voltage VAC.

Consequently, even within a period within which the rectification output voltage level is lower than the voltage across the smoothing capacitor Ci, charging current flows to the smoothing capacitor Ci.

As a result, an average waveform of the ac input current approaches the waveform of the ac input voltage to expand the continuity angle of the ac input current, and consequently, correction of the power factor is achieved.

Now, the power supply circuit shown in FIG. 28 is described. It is to be noted that, in FIG. 28, like elements to those of FIGS. 25 to 27 are denoted by like reference characters and overlapping description of them is omitted herein to avoid redundancy.

The power factor correction circuit 23 shown in FIG. 28 has a configuration of a power factor correction circuit of the power regeneration type according to the electrostatic coupling system similarly to the power supply circuit of FIG. 26. The power factor correction circuit 23 includes the configuration of the power factor rectification circuit 22 described hereinabove with reference to FIG. 27, but additionally includes power factor correcting series resonance capacitors C20A and C20 B connected in parallel to the rectification diodes D1 and D2, respectively. Also in this instance, the series resonance circuit (C1 - N1 (L1)) is connected to the node of the rectification diode D1, rectification diode D2 and high frequency inductor L10.

Also in the power factor correction circuit 23 formed in such a manner as described above, primary side series resonance current is regenerated as power and fed back to the smoothing capacitor Ci so that the rectification diode D1 and the rectification diode D2 each in the form of a high speed recovery type diode perform switching operation also when the voltage at the smoothing capacitor Ci is higher than 1/2 the positive or negative peak value of the ac input voltage VAC. Consequently, even within a period within which the rectification output voltage level is lower than the voltage across the smoothing capacitor Ci, charging current flows to the smoothing capacitor Ci.

As a result, an average waveform of the ac input current approaches the waveform of the ac input voltage to expand the continuity angle of the ac input current, and consequently, correction of the power factor is achieved.

The insulating converter transformer PIT provided in the power supply circuits shown in FIGS. 25 to 28 has, for example, such a structure as described below. First, the insulating converter transformer PIT includes, as a core thereof, an EE type core which includes a combination of E type cores made of a ferrite material. Further, a wiring receiving portion of the insulating converter transformer PIT is divided into winding receiving portions for the primary side and the secondary side, and the primary winding (N1) and the secondary winding are wound on a central magnetic leg of the EE type core.

Furthermore, a gap of approximately 1.0 mm is formed in the central magnetic leg of the EE type core of the insulating converter transformer PIT. Further, the numbers of turns of the secondary winding (N2) and the primary winding (N1) are set so that the induced voltage level per one turn (1 T) of the secondary side winding (N2) might be 5 V (5 V/T).

Consequently, a coupling coefficient of approximately 0.80 to 0.85 is obtained between the primary side winding (N1) and the secondary side winding (N2) thereby to obtain the leakage inductance (L1) of a required value. Also under this condition, the rectification current flowing through the secondary side full-wave rectification circuit exhibits discontinuous operation when the ac input voltage is low or the load is heavy because the coupling coefficient is high and the continuity angle of the secondary side current does not become wide.

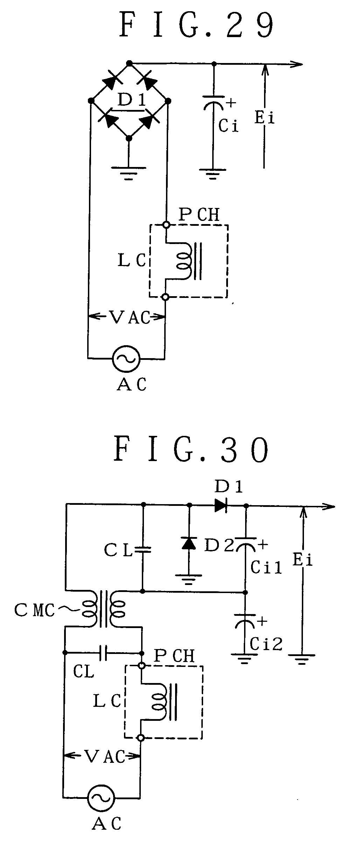

Also a configuration wherein a power choke coil PCH is inserted in a commercial ac power supply line, for example, as seen in FIG. 29 or 30 is shown as a technique for achieving correction of the power factor in addition to the techniques described hereinabove with reference to FIGS. 25 to 28. FIG. 29 shows a configuration ready for a case wherein the rectification circuit system for producing the rectification smoothed voltage Ei (dc input voltage) is a full-wave bridge rectification circuit. Meanwhile, FIG. 30 shows another configuration ready for another case wherein the rectification circuit for producing the rectification smoothed voltage Ei (dc input voltage) is a voltage doubler rectification circuit. Where the power choke coil PCH is inserted in the commercial ac power supply line in this manner, the impedance according to the inductance of the power choke coil PCH suppresses continuity of the ac input current thereby to expand the continuity angle of the ac input current to achieve correction of the power factor. The correction of the power factor by such a power choke coil as described above is called choke input system.

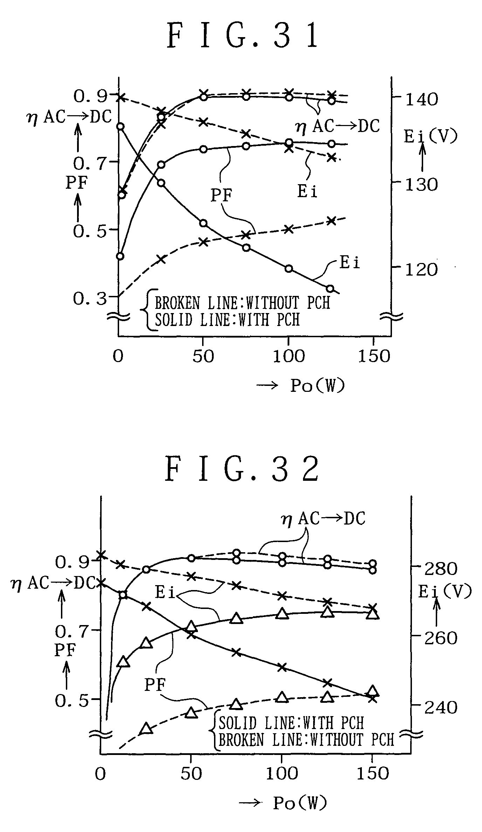

FIGS. 31 and 32 illustrate the characteristics of the ac to dc power conversion efficiency ( AC DC), the rectification smoothed voltage Ei level and the power factor PF of the power supply circuits wherein the power choke coil PCH is inserted in the commercial ac power supply line as seen in FIGS. 29 and 30, respectively. In the figures, also the characteristics of power supply circuits of the other configuration wherein the power choke coil PCH is not inserted (correction of the power factor is not performed) are illustrated. It is to be noted that, in this instance, the latter stage of the power supply circuits shown in FIGS. 29 and 30 may have a configuration wherein, for example, the power factor correction circuit 20 to 23 is omitted from the power supply circuit 25 to 28.

Where the power choke coil PCH shown in FIG. 29 or 30 is used actually, the value of the inductance Lc thereof is set so that the power factor PF becomes higher than 0.75 when the load power Po exhibits a maximum load power (in this instance, Po = 125 Wh) as seen from the power factor characteristic indicated by a solid line in FIG. 31 or 32. Consequently, the regulation value, for example, for the harmonic distortion regulation class D for electronic apparatus for home use and for universal use is satisfied. It is to be noted that, as the actual value of the inductance Lc, 10 mH was selected for the circuit of FIG. 29 while 7.2 mH was selected for the circuit of FIG. 30.

However, the power supply circuits configured so as to include a power factor correction circuit in such a manner as seen in FIGS. 25 to 28 have the following problems.

In particular, while the power supply circuits shown adopt, as a system for power feedback (regeneration) by each of the power factor correction circuits 20 to 23, either the magnetic coupling system or the electrostatic coupling system, in both systems, primary side series resonance current flowing through the primary side series resonance circuit is regenerated as power and fed back to the smoothing capacitor Ci. This signifies that, for formation of a feedback path, the rectification current path of the ac input voltage VAC and the primary side series resonance circuit to which the switching output is supplied are connected to each other. Therefore, electric current of the ac cycle is superposed on the primary side series resonance current flowing through the primary winding N1 of the insulating converter transformer PIT.

Consequently, the ripple voltage of the commercial power supply cycle of the secondary side dc output voltage E01 or E02 increases from that prior to the power factor correction. For example, in circuit configurations wherein the circuits shown in FIGS. 25 and 26 do not include the circuit portions of the power factor correction circuits 20 and 21, respectively, the power factor PF is PF = approximately 0.55 whereas, where the circuits shown in FIGS. 27 and 28 do not include the circuit portions of the power factor correction circuits 22 and 23, respectively, the power factor PF is PF = approximately 0.54. However, where the configurations of FIGS. 25 to 28 are used so that the power factor PF = approximately 0.8 is obtained, then the ripple voltage increases to 5 to 6 times.

As a countermeasure against this, the electrostatic capacity of the smoothing capacitors C01 and C02 for dc output voltage smoothing must be increased. Since the smoothing capacitors have a high withstanding voltage, increase of the electrostatic capacity causes increase of the scale of the smoothing capacitor.

Thus, if the choke input system is adopted in such a manner as described hereinabove with reference to FIGS. 29 and 30 to correct the power factor, then the problem of the ripple is eliminated. However, also the configuration which adopts the choke input system has the following problems.

First, the configuration has a problem that, since the power choke coil PCH required by the choke input system involves iron loss and copper loss and exhibits higher power loss and besides lowers the dc input voltage, the ac to dc power conversion efficiency AC DC drops.

According to the characteristic illustrated in FIG. 31, at the maximum load power Po = 125 W, the power factor PF is PF = 0.76. The ac to dc power conversion efficiency AC DC exhibits a drop by 1.6% where the power choke coil PCH is inserted when compared with that where the power choke coil PCH is not inserted (broken line). With the decrease, the ac input power increases by 2.5 W. Further, the rectification smoothed voltage Ei exhibits a drop by 15.7 V when compared with that where the power choke coil PCH is not inserted.

Meanwhile, according to the characteristic illustrated in FIG. 32, at the load power Po = 150 W, the power factor PF is PF = 0.76. The ac to dc power conversion efficiency AC DC exhibits a drop by 0.9% where the power choke coil PCH is inserted when compared with that where the power choke coil PCH is not inserted (broken line). With the decrease, the ac input power increases by 1.4 W. Further, the rectification smoothed voltage Ei exhibits a drop by 25.0 V when compared with that where the power choke coil PCH is not inserted.

The drops of the ac to dc power conversion efficiency ACDC and the increases of the ac input power illustrated in FIGS. 31 and 32 are caused principally by power loss by the power choke coil PCH itself and, for example, a drop of the dc input voltage Ei by the resistance component of the power choke coil PCH.

It is to be noted that the characteristics illustrated in FDIG. 31 and 32 were obtained by measurement while the inductance Lc of the power choke coil PCH was set to 10 mH and 7.2 mH as described hereinabove, respectively.

Further, the power choke coil PCH increases in scale and increases in weight, size and cost as the load power increases.

Furthermore, the location of the power choke coil PCH must be selected so that there is no influence of leakage fluxes. Alternatively, a countermeasure for preventing an influence of leakage fluxes is required. This causes such problems as increase in difficulty in arrangement design on a circuit board and increase in circuit board size and weight because of the necessity for a shield member.

In other words, in the existing circumstances, the power factor correction technique is in a situation that increase of ripples matters with the power regeneration system while drop of the power conversion efficiency matters with the choke input system. From this, it is demanded to provide a configuration for power factor correction which eliminates the problem of increase of ripples and achieve a high power conversion efficiency.

### SUMMARY OF THE INVENTION

It is an object of the present invention to provide a switching power supply circuit which minimizes ripples and achieves a high power conversion efficiency.

According to an aspect of the present invention, there is provided a switching power supply circuit including:
a rectification smoothing section for receiving an ac input voltage as an input thereto to produce a rectification voltage, the rectification smoothing section including a smoothing capacitor for smoothing the rectification voltage to produce a dc input voltage;
a switching section including a switching element for receiving the dc input voltage from the smoothing capacitor as an input thereto to perform switching operation;
a switching driving section for driving the switching element to perform the switching operation;
an insulating converter transformer including a primary winding to which a switching output obtained by the switching operation of the switching section is supplied and a secondary winding in which an alternating voltage is to be excited in response to the switching output to the primary winding;
a primary side series resonance circuit formed from a leakage inductance component of the primary winding of the insulating converter transformer and capacitance of a primary side series resonance capacitor connected in series to the primary winding for making the operation of the switching section as operation of the current resonance type;
a secondary side dc output voltage production section for receiving the alternating voltage excited in the secondary winding of the insulating converter transformer as an input thereto to perform rectification operation to produce a secondary side dc output voltage;
a fixed voltage control section for controlling the switching driving section in response to a level of the secondary side dc output voltage to vary the switching frequency of the switching section thereby to perform fixed voltage control for the secondary side dc output voltage; and
a power factor correction section for regenerating and feeding back the primary side resonance current obtained at the primary side series resonance circuit by the switching operation of the switching section as electric power to the smoothing capacitor, the power factor correction section including a power factor correcting switching element for switching the rectification current obtained by the rectification operation of the rectification smoothing section in response to the electric power fed back to the smoothing capacitor to connect or disconnect the rectification current;
the insulating converter transformer having a magnetic flux density set so as to allow the secondary side rectification current to exhibit a continuous mode irrespective of any variation of the secondary side dc output voltage.

Thus, with the switching power supply circuit, while it has the configuration for power factor correction according to the power regeneration system, since the ripple voltage of the secondary side dc output voltage is suppressed, for example, the capacitance of a secondary side smoothing capacitor for producing the secondary side dc output voltage can be restricted within a range for practical use. In other words, it can be realized and promoted more readily than ever to put a power supply circuit having a power factor correcting configuration according to the power regeneration system into practical use.

Consequently, the necessity to adopt a choke input system as an alternative power factor correcting technique is eliminated. This signifies that a power supply circuit having a power factor correcting function achieves significant enhancement of the power conversion efficiency and significant reduction in size and weight of a circuit board for a power supply circuit.

The above and other objects, features and advantages of the present invention will become apparent from the following description and the appended claims, taken in conjunction with the accompanying drawings in which like parts or elements denoted by like reference symbols.

### BRIEF DESCRIPTION OF THE DRAWINGS

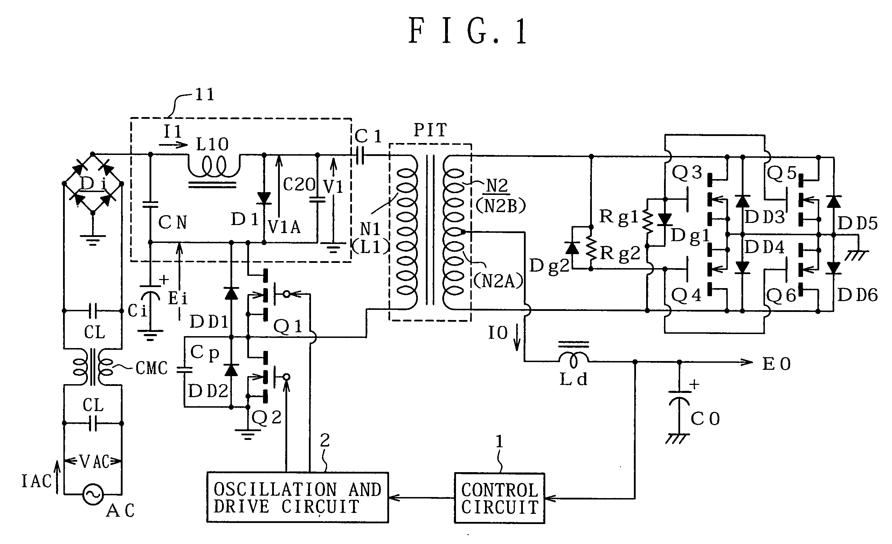

FIG. 1 is a circuit diagram showing an example of a configuration of a switching power supply circuit according to a first embodiment of the present invention;

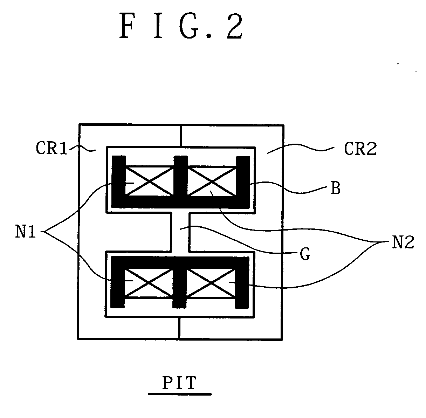

FIG. 2 is a schematic view showing an example of a structure of an insulating converter transformer provided in the switching power supply circuit of FIG. 1;

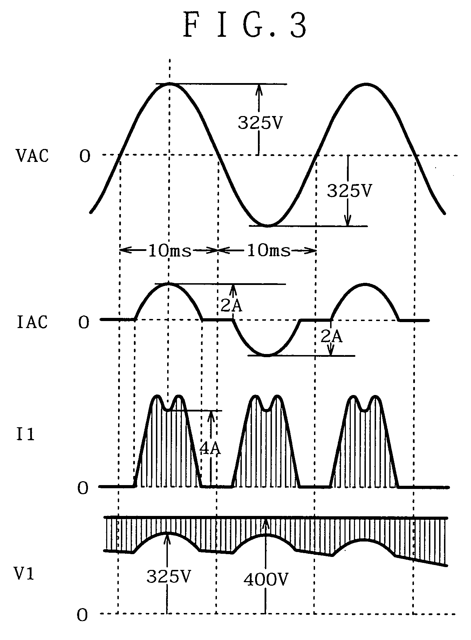

FIG. 3 is a waveform diagram illustrating operation of several elements relating to power factor correcting operation of the switching power supply circuit of FIG. 1;

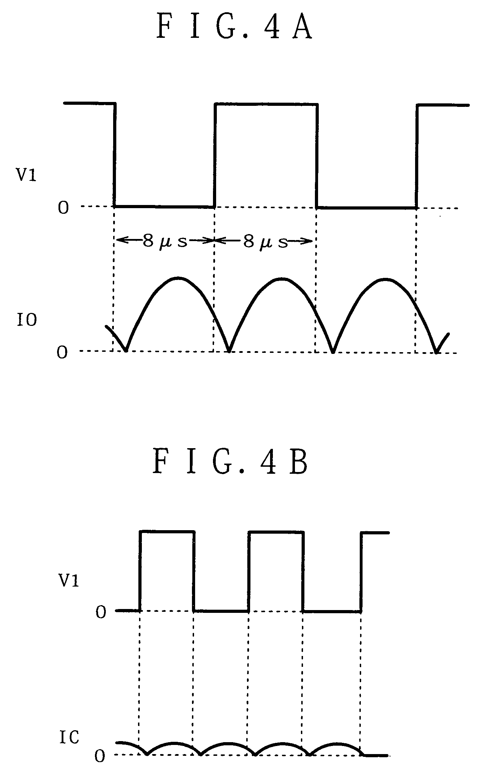

FIGS. 4A and 4B are waveform diagrams illustrating rectification operation of a secondary side full-wave rectification circuit of the switching power supply circuit of FIG. 1 each when the load is high and low;

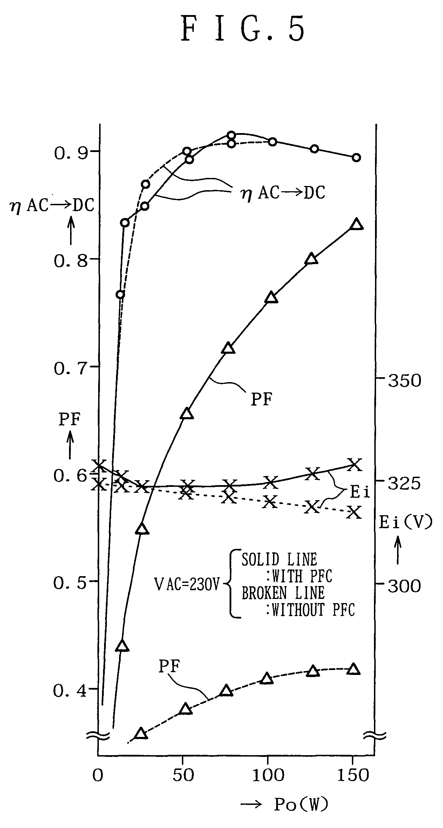

FIG. 5 is a diagram illustrating characteristics of the switching power supply circuit of FIG. 1 with regard to the ac to dc power conversion efficiency, power factor and rectification smoothed voltage (dc input voltage) with respect to a load variation;

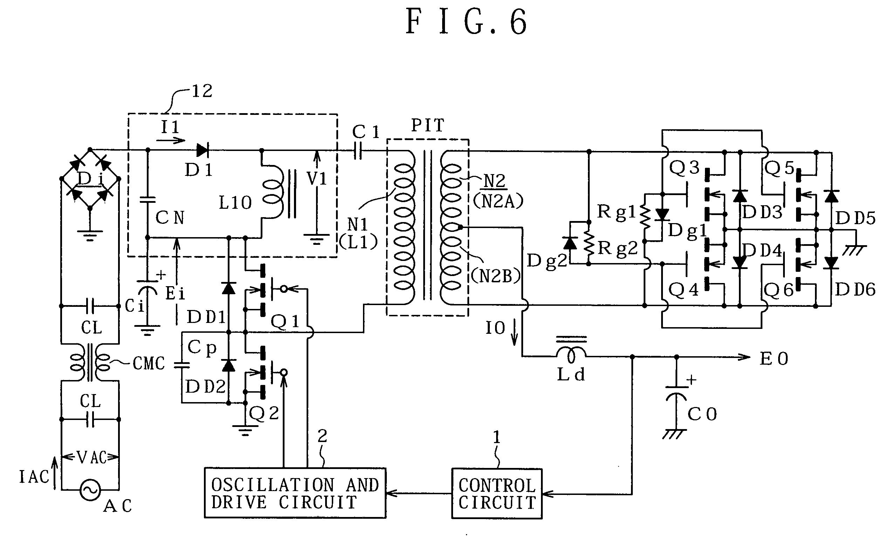

FIG. 6 is a circuit diagram showing an example of a configuration of a switching power supply circuit according to a second embodiment of the present invention;

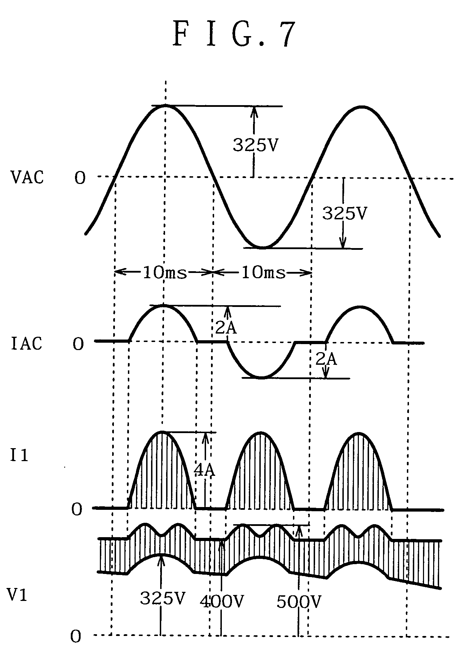

FIG. 7 is a waveform diagram illustrating operation of several elements relating to power factor correcting operation of the switching power supply circuit of FIG. 6;

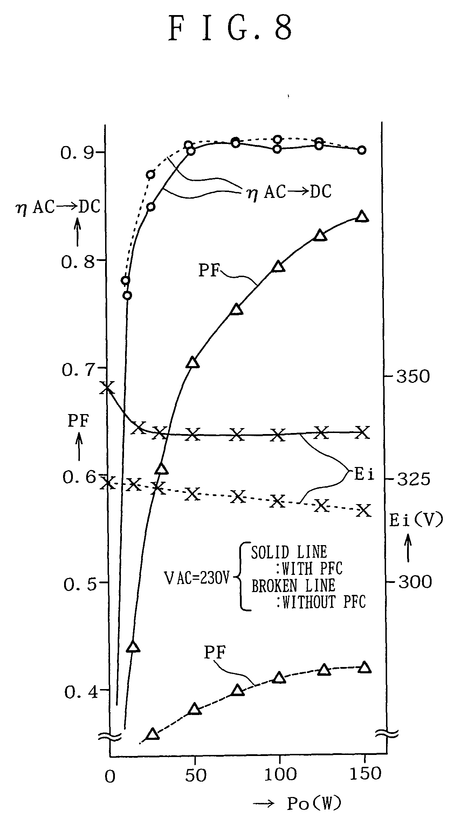

FIG. 8 is a diagram illustrating characteristics of the switching power supply circuit of FIG. 6 with regard to the ac to dc power conversion efficiency, power factor and rectification smoothed voltage (dc input voltage) with respect to a load variation;

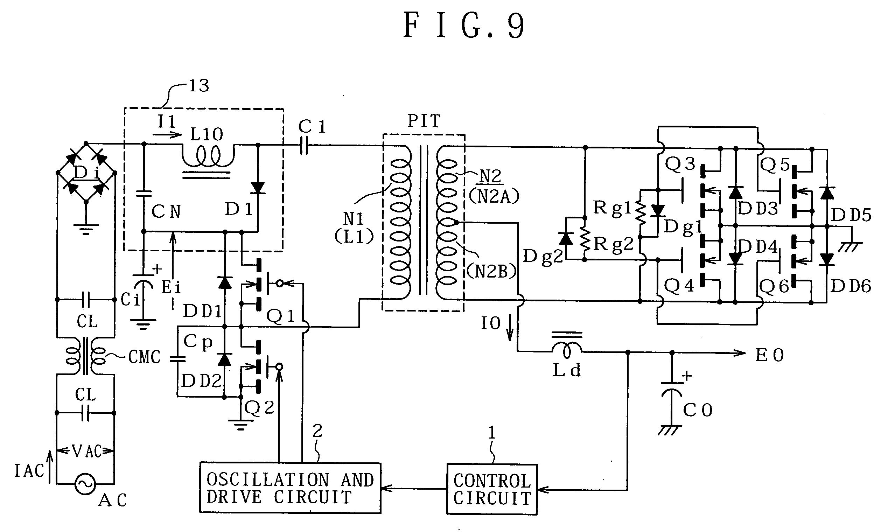

FIG. 9 is a circuit diagram showing an example of a configuration of a switching power supply circuit according to a third embodiment of the present invention;

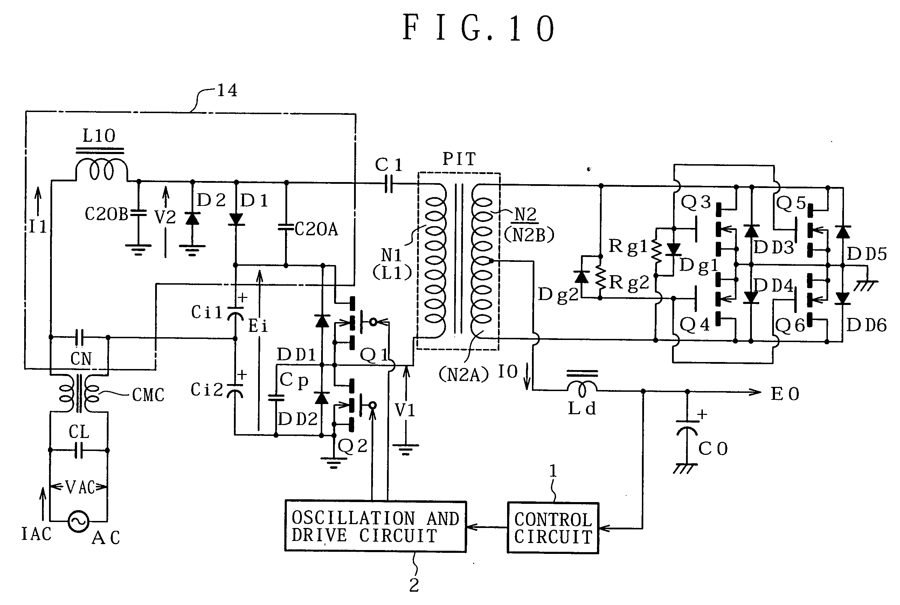

FIG. 10 is a circuit diagram showing an example of a configuration of a switching power supply circuit according to a fourth embodiment of the present invention;

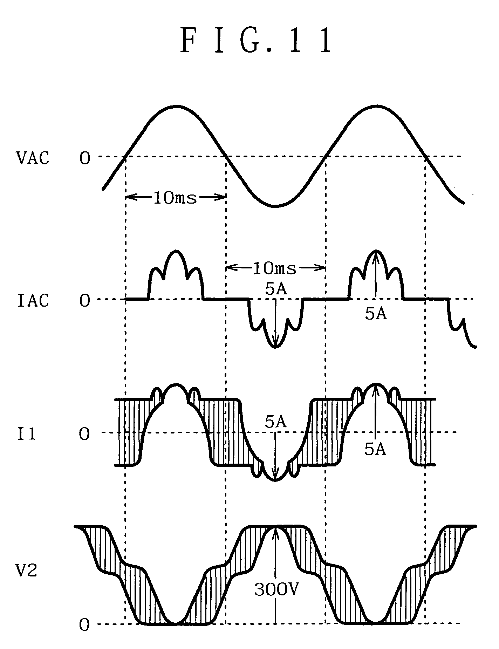

FIG. 11 is a waveform diagram illustrating operation of several elements relating to power factor correcting operation of the switching power supply circuit of FIG. 10;

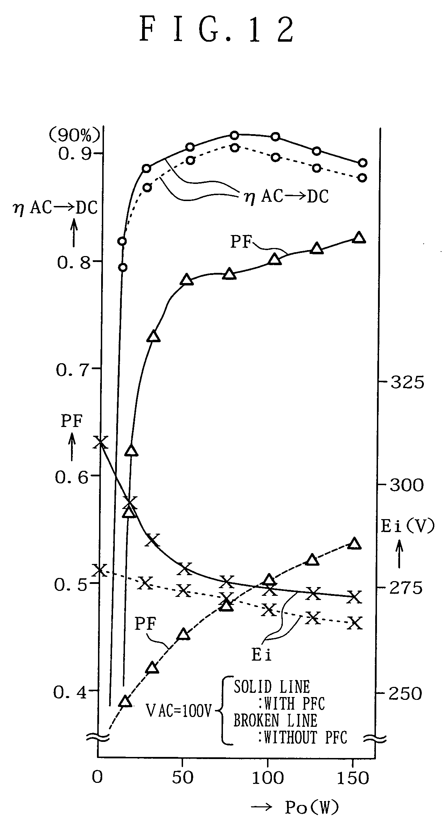

FIG. 12 is a diagram illustrating characteristics of the switching power supply circuit of FIG. 10 with regard to the ac to dc power conversion efficiency, power factor and rectification smoothed voltage (dc input voltage) with respect to a load variation;

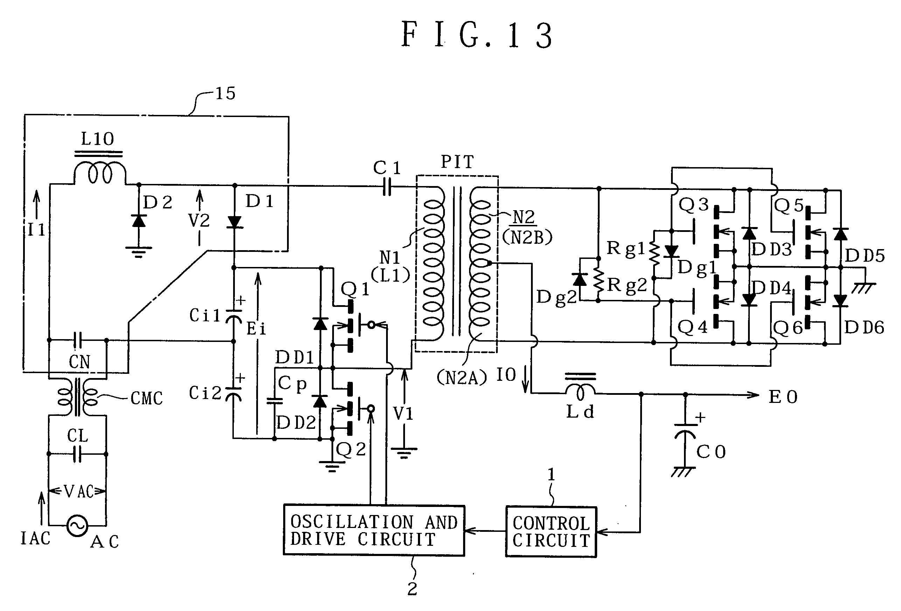

FIG. 13 is a circuit diagram showing an example of a configuration of a switching power supply circuit according to a fifth embodiment of the present invention;

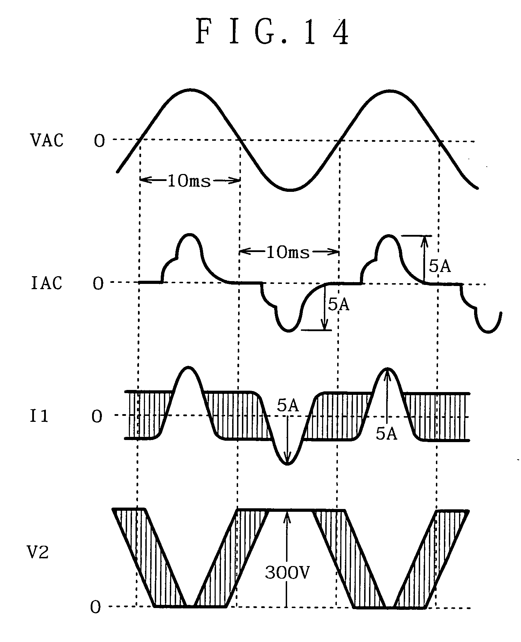

FIG. 14 is a waveform diagram illustrating operation of several elements relating to power factor correcting operation of the switching power supply circuit of FIG. 13;

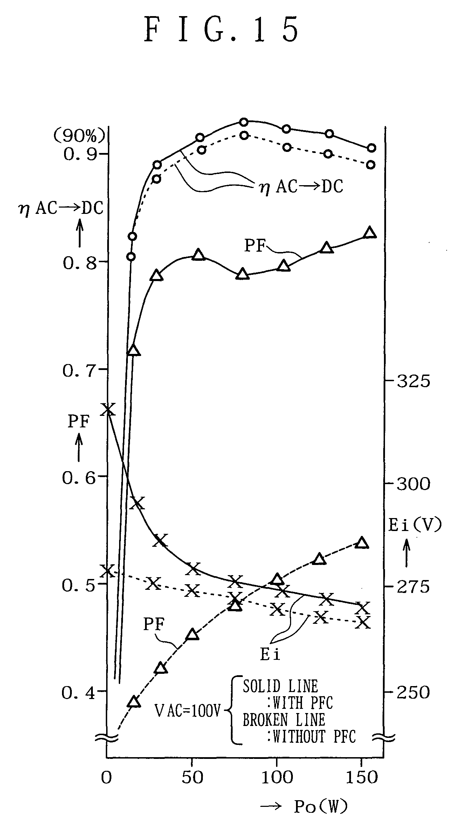

FIG. 15 is a diagram illustrating characteristics of the switching power supply circuit of FIG. 13 with regard to the ac to dc power conversion efficiency, power factor and rectification smoothed voltage (dc input voltage) with respect to a load variation;

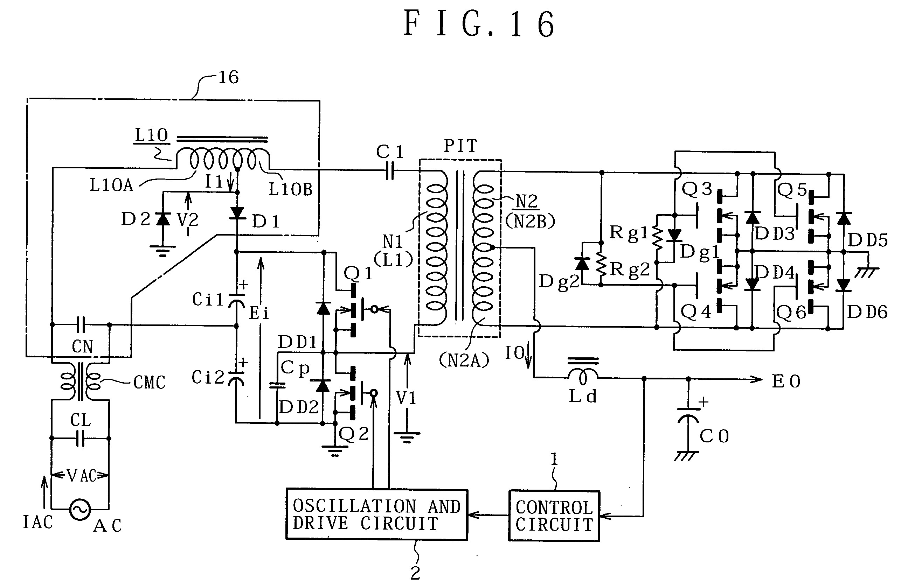

FIG. 16 is a circuit diagram showing an example of a configuration of a switching power supply circuit according to a sixth embodiment of the present invention;

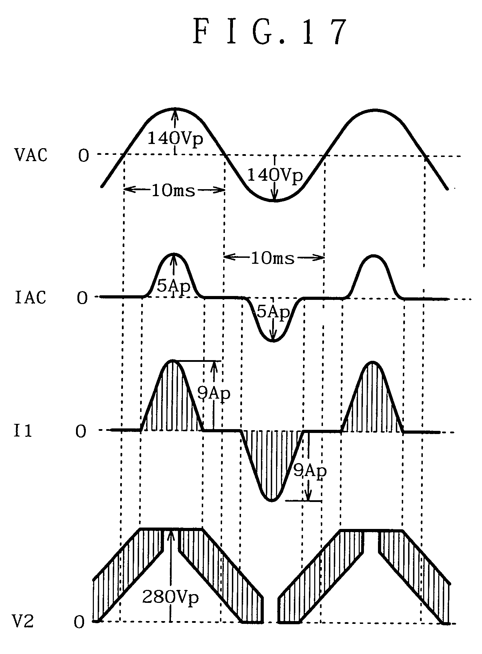

FIG. 17 is a waveform diagram illustrating operation of several elements relating to power factor correcting operation of the switching power supply circuit of FIG. 16;

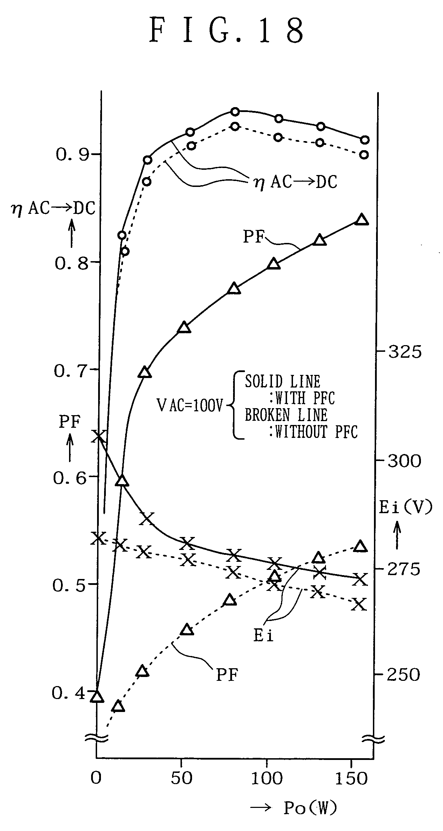

FIG. 18 is a diagram illustrating characteristics of the switching power supply circuit of FIG. 16 with regard to the ac to dc power conversion efficiency, power factor and rectification smoothed voltage (dc input voltage) with respect to a load variation;

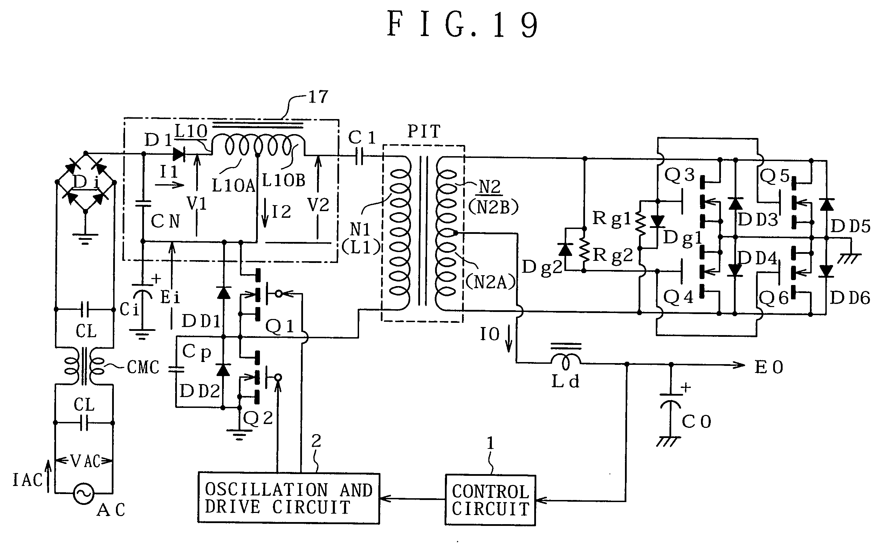

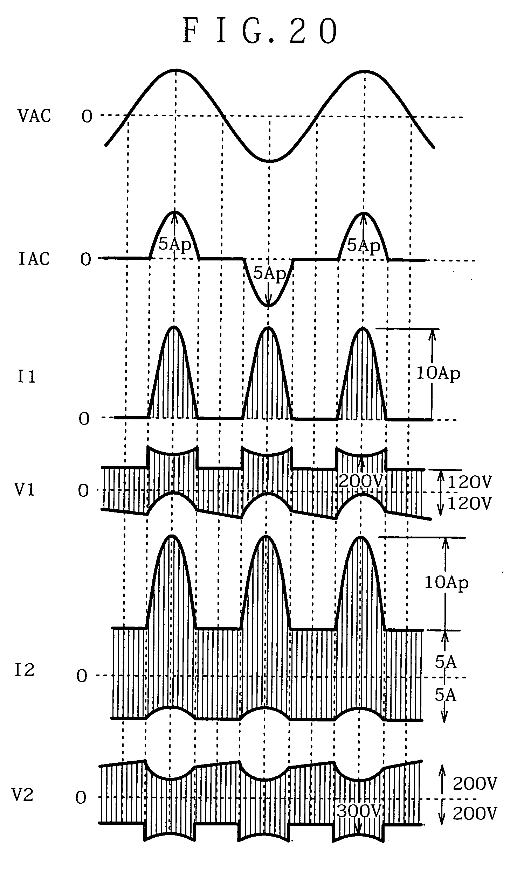

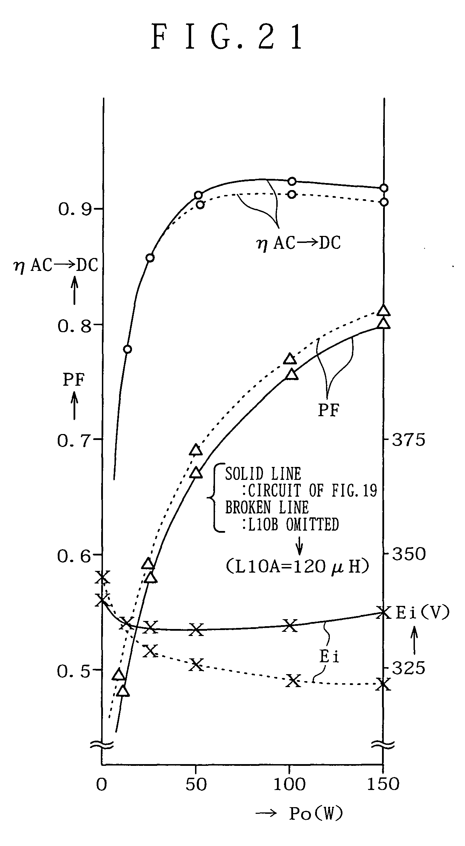

FIG. 19 is a circuit diagram showing an example of a configuration of a switching power supply circuit according to a seventh embodiment of the present invention;
FIG. 20 is a waveform diagram illustrating operation of several elements relating to power factor correcting operation of the switching power supply circuit of FIG. 19;
FIG. 21 is a diagram illustrating characteristics of the switching power supply circuit of FIG. 19 with regard to the ac to dc power conversion efficiency, power factor and rectification smoothed voltage (dc input voltage) with respect to a load variation;

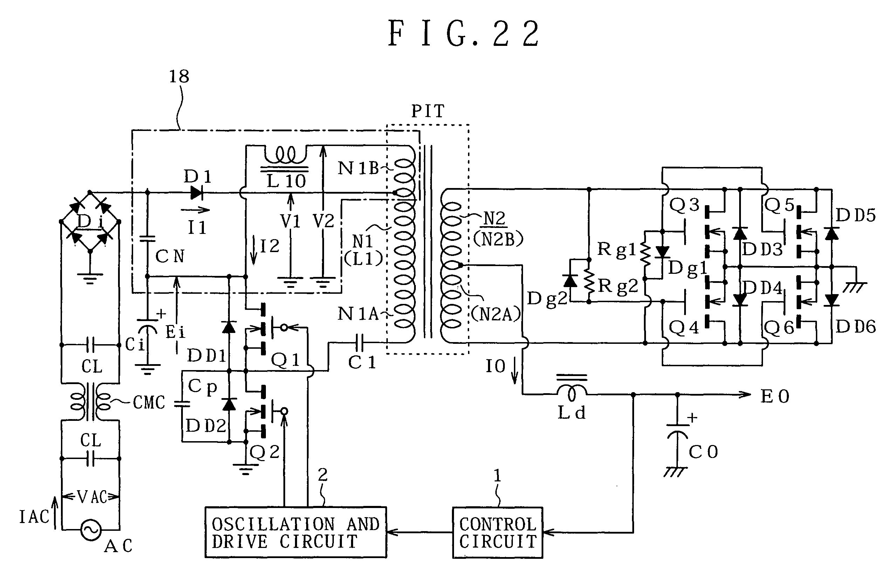

FIG. 22 is a circuit diagram showing an example of a configuration of a switching power supply circuit according to an eighth embodiment of the present invention;

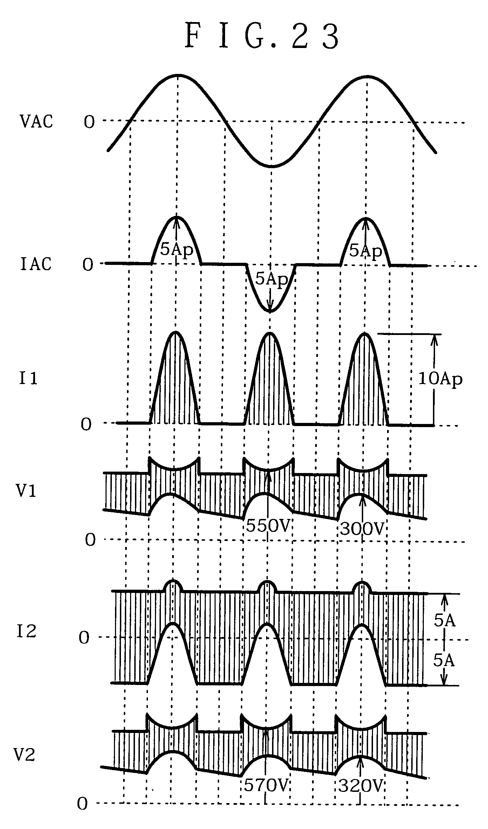

FIG. 23 is a waveform diagram illustrating operation of several elements relating to power factor correcting operation of the switching power supply circuit of FIG. 22;

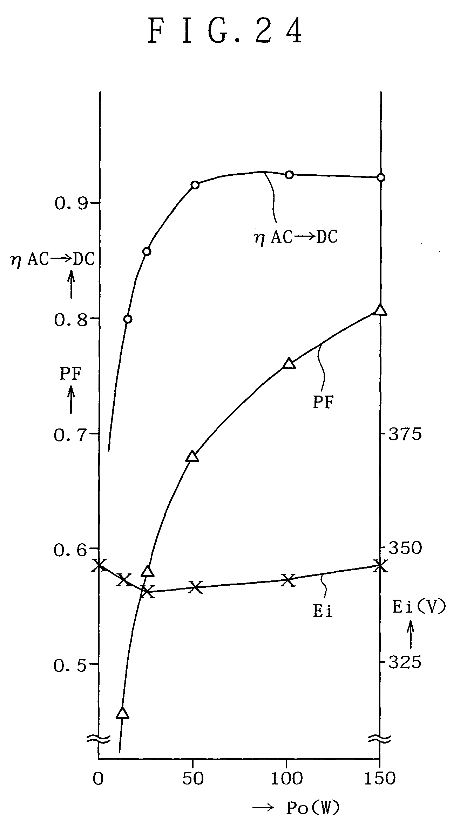

FIG. 24 is a diagram illustrating characteristics of the switching power supply circuit of FIG. 22 with regard to the ac to dc power conversion efficiency, power factor and rectification smoothed voltage (dc input voltage) with respect to a load variation;
FIGS. 25 to 28 are circuit diagrams showing an example of a configuration of different conventional switching power supply circuits;
FIGS. 29 and 30 are circuit diagrams showing an example of a configuration of conventional switching power supply circuits which adopt a choke input system as a power factor correcting technique; and
FIGS. 31 and 32 are diagrams illustrating characteristics of the switching power supply circuits of FIGS. 29 and 30, respectively, with regard to the ac to dc power conversion efficiency, power factor and rectification smoothed voltage (dc input voltage) with respect to a load variation.

### DETAILED DESCRIPTION OF THE PREFERRED EMBODIMENTS

FIG. 1 shows an example of a configuration of a switching power supply circuit according to a first preferred embodiment of the present invention. The power supply circuit has, as a basic configuration of the primary side thereof, a configuration which includes a combination of a partial voltage resonance circuit with a separately excited current resonance type converter according to the half bridge coupling system.

Referring to FIG. 1, the power supply circuit shown includes a noise filter formed from two filter capacitors CL and a common mode choke coil CMC for a commercial ac power supply AC line.

Further, a full-wave rectification smoothing circuit is formed from a bridge rectification circuit Di and a smoothing capacitor Ci and connected to the commercial ac power supply AC line at the following stage to the noise filter. It is to be noted, however, that, in the present embodiment, a power factor correction circuit 11 is interposed between a positive electrode output line of the bridge rectification circuit Di and the positive terminal of the smoothing capacitor Ci. A configuration and operation of the power factor correction circuit 11 are hereinafter described.

As the full-wave rectification smoothing circuit receives an ac input voltage VAC from the commercial ac power supply AC and performs full-wave rectification operation of the ac input voltage VAC, a rectification smoothed voltage Ei (dc input voltage) is obtained across the smoothing capacitor Ci. The rectification smoothed voltage Ei in this instance has a level equal to the ac input voltage VAC. Further, in this instance, a low speed recovery type rectification diode is selectively used for four rectification diodes which form the bridge rectification circuit Di.

A current resonance type converter which receives the dc input voltage described above to perform switching (connection/disconnection) operation includes a switching circuit formed from two switching elements Q1 and Q2 each in the form of a MOS-FET connected in a half bridge connection as seen in FIG. 1. Damper diodes DD1 and DD2 are connected in parallel between the drain and the source of the switching elements Q1 and Q2, respectively. The anode and the cathode of the damper diode DD1 are connected to the source and the drain of the switching element Q1, respectively. Similarly, the anode and the cathode of the damper diode DD2 are connected to the source and the drain of the switching element Q2, respectively. The damper diodes DD1 and DD2 are used as body diodes provided for the switching elements Q1 and Q2, respectively.

A partial resonance capacitor Cp is connected in parallel between the drain and the source of the switching element Q2. A capacitance of the partial resonance capacitor Cp and a leakage inductance L1 of a primary winding N1 form a parallel resonance circuit (partial voltage resonance circuit) which exhibits partial voltage resonance operation wherein it voltage-resonances only when the switching element Q1 or Q2 is turned off.

In the power supply circuit, an oscillation and drive circuit 2 is provided to switching-drive the switching elements Q1 and Q2. The oscillation and drive circuit 2 has an oscillation circuit and a drive circuit and may be formed, for example, from an IC for universal use. The oscillation circuit and the drive circuit in the oscillation and drive circuit 2 apply a drive signal (gate voltage) of a required frequency to the gates of the switching elements Q1 and Q2. Consequently, the switching elements Q1 and Q2 perform switching operation such that they are turned on/off alternately with a required switching frequency.

An insulating converter transformer PIT is provided to transmit a switching output of the switching elements Q1 and Q2 to the secondary side.

The primary winding N1 of the insulating converter transformer PIT is connected at an end portion thereof to a node of a high frequency inductor L10 of the power factor correction circuit 11, the anode of a switching diode D1 of the high speed type (high speed recovery type) and a capacitor C20 through a series connection of a primary side series resonance capacitor C1. The primary winding N1 is connected at the opposite end portion thereof to a node (switching output point) of the source of the switching element Q1 and the drain of the switching element Q2 so that the switching output of them may be transmitted thereto.

The insulating converter transformer PIT has such a structure as hereinafter described such that the required leakage inductance L1 may be provided to the primary winding N1 of the insulating converter transformer PIT. The capacitance of the primary side series resonance capacitor C1 and the leakage inductance L1 form a primary side series resonance circuit. According to the connection scheme described above, the switching output of the switching elements Q1 and Q2 is transmitted to the primary side series resonance circuit. The primary side series resonance circuit makes operation of the primary side switching converter as operation of the current resonance type by performing resonance operation using the switching output transmitted thereto.

According to the description above, the primary side switching converter shown in FIG. 1 achieves both of current resonance operation by the primary side series resonance circuit (L1 - C1) and partial voltage resonance operation by the partial voltage resonance circuit (Cp//L1) described hereinabove.

In other words, the power supply circuit shown in FIG. 1 adopts a configuration as a composite resonance converter which includes a combination of a resonance circuit for making the primary side switching converter as operation of the resonance type with another resonance circuit.

In the secondary winding of the insulating converter transformer PIT, an alternating voltage corresponding to the switching output transmitted to the primary winding N1 is excited. The secondary winding N2 in this instance is divided at a center tap provided therefor so that two divisional secondary windings N2A and N2B are provided. The secondary windings N2A and N2B in this instance have an equal turn number.

A synchronous rectification circuit for full-wave rectification is provided for the secondary windings N2A and N2B and includes N-channel MOS-FETs Q3, Q4, Q5 and Q6 provided as seen in FIG. 1.

For the MOS-FETs Q3 to Q6, for example, a MOS-FET of the trench structure having a low voltage withstanding property is selectively used so that low on-resistance may be obtained.

The center tap output of the secondary winding N2 of the insulating converter transformer PIT is connected to the positive terminal of a smoothing capacitor Co through a series connection of an inductor Ld as seen in FIG. 1.

The secondary winding N2 is connected at an end portion thereof (end portion on the secondary winding N2B side) to a node of the drain of a MOS-FET Q3 and the drain of a MOS-FET Q5. A node of the sources of the MOS-FETs Q3 and Q5 is connected to the secondary side ground.

Similarly, the secondary winding N2 is connected at the other end portion thereof (end portion on the secondary winding N2A side) to a node of the drain of a MOS-FET Q4 and the drain of a MOS-FET Q6. A node of the sources of the MOS-FETs Q4 and Q6 is connected to the secondary side ground.

It is to be noted that body diodes DD3, DD4, DD5 and DD6 are connected in parallel between the drain and the source of the MOS-FETs Q3, Q4, Q5 and Q6, respectively.

According to such a connection scheme as described above, in a rectification current path including the secondary winding N2B, the parallel connection circuit of the MOS-FETs Q3 and Q5 which are rectification elements is inserted in series. In another rectification current path including the secondary winding N2A, the parallel connection circuit of the MOS-FETs Q4 and Q6 which are rectification elements is connected in series similarly.

In the synchronous rectification circuit shown in FIG. 1, a drive circuit for driving the MOS-FET Q3 and the MOS-FET Q5 includes a gate resistor Rg1 connected between the end portion of the secondary winding N2A remote from the center tap and the gates of the MOS-FETs Q3 and Q5.

Similarly, a drive circuit for driving the MOS-FET Q4 and the MOS-FET Q6 includes a gate resistor Rg2 connected between the end portion of the secondary winding N2B remote from the center tap and the gates of the MOS-FETs Q4 and Q6.

In short, in this instance, the MOS-FETs Q3 and Q5 are turned on/off (rendered conducting/non-conducting) at the same timing when the alternating voltage excited in the secondary winding N2A is detected by the gate resistor Rg1. Also the MOS-FETs Q4 and Q6 are turned on/off (rendered conducting/non-conducting) at the same timing when the alternating voltage excited in the secondary winding N2B is detected by the gate resistor Rg2.

Further, that the set of MOS-FETs Q3 and Q5 is turned on/off in response to the voltage at the end portion of the secondary winding N2A remote from the center tap and the set of MOS-FETs Q4 and Q6 is turned on/off in response to the voltage at the end portion of the secondary winding N2B remote from the center tap signifies that the sets of MOS-FETs are turned on/off in response to the alternating voltages of the opposite polarities to each other. In short, the set of MOS-FETs Q3 and Q5 and the set of MOS-FETs Q4 and Q6 perform rectification operation (switching operation) such that they are turned on/off alternately in response to timings at which the alternating voltage excited in the secondary winding N2 reverses.

Here, if an on voltage is applied to the gate of a MOS-FET, then since the drain-source of the MOS-FET becomes equivalent to a mere resistor, electric current can flow bidirectionally. If it is tried to cause the MOS-FET to operate as a rectification element on the secondary side, then electric current must flow only in a direction in which electric current is supplied to the positive terminal of the secondary side smoothing capacitor (smoothing capacitors Co1 to Co4). This is because, if electric current flows in the reverse direction, then discharge current flows from the secondary side smoothing capacitor to the insulating converter transformer PIT side, and consequently the power cannot be transmitted effectively to the load side. Further, heat generation from the MOS-FET and noise generation are caused by the reverse current, which gives rise to switching loss on the secondary side.

The drive circuits described above are circuits for switching driving the MOS-FETs Q3 to Q6 so that electric current may flow only in a direction in which current is charged to the positive terminal of the secondary side smoothing capacity (that is, in the present case, in the source to drain direction) based on detection of the voltage of the secondary winding. In short, the synchronous rectification circuit in this instance has a circuit configuration for on/off driving the MOS-FETs in synchronism with rectification current in accordance with the winding voltage detection system.

It is to be noted that, in this instance, a Schottky diode Dg1 and another Schottky diode Dg2 are inserted in such directions as seen in FIG. 1 in parallel to the gate resistor Rg1 which forms the driving circuit system for the set of MOS-FETs Q3 and Q5 and the gate resistor Rg2 which forms the driving circuit system for the set of MOS-FETs Q4 and Q6, respectively. Where the Schottky diodes Dg1 and Dg2 are inserted in this manner, paths for discharging accumulated charge in the gate input capacitance of the MOS-FETs Q3, Q4, Q5 and Q6 through the Schottky diodes Dg1 and Dg2 upon turning off of the MOS-FETs Q3, Q4, Q5 and Q6 are formed. Thus, the MOS-FETs Q3 to Q6 are turned off with certainty to obtain a good switching characteristic.

As described hereinabove, in the power supply circuit shown in FIG. 1, the inductor Ld is inserted in series between the center tap of the secondary winding N2 and the secondary side smoothing capacitor. In particular, the inductor Ld is inserted in a line of the secondary side rectification current path along which rectification current flows commonly within both of periods within which the secondary side alternating voltage exhibits positive and negative values.

Where the inductor Ld is inserted in this manner, noise which may otherwise be generated on the secondary side dc output voltage Eo can be suppressed.

Where a synchronous rectification circuit formed from MOS-FETs is provided as a rectification circuit on the secondary side, high frequency noise is liable to overlap with the secondary side dc output voltage Eo due to an influence of switching noise and so forth originating from the MOS-FETs. Therefore, the inductor Ld is inserted in the rectification current path as described above so that high frequency noise components may be smoothed by the impedance component of the inductor Ld thereby to suppress such high frequency noise components.

Further, according to the inductor Ld inserted in the rectification current path in this manner, also an action of suppressing occurrence of reverse current which may otherwise appear on the secondary side rectification current is obtained.

According to the synchronous rectification circuit having the circuit configuration described above, operation of charging rectification current obtained by full-wave rectification into the secondary side smoothing capacitor is obtained.

In particular, within one of two half cycles of the alternating voltage excited on the secondary side, electric current flowing from the secondary winding N2B flows in the source to drain direction through the parallel connection circuit of the MOS-FETs Q3 and Q5 and charges the smoothing capacitor Co. On the other hand, within the other half cycle of the alternating voltage, electric current flowing from the secondary winding N2A flows in the source to drain direction through the parallel connection circuit of the MOS-FETs Q3 and Q5 and charges the smoothing capacitor Co. Consequently, full-wave rectification operation wherein the smoothing capacitor Co is charged within both of the periods within which the alternating voltage is positive and negative is obtained.

Thus, such a secondary side dc output voltage Eo as seen in FIG. 1 is obtained as the voltage across the smoothing capacitor. The secondary side dc output voltage Eo is supplied to the load side not shown and is branched and inputted also as a detection voltage for the control circuit 1 described below.

It is to be noted that the MOS-FETs which serve as rectification elements in the synchronous rectification circuit in the present embodiment are connected in parallel in such a manner as described above from the following reason.

The power supply circuit of the present embodiment is configured so as to cope actually with such a load condition that the load current varies within a range from 30 A to 0 A with respect to the secondary side dc output voltage Eo = 5 V. This load condition is a low voltage/high current condition substantially with a considerably wide range of variation. Accordingly, where the load is heavy, considerably high current flows also in the secondary side rectification circuit. Therefore, a plurality of MOS-FETs as rectification elements are connected in parallel so that the burden on each element when high current flows therein is reduced to assure a high degree of reliability.

The control circuit 1 supplies a detection output in response to a level variation of the secondary side dc output voltage Eo to the oscillation and drive circuit 2. The oscillation and drive circuit 2 drives the switching elements Q1 and Q2 while varying the switching frequency in response to the detection output of the control circuit 1 inputted thereto. As the switching frequency of the switching elements Q1 and Q2 varies, the resonance impedance of the primary side series resonance circuit varies and also the electric energy transmitted from the primary winding N1 to the secondary winding N2 (N2A and N2B) side of the insulating converter transformer PIT varies so that the level of the secondary side dc output voltage Eo is stabilized.

For example, when the load is inclined to become heavy and the secondary side dc output voltage Eo drops, the control circuit 1 controls the switching frequency so as to decrease. The decrease of the switching frequency decreases the resonance impedance and hence raises the secondary side dc output voltage Eo. On the other hand, when the load is inclined to become light and the secondary side dc output voltage Eo rises, the control circuit 1 controls so as to raise the switching frequency to increase the resonance impedance thereby to lower the secondary side dc output voltage Eo.

Now, a configuration of the power factor correction circuit 11 is described.

As described hereinabove, the power factor correction circuit 11 is inserted in the rectification current path of the rectification smoothing circuit for obtaining a dc input voltage (Ei) from the ac input voltage VAC and has a configuration of a power factor correction circuit according to the electrostatic coupling system as a power regeneration system.

In the power factor correction circuit 11, the high frequency inductor L10 is connected at an end thereof to the positive output terminal of the bridge rectification circuit Di. The high frequency inductor L10 is connected at the other end thereof to the anode of the switching diode D1 of the high speed recovery type. The cathode of the switching diode D1 is connected to the positive terminal of the smoothing capacitor Ci. In other words, a series connection circuit of the high frequency inductor L10 and the switching diode D1 (anode to cathode) is interposed between the positive output terminal of the bridge rectification circuit Di and the positive terminal of the smoothing capacitor Ci.

Meanwhile, a filter capacitor CN is connected in parallel to the series connection circuit of the high frequency inductor L10 and the switching diode D1. The filter capacitor CN is provided to suppress normal mode noise.

Further, the power factor correcting series resonance capacitor C20 is connected in parallel to the switching diode D1. In this instance, the power factor correcting series resonance capacitor C20 is connected in series to the high frequency inductor L10. Thus, the capacitance of the power factor correcting series resonance capacitor C20 and the inductance of the high frequency inductor L10 form a series resonance circuit in the power factor correction circuit 11.

As described hereinabove, the primary side series resonance circuit (L1 - C1) is connected to the node of the high frequency inductor L10, the anode of the switching diode D1 and the power factor correcting series resonance capacitor C20.

According to such a circuit configuration of the power factor correction circuit 11 as just described, operation of regenerating the switching output (primary side series resonance current) obtained by the primary side series resonance circuit as electric power and feeding back the electric power to the smoothing capacitor Ci through the parallel connection of the switching diode D1 and the power factor correcting series resonance capacitor C20 is obtained. In this instance, since the capacitance of the power factor correcting series resonance capacitor C20 is interposed between the smoothing capacitor Ci and the primary side series resonance circuit, it can be considered that the electric power regeneration is performed through an electrostatic coupling.

A waveform diagram of FIG. 3 illustrates operation of the power factor correction circuit 11 within an ac cycle.

On the assumption that the ac input voltage VAC of the ac 200 V system which has a frequency of 50 Hz and has a peak voltage of 325 V (Vp) as seen in FIG. 3 is inputted, electric power regeneration from the primary side series resonance circuit to the power factor correction circuit 11 side is performed in such a manner as described above. In response to the regeneration, the voltage V1 between the node of the primary side series resonance capacitor C1 and the power factor correction circuit 11 side and the primary side ground is obtained with a waveform wherein a alternating voltage component (V1A) according to the switching cycle is superposed on the rectification smoothed voltage Ei on which a ripple component of the ac cycle is superposed as seen in FIG. 3.

In this instance, the peak level of the rectification smoothed voltage Ei is 325 V at a point of time when the ripple is in the maximum and corresponds to the peak level of the ac input voltage VAC. Further, the peak level of the voltage V1 wherein the alternating voltage component is superposed on the rectification output voltage is, for example, 400 V fixed as seen in FIG. 3. The switching diode D1 of the high speed recovery type performs, when the alternating voltage component of the voltage V1 is applied thereto, switching operation, for example, when the voltage V1 is higher than 1/2 the positive/negative peak value of the ac input voltage VAC to connect or disconnect the rectification current.

Where the switching diode D1 performs switching operation so as to connect or disconnect the rectification current in this manner, the rectification output current I1 which tents to flow from the high frequency inductor L10 through the parallel connection of the switching diode D1 and the power factor correcting series resonance capacitor C20 to the smoothing capacitor Ci is obtained as electric current of an alternating waveform which exhibits a substantially M-shaped envelope in the proximity of a peak thereof as seen in FIG. 3. In this instance, the level of the rectification output current I1 corresponding to a point of time at which the ac input voltage VAC exhibits a peak is 4 A.

Within a continuity period of the rectification output current I1 which flows with such a waveform as described above, the rectification output current I1 flows also within a period within which the rectification output voltage level outputted from the bridge rectification circuit Di is lower than the voltage across the smoothing capacitor Ci, and also the continuity period of the ac input current IAC shown in FIG. 3 substantially coincides with the continuity period of the rectification output current I1. In other words, the continuity angle of the ac input current IAC is expanded from that where no power factor correction circuit is provided, and the waveform of the ac input current IAC approaches the waveform of the ac input voltage VAC. In short, correction of the power factor is achieved. It is to be noted that the peak level of the ac input current IAC in this instance is 2 A.

Incidentally, in the configuration of the switching converter in such power supply circuits as described hereinabove with reference to FIGS. 25 to 28, the secondary side dc output voltage is stabilized by variable control of the switching frequency of the switching elements on the primary side. Where such a configuration as just described is adopted, for example, when the load is inclined to become light, the switching frequency is controlled so as to be raised to achieve stabilization. In this state, the rectification circuit of the secondary side performs operation of a continuous mode wherein periods within which the secondary side rectification current flows successively appear with no inoperative period interposed therebetween.

On the other hand, if the switching frequency on the primary side is controlled so as to become lower as the load increases and the secondary side dc output voltage drops, then a discontinuous mode wherein the secondary side rectification current does not flow continuously to the secondary side smoothing capacity and an electric current discontinuous period appears is entered. In other words, the full-wave rectification operation of the secondary side involves a state wherein a discontinuous mode is established in response to a load variation.

It is to be noted that the secondary side dc output voltage varies also in response to the ac input voltage VAC and also fixed voltage control operation responsive to the variation is performed, and consequently, the state wherein a discontinuous mode is established appears also in response to the level of the ac input voltage VAC.

It is described hereinabove that, according to the configuration wherein power factor correction is performed using the power regeneration system such as the magnetic coupling system or the electrostatic coupling system as in the power supply circuits shown in FIGS. 25 to 28, since ripples of the ac cycle are superposed on the primary side series resonance current, the ripple voltage of the ac cycle superposed on the secondary side dc output voltage increases significantly from that of the configuration which does not include a power factor correction circuit.

This arises from a principal cause that the secondary side rectification operation is placed into the discontinuous mode, for example, by a load variation or a variation of the ac input voltage VAC as described above. In other words, this signifies that, if measures are taken to maintain the continuous mode as the secondary side rectification operation irrespective of the load variation or the variation of the ac input voltage VAC, then since the cause disappears, increase of the ripple voltage of the ac cycle to be superposed on the secondary side dc output voltage described hereinabove can be suppressed efficiently.

To this end, according to the present embodiment, the power supply circuit shown in FIG. 1 has the following configuration.

FIG. 2 is a sectional view showing an example of a structure of the insulating converter transformer PIT provided in the power supply circuit of FIG. 1.

Referring to FIG. 2, the insulating converter transformer PIT includes an EE type core (EE-shaped core) including E type cores CR1 and CR2 made of a ferrite material and combined such that the magnetic legs thereof are opposed to each other.

The insulating converter transformer PIT further includes a bobbin B made of, for example, a resin material and formed divisionally such that a primary side winding portion and a secondary side winding portion are independent of each other. The primary winding N1 is wound on one of the winding portions of the bobbin B while the secondary winding N2 (N2A, N2B) is wound on the other winding portion. As the bobbin B on which the primary side winding and the secondary side winding are wound in this manner is attached to the EE type core (CR1, CR2), the primary side winding and the secondary side winding are wound in different winding regions from each other on the central magnetic leg of the EE type core. The structure of the entire insulating converter transformer PIT is obtained in this manner. The EE type core in this instance is made of, for example, EER-40 on the assumption that the EE type core in this instance is ready for such a load condition as hereinafter described and a condition of a rated level for the ac input voltage.

A gap G having a gap length L of, for example, approximately 1.4 mm is formed in the central magnetic leg of the EE type core in such a manner as seen in FIG. 2. By the gap G, the coupling coefficient k is set so that a loose coupling state of, for example, k = 0.8 or less is obtained. In short, the insulating converter transformer PIT in the power supply circuit of FIG. 1 has a looser coupling state than the insulating converter transformer PIT of the power supply circuits shown as conventional power supply circuits in FIGS. 25 to 28. It is to be noted that the coupling coefficient was actually set to k = 0.75. The gap G can be formed by forming the central magnetic leg of each of the E type cores CR1, CR2 shorter than the other two outer magnetic legs.

Further, the numbers of turns of the primary winding N1 and the secondary windings N2A and N2B are set so that the induced voltage level per 1 T (turn) of the secondary side winding may be lower than that of the power supply circuits described hereinabove with reference to FIGS. 25 to 28. For example, the numbers of turns of the primary winding N1 and the secondary windings N2A, N2B are set to N1 = 60 T and N2A = N2B = 2 T so that the induced voltage level per 1 T (turn) of the secondary winding may be 2.5 V/T or less.

Where the numbers of turns of the primary winding N1 and the secondary winding (N2A and N2B) of the insulating converter transformer PIT are set in such a manner as described above, the magnetic flux density of the core of the insulating converter transformer PIT decreases and the leakage inductance of the insulating converter transformer PIT increases when compared with those in the power supply circuits described hereinabove with reference to FIGS. 25 to 28. Consequently, the rectification current flowing through the secondary winding has a reduced peak value and hence has an increased continuity angle.

Operation of the circuit shown in FIG. 1 which includes the insulating converter transformer PIT having such a configuration as described above is described with reference to waveform diagrams of FIGS. 4A and 4B.

The waveform diagrams of FIGS. 4A and 4B illustrate the alternating voltage component (V1A) between the primary side ground and the node of the end portion of the parallel connection circuit of the switching diode D1 and the power factor correcting series resonance capacitor C20, the high frequency inductor L10 and the primary side series resonance capacitor C1 in the power factor correction circuit 11. The waveform diagram further illustrates the rectification current Io flowing from the center tap of the secondary winding N2 to the smoothing capacitor Co through the inductor Ld on the secondary side. The line which exhibits the rectification current Io is a line in the secondary side rectification current path along which the rectification current flows within both periods within which the alternating voltage excited in the secondary winding N2 exhibits the positive polarity and the negative polarity.

It is assumed here that the load condition for which the power supply circuit shown in FIG. 1 is to be ready is that the secondary side dc output voltage Eo is Eo = 5 V and the current flowing to the load varies within the range of 30 A to 0 A. In other words, the load condition is that the power supply circuit can operate within a range from a maximum load power (Po = 150 W) to a minimum load power (Po = 0 W). Further, the ac input voltage VAC is assumed to vary within a range from 180 V to 288 V of the ac 200 V system.

As described hereinabove, while the power supply circuit shown in FIG. 1 uses the switching frequency control system for stabilization, it controls the switching frequency so as to become lower as the secondary side dc output voltage Eo drops when a heavy load condition is entered. The waveform diagram of FIG. 4A illustrates the operation when the load condition Po is Po = 150 Wh which substantially is a maximum load power condition. In other words, the switching frequency has a substantially minimum frequency value within the control range. In contrast, 4B illustrates the operation when the load is low. When compared with FIG. 4A, the switching frequency exhibits a higher value.

The voltage V1 shown in FIGS. 4A and 4B has a rectangular waveform. The rectangular wave is obtained from the switching output regenerated from the primary side series resonance circuit and corresponds to the switching (on/off) timings of the switching diode D1. Accordingly, the cycle of the voltage V1 corresponds also to the switching cycle of the switching elements Q1 and Q2. That the period of the voltage V1 corresponds to the switching cycle of the switching elements Q1 and Q2 signifies that the period of the voltage V1 corresponds also to the period of the alternating voltage excited in the secondary winding N2. It is to be noted that, in FIG. 4A, a half cycle is 8 s, and it can be recognized that the minimum switching frequency within the control range is approximately 62.5 KHz.

The rectification current Io on the secondary side has such a waveform that a half wave on the positive polarity side of a sine wave successively appears in response to the cyclic timings of the voltage V1 described hereinabove as seen in FIGS. 4A and 4B. Such a waveform as just described is obtained by repetitions of operation that, for example, within a half cycle of the alternating voltage excited in the secondary winding N2, rectification current rectified by the parallel connection circuit of the MOS-FETs Q3 and Q5 flows with the positive polarity, and then within the next half cycle, rectification current rectified by the parallel connection circuit of the MOS-FETs Q4 and Q6 flows with the positive polarity.

It can be recognized that, in this instance, the rectification current Io flowing in such a manner as described above has no electric current discontinuous period wherein the electric current of the zero level continues within adjacent half waves of the sine wave. In other words, the rectification current Io flows continuously.

In this manner, in the present embodiment, not only when the load is low, but also when the load is heavy or when the switching frequency is controlled so as to be lowered because the secondary side dc output voltage Eo drops in response to a drop of the ac input voltage VAC, the continuous mode is obtained with the secondary side rectification current.

The reason why the continuous mode is obtained even in a heavy load condition or in a low ac input voltage condition in this manner is that, as can be recognized from the foregoing description, the gap length is set so that the coupling coefficient of the insulating converter transformer PIT is lowered to a required value to establish a loose coupling state and the numbers of turns of the primary winding N1 and the secondary windings N2A and N2B are set so that, for example, also the induced voltage level per one turn of the secondary winding is set lower than a predetermined level thereby to lower the magnetic flux density produced in the core of the insulating converter transformer PIT to a value lower than a required value.

That the continuous mode is obtained also in a heavy load condition or in a low ac input voltage condition in this manner signifies that the rectification operation on the secondary side is performed always in the continuous mode irrespective of a variation of the secondary side dc output voltage Eo caused by a load variation, an ac input voltage variation or the like. Consequently, where the power supply circuit has a configuration which includes a power factor correction circuit according to the power regeneration system as in the case of the present embodiment, increase of ripples of the ac cycle to be superposed on the primary side series resonance current is suppressed significantly. As a result, also the level of the ripple voltage of the ac cycle to be superposed on the secondary side dc output voltage drops, and this eliminates the necessity to increase the capacitance of the smoothing capacitor on the secondary side to a level of that of the conventional power supply circuit. In other words, it can be achieved readily to put a switching power supply circuit including a power factor correction circuit according to the power regeneration system into practical use. For example, while, in the power supply circuits shown in FIGS. 25 to 28, the ripple voltage exhibits an increase equal to 5 to 6 times those of the power supply circuits which do not include a power factor correction circuit, that in the present embodiment can be suppressed to approximately twice.

Where adoption of a power factor correction circuit according to the power regeneration system in a switching power supply circuit is put into practical use in this manner, the necessity to insert a power choke coil into a commercial ac power supply line as means for correction of the power factor is eliminated, and this results in solution of the problem of a drop of the power conversion efficiency. Further, since the power choke coil has a considerably large size among power supply circuit parts and besides an influence of leakage fluxes cannot be ignored, also problems of a large size and a heavy weight of a circuit board for a power supply circuit, problems of arrangement design on the circuit board and like problems are eliminated.

As a particular example, where the configuration of, for example, the switching converter shown in FIG. 25 or 26 is modified such that the power choke coil PCH is inserted in place of the power factor correction circuit 20 or 21 (where the power choke coil PCH is inserted in the rectification path of the full-wave resonance circuit (Di, Ci) in such a manner as seen in fig. 29), the weight of the power choke coil PCH is approximately 153 g.

In contrast, in the present embodiment, as a particular example of a part which forms the power factor correction circuit 11, for example, a small size ferrite core of EER-19 is used for the high frequency inductor L10. Further, a capacitor having a voltage resisting property of 200 V can be used for both of the filter capacitor CN and the power factor correcting series resonance capacitor C20. The sum total in weight of the high frequency inductor L10 and the switching diode D1 in this instance is approximately 20 g. In this manner, in the case of the power supply circuit shown in FIG. 1, the components of the power factor correction circuit 11 are all small in size and light in weight, and also the entire power factor correction circuit 11 has a weight much lower than that of the power choke coil PCH described hereinabove.

Further, the ferrite core of EER-19 used for the high frequency inductor L10 described hereinabove provides a closed magnetic path. Accordingly, there is no necessity to perform arrangement design of a circuit board taking an influence of leakage magnetic fluxes as in the case of the power choke coil PCH into consideration, and there is no necessity to apply a magnetic shield or the like either. Also this can promote reduction in size and weight of a power supply circuit board.

While the power supply circuit of the present embodiment includes, as a rectification circuit on the secondary side, the synchronous rectification circuit wherein MOS-FETs having low on resistance are used as a rectification element, this is because it is intended to obtain a low voltage and high current as described above. Thus, the rectification circuit on the secondary side may be any circuit only if it makes the full-wave rectification operation of the secondary side as the continuous mode irrespective of a load variation or a level variation of the ac input voltage VAC, and for example, such a full-wave rectification circuit as shown in FIG. 25 or a bridge rectification circuit may be used instead.

As described hereinabove, in a power supply circuit which adopts a switch frequency control system based on any of the configurations described hereinabove with reference to FIGS. 25 to 28, for example, when the load is inclined to become a heavy load or when the ac input voltage VAC is in a dropping tendency, the discontinuous mode wherein the secondary side rectification current to flow in the full-wave rectification circuit on the secondary side does not flow continuously is entered.

In such a discontinuous mode as just described, the secondary side rectification current flows within a period shorter than a period within which the primary side series resonance current flows. Where the rectification current flows within the shorter period in this manner, the peak level of the rectification current then exhibits a comparatively high level, and this makes the continuity loss of the rectification diodes on the secondary side comparatively high.

In the circuits shown in FIGS. 25 to 28, due to the continuity loss of the rectification diodes caused by such a discontinuous mode as described above, corresponding power loss occurs with the secondary side.

Thus, as one of techniques for reducing the power loss on the secondary side by such continuity loss of rectification diodes as described above, it is known to form the secondary side full-wave rectification circuit as a synchronous rectification circuit which uses a MOS-FET of low on resistance as a rectification element. While a Schottky diode is selectively used, for example, for the secondary side rectification diodes of the power supply circuits shown in FIGS. 25 and 26, for example, a MOS-FET of a trench structure or the like has much lower on resistance. Accordingly, by forming the secondary side rectification circuit as a synchronous rectification circuit, the continuity loss of the rectification elements can be reduced to reduce the power loss of the secondary side.

Such a synchronous rectification circuit is configured such that, for example, a resistance element or the like for detecting the alternating voltage obtained at the secondary winding N2 (secondary windings N2A and N2B) of the insulating converter transformer PIT is provided such that the MOS-FETs as rectification elements are on/off driven with a detection voltage detected by the resistance element or the like. This is called winding voltage detection system.

However, in the discontinuous mode, also after the charging current to the smoothing capacitor reduces to the zero level, primary side series resonance current of the same polarity continues to flow through the primary winding N1 within any discontinuous period. Therefore, also the polarity of the induced voltage of the secondary winding N2 does not exhibit a reversal, and within the period, the MOS-FETs do not enter a fully off state but maintain their on state.

Then, since the MOS-FETs remain in the on state also after the charging current to the smoothing capacitor reduces to the zero level in this manner, the rectification current flows but in the reverse direction within the period, and reactive power is generated by the reverse current.

From this, although a synchronous rectification circuit which adopts the wiring voltage detection system decreases the continuity loss by rectification elements, it is difficult for the synchronous rectification circuit to achieve effective correction of the power conversion efficiency as a whole because of appearance of reactive power by such reverse current as described above.

Thus, as a technique for eliminating such a problem of appearance of reactive power by rectification current in the reverse direction, a synchronous rectification circuit according to the rectification current detection system is known. The rectification current detection system is a technique of turning off a MOS-FET before the rectification current to be charged into the smoothing capacitor Co on the secondary side reduces to the zero level.

As a circuit configuration therefor, for example, electric current (rectification current) flowing through the secondary winding N2 is detected by means of a current transformer or the like. The current detected by the current transformer is outputted as a voltage (detection voltage), and the detection voltage is compared with a predetermined reference voltage by a comparator.

Here, if rectification current begins to flow and charge the smoothing capacitor Co, then the rectification current is detected by the current transformer, and a detection voltage corresponding to the rectification current level is inputted to the comparator. The comparator compares the detection voltage with the reference voltage and outputs an H level if, for example, the detection voltage exceeds the reference voltage. The output of the H level is applied as an on voltage to the gate of a MOS-FET as a rectification element to turn on the MOS-FET. Consequently, the rectification current flows in the source to drain direction of the MOS-FET.

Then, if the level of the rectification current drops as time passes until the detection voltage which is the output of the current transformer becomes lower than the reference voltage, then the comparator reverses the output thereof. The reversed output is outputted through a buffer to cause the gate capacitance of the MOS-FET as a rectification element to discharge thereby to turn off the MOS-FET.

Through such operation as described above, the MOS-FET which is a rectification element is turned off at a timing prior to the timing at which the rectification current decreases to the zero level. Consequently, such a situation that reverse current flows through a MOS-FET within a discontinuous period within which the rectification current does not flow as in a synchronous rectification circuit according to the winding voltage detection system is eliminated, and no reactive power is generated. Therefore, the power conversion efficiency rises as much.

However, the synchronous rectification circuit of the rectification current detection system described above requires at least one current transformer and a comparatively complicated drive circuit for driving MOS-FETs with an output of the current transformer. This gives rise to a disadvantage that the circuit configuration is complicated, which causes drop of the production efficiency, increase of the cost, enlargement of the circuit board size and so forth.

Particularly where a configuration of a switching converter of the current resonance type is used as a basic configuration, for example, as in the power supply circuits shown in FIGS. 25 and 26, it is necessary also for the synchronous rectification circuit to be formed as a full-wave rectification circuit. Accordingly, two such sets of a transformer and a drive circuit system described above are required individually corresponding to two half wave periods, and the problems described above become further serious.

Where a synchronous rectification circuit is adopted on the assumption that the secondary side rectification operation involves the discontinuous mode, the merits of the winding voltage detection system and the rectification current detection system cannot be avoided to have a tradeoff relationship to each other. In particular, although the wiring voltage detection system is disadvantageous in terms of the power conversion efficiency, the circuit configuration is simple. In contrast, although the rectification current detection system is advantageous in terms of the power conversion efficiency because no reactive power is generated, the circuit configuration is complicated. In other words, as far as the condition that the secondary side rectification operation involves the discontinuous mode, for example, if it is tried to adopt a synchronous rectification circuit taking the power conversion efficiency into consideration, then it is obliged to adopt the rectification current detection system. Therefore, the problem that the circuit configuration is complicated cannot be avoided.

However, in the present embodiment, the insulating converter transformer PIT is configured in such a manner as described above to achieve the continuous mode as the full-wave rectification operation of the secondary side irrespective of a load variation, a variation of the ac input voltage and so forth.

While the synchronous rectification circuit provided in the power supply circuit shown in FIG. 1 adopts the winding voltage detection system as described hereinabove, since the continuous mode is always obtained as described hereinabove, reactive power within an electric current discontinuous period is not generated. In other words, according to the present embodiment, while a synchronous rectification circuit of the winding voltage detection system is provided to achieve a simple circuit configuration to suppress expansion of the circuit scale and avoid increase of the cost, the problem of drop of the power conversion efficiency arising from reactive power within a current discontinuous period is solved efficiently.

In summary, according to the power supply circuit of the present embodiment, the problem of increase of ripples where a power factor correction circuit according to the power regeneration system is provided is solved by making the secondary side full-wave rectification operation as operation of the continuous mode. Thus, when compared with the choke input system, it can be considered that a high power conversion efficiency is achieved.

Further, taking notice of the fact that reactive power within an electric current discontinuous period is not generated any more in the secondary side rectification circuit as a result of the fact that the secondary side full-wave rectification operation is made the continuous mode, a synchronous rectification circuit according to the winding voltage detection system is provided on the secondary side. Consequently, the power loss in the secondary side rectification circuit can be reduced efficiently by addition of a small number of parts, and the power conversion efficiency of the entire power supply circuit is further promoted.

It is to be noted that, while, in the present embodiment, the inductor Ld is inserted in the rectification current path of the secondary side, if the inductance value of the inductor Ld is set appropriately, then operation of suppressing a reverse current component which is otherwise generated in the rectification current by the impedance component of the inductor Ld is obtained. In other words, the suppression of the reverse current is further strengthened by the insertion of the inductor Ld.

For reference, variation characteristics of the ac to dc power conversion efficiency ACDC , power factor PF and rectification smoothed voltage Ei (dc input voltage) with respect to a load variation, which are results obtained by an experiment conducted actually with regard to the power supply circuit shown in FIG. 1 are illustrated in FIG. 5. It is to be noted that, in FIG. 5, such characteristics of the power supply circuit shown in FIG. 1 which has a circuit configuration (with a PFC: power factor corrector) including a power factor corrector and another power supply circuit (without a PFC) having a circuit configuration equivalent to the circuit configuration shown in FIG. 1 from which the power factor correction circuit is removed to allow comparison between the characteristics. The characteristics of the power supply circuit having a PFC are indicated by solid lines while the characteristics of the power supply circuit having no PFC are indicated by broken lines.

To obtain the results of the experiment illustrated in FIG. 5, the ac input voltage VAC was 230 V and the load power Po was so conditioned to vary within the range from 150 W (Eo = 5 V × 30 A) to 0 W. Further, parts having the following parameters were selectively used as the components of the power supply circuit with a PFC shown in FIG. 1:
· insulating converter transformer PIT: EER-40 ferrite core, gap G = 1.4 mm, primary winding N1 = 60 T, secondary windings N2A and N2B = 2 T, coupling coefficient k = 0.75
· primary side series resonance capacitor C1 = 0.027 F
· power factor correcting series resonance capacitor C20 = 0.082 F
· high frequency inductor L10 = 120 H
· switching diode D1 = 3 A/600 V
· filter capacitor CN = 1 F /200 V

On the other hand, for the power supply circuit without a PFC, constants were selected as follows:
· primary winding N1 = 70 T
· primary side series resonance capacitor C1 = 0.015 F

As a characteristic of the power supply circuit with a PFC, it is indicated first that the power factor PF exhibits significantly high values when compared with those of the power supply circuit without a PFC. With regard to the load variation, the power supply circuit with a PFC indicates a characteristic that, as the load becomes heavier, the value of the power factor PF rises. Where the load power is the maximum load power Po = 150 Wh, the power factor PF exhibits correction to a value of PF = 0.84. It is to be noted that the power supply circuit without a PFC indicates the power factor PF = 0.42.

Further, as the ac to dc power conversion efficiency ACDC of the power supply circuit with a PFC, ACDC = 90.7% was obtained at the maximum load power Po = 150 Wh. On the other hand, the ac to dc power conversion efficiency ACDC = 90.6% was measured with the power supply circuit without a PFC. Further, as can be seen from reference to FIG. 5, the ac to dc power conversion efficiency ACDC of the power supply circuit of the present embodiment does not exhibit any drop from that of the power supply circuit without a PFC, but maintains a substantially similar characteristic.

Further, as regards the rectification smoothed voltage Ei (dc input voltage), while the power supply circuit without a PFC indicates a characteristic that, as the load increases, the rectification smoothed voltage Ei exhibits a somewhat decreasing tendency. Meanwhile, the power supply circuit with a PFC indicates another characteristic that, as the load increases, the rectification smoothed voltage Ei exhibits an increasing tendency. However, the variation width with respect to the load variation is substantially equal. Where this result is compared with those of the power supply circuits of FIGS. 25 and 26 which include a full-wave rectification circuit (Di, Ci) similarly as in the present embodiment, the variation width of the rectification smoothed voltage Ei with respect to the load variation indicates significant reduction. This arises from the fact that the energy regenerated by the power factor correction circuit 11 is variable in response to the load variation. Further, also where the result described above is compared with the variation characteristic of the rectification smoothed voltage Ei, for example, illustrated in FIG. 31 where the configuration wherein the choke input is inserted in the rectification current path of the full-wave rectification circuit (Di, Ci), it can be seen that the variation width is reduced significantly.

It is to be noted that, with the power supply circuit with a PFC, as the ripple voltage level ( Ei) of the rectification smoothed voltage Ei at the maximum load power Po = 150 Wh, Ei = 1.5 V was measured. Further, as the ripple voltage level ( Eo) of the secondary side dc output voltage Eo at the same maximum load power Po = 150 Wh, Eo = 40 mV was measured. In contrast, with the power supply circuit without a PFC, as the ripple voltage level ( Ei) of the rectification smoothed voltage Ei at the maximum load power Po = 150 Wh, Ei = 6 V was measured. Further, as the ripple voltage level ( Eo) of the secondary side dc output voltage Eo, Eo = 20 mV was measured. As can be recognized from the comparison between the values of the ripple voltage level Eo of the power supply circuit with a PFC and the power supply circuit without a PFC, the increasing amount of ripples in the secondary side dc output voltage in the present embodiment is suppressed to approximately twice that where the power supply circuit does not include a power factor correction circuit as described hereinabove.

FIG. 6 shows an example of a configuration of a switching power supply circuit according to a second embodiment of the present invention.

Referring to FIG. 6, the power supply circuit shown includes a power factor correction circuit 12 of the magnetic coupling type in place of the electrostatic coupling type as a power factor correction circuit of the power regeneration system.

Also the power factor correction circuit 12 of the magnetic coupling type is inserted in a rectification current path between a bridge rectification circuit Di for producing a rectification smoothed voltage Ei (dc input voltage) from an ac input voltage VAC and a smoothing capacitor Ci. The power factor correction circuit 12 includes a filter capacitor CN, a high frequency inductor L10 and a switching diode D1 of the high speed recovery type. Where the configuration just described is compared with that of the power factor correction circuit 11 described hereinabove with reference to FIG. 1, the power factor correcting series resonance capacitor C20 is omitted, and the number of parts is reduced as much.

In the power factor correction circuit 12, the anode of the switching diode D1 is connected to the positive output terminal of the bridge rectification circuit Di, and the cathode of the switching diode D1 is connected to the positive terminal of the smoothing capacitor Ci through a series connection of the high frequency inductor L10. Thus, in this instance, a series connection circuit of the switching diode D1 (anode to cathode) and the high frequency inductor L10 is inserted between the positive output terminal of the bridge rectification circuit Di and the positive output terminal of the smoothing capacitor Ci. The filter capacitor CN is connected in parallel to the series connection circuit of the switching diode D1 and the high frequency inductor L10. Also the filter capacitor CN in this instance is provided to suppress normal mode noise.

Further, in this instance, the primary side series resonance circuit (L1 - C1) is connected to a node of the cathode of the switching diode D1 and the high frequency inductor L10. Consequently, a switching output (primary side series resonance current) obtained by the primary side series resonance circuit is regenerated as power and fed back to the smoothing capacitor Ci through a magnetic coupling (that is, the high frequency inductor L10).

Waveforms of power factor correction operation of the power supply circuit of FIG. 6 are illustrated in FIG. 7. Also in FIG. 7, the ac input voltage VAC, ac input current IAC, rectification output current I1 and voltage V1 are illustrated similarly as in FIG. 3. In the case of the circuit of FIG. 6, the rectification output current I1 is electric current at a location at which the electric current tries to flow from the positive output terminal of the bridge rectification circuit Di to the anode of the switching diode D1. Meanwhile, the voltage V1 is a voltage between the node of the switching diode D1, high frequency inductor L10 and primary side series resonance capacitor C1 and the primary side ground. The ac input voltage VAC has a peak voltage of 325 V (Vp) (ac 200 V system) of 50 Hz, which is the same condition as in the case of FIG. 3.

Also in the power factor correction circuit 12, power regeneration is performed from the primary side series resonance circuit as described hereinabove. Consequently, the voltage V1 is obtained as a voltage of a waveform wherein an alternating voltage component (V1A) of the switching cycle is superposed on the rectification smoothed voltage Ei on which a ripple component of the ac cycle is superposed as seen in FIG. 7. However, according to the configuration of the power factor correction circuit 12 shown in FIG. 6, an envelope in the proximity of a peak which exhibits an M shape appears not on the rectification output current I1 but on the voltage V1.

It is to be noted that, according to the voltage V1 illustrated in FIG. 7, also the rectification smoothed voltage Ei in the power supply circuit shown in FIG. 6 exhibits a peak level of 325 V at a point of time when the ripple is maximum, and corresponds to a peak level of the ac input voltage VAC. Further, within a period within which a substantially M-shaped peak does not appear, the envelope level of the voltage V1 including the rectification output voltage on which the alternating voltage component is superposed is 400 V fixed, and the peak level of the M-shaped waveform portion is 500 V.

Also in this instance, the switching diode D1 of the high speed recovery type performs, when the alternating voltage component of the voltage V1 is applied thereto, switching operation, for example, when the voltage V1 is higher than approximately 1/2 the positive/negative peak value of the ac input voltage VAC to connect or disconnect the rectification current.

Since the rectification current is connected and disconnected in this manner, the rectification output current I1 also in this instance exhibits an alternating waveform as seen in FIG. 7. It is to be noted that a substantially M-shaped envelope does not appear on the rectification output current I1 in this instance, but the rectification output current I1 has a sine waveform of a substantially one half wave. It is to be noted that, in this instance, the level of the rectification output current I1 corresponding to the point of time at which the ac input voltage VAC exhibits a peak is 4 A.

Within a continuity period of the rectification output current I1 which flows with such a waveform as described above, the rectification output current I1 flows also within a period within which the rectification output voltage level outputted from the bridge rectification circuit Di is lower than the voltage across the smoothing capacitor Ci, and also the continuity period of the ac input current IAC substantially coincides with the continuity period of the rectification output current I1. In other words, also in this instance, the continuity angle of the ac input current IAC is expanded from that where no power factor correction circuit is provided. Consequently, correction of the power factor is achieved. It is to be noted that the peak level of the ac input current IAC in this instance is 2 A.

Also in the power supply circuit of the second embodiment which has such a circuit configuration as described above, the insulating converter transformer PIT has a structure similar to that in the first embodiment described hereinabove. Consequently, for example, the coupling coefficient k is lowered, for example, to k = approximately 0.75. Thus, the continuous mode as the secondary side rectification operation is always obtained irrespective of a load variation, a variation of the ac input voltage and so forth.

Consequently, increase of the ripple voltage to be superposed on the secondary side dc output voltage Eo is suppressed similarly as in the power supply circuit of the first embodiment described hereinabove, and also where the power regeneration system adopts a configuration of the magnetic coupling type, it can be put into practical use readily. Further, a high conversion efficiency is obtained similarly when compared with that of the choke input system.

Furthermore, also in the power supply circuit shown in FIG. 6, since the secondary side full-wave rectification circuit is formed as a synchronous rectification circuit according to the wiring voltage detection system on the assumption that the continuous mode as the secondary side rectification operation is always obtained, reduction of the power loss on the secondary side can be achieved effectively by a minimum circuit configuration.

FIG. 8 illustrates variation characteristics of the ac to dc power conversion efficiency ACDC , power factor PF and rectification smoothed voltage Ei (dc input voltage) with respect to a load variation, which are results obtained by an experiment conducted actually with regard to the power supply circuit of the second embodiment shown in FIG. 6.

It is to be noted that, also in FIG. 8, such characteristics of the power supply circuit shown in FIG. 6 which has a circuit configuration (with a PFC: power factor corrector) including a power factor corrector 12 and another power supply circuit (without a PFC) having a circuit configuration equivalent to the circuit configuration shown in FIG. 6 from which the power factor correction circuit is removed. The characteristics of the power supply circuit having a PFC are indicated by solid lines while the characteristics of the power supply circuit having no PFC are indicated by broken lines. It is to be noted that the power supply circuit which is based on the configuration of FIG. 6 but does not include a PFC has a same configuration as that of the power supply circuit which is based on the circuit configuration of FIG. 1 but does not include a PFC.

Also to obtain the results of the experiment illustrated in FIG. 8, the ac input voltage VAC was 230 V and the load power Po was so conditioned as to vary within the range from 150 W (Eo = 5 V × 30 A) to 0 W. Further, parts having the following parameters were selectively used as the components of the power supply circuit shown in FIG. 6:
· insulating converter transformer PIT: EER-40 ferrite core, gap G = 1.4 mm, primary winding N1 = 60 T, secondary windings N2A and N2B = 2 T, coupling coefficient k = 0.75
· primary side series resonance capacitor C1 = 0.018 F/800 V
· high frequency inductor L10 = 120 H
· switching diode D1 = 3 A/600 V
· filter capacitor CN = 1 F /200 V

Also in this instance, as a characteristic of the power supply circuit with a PFC, the power factor PF has a tendency with regard to the load variation that the value thereof increases as the load becomes heavier, and exhibits significantly high values when compared with those of the power supply circuit without a PFC. Where the load power is the maximum load power Po = 150 Wh, the power factor PF exhibits a value of PF = 0.84.

Further, as the ac to dc power conversion efficiency ACDC of the power supply circuit with a PFC, ACDC = 90.5% was obtained at the maximum load power Po = 150 Wh. Thus, the characteristic is substantially similar to that in the first embodiment. Further, it can be recognized that, also in this instance, a characteristic of the ac to dc power conversion efficiency ACDC substantially same as that of the power supply circuit without a PFC is maintained.

While the level of the rectification smoothed voltage Ei (dc input voltage) is generally higher than that of the power supply circuit without a PFC with respect to the load variation, such a characteristic of the level variation is obtained with respect to the load variation that the level variation becomes substantially fixed after the load power Po exceeds substantially 25 W. In short, it is considered that, within this range, the variation of the dc input voltage with respect to the load variation in the power supply circuit of the present invention is reduced.

It is to be noted that, in the power supply circuit with a PFC shown in FIG. 6, the ripple voltage level ( Ei) of the rectification smoothed voltage Ei at the maximum load power Po = 150 Wh was measured to be Ei = 14 V. The ripple voltage level (Eo) of the secondary side dc output voltage Eo was Eo = 40 mV, and therefore, a similar result was obtained.

FIG. 9 shows an example of a configuration of a switching power supply circuit according to a third embodiment of the present invention.

Referring to FIG. 9, the power supply circuit shown uses a configuration of the power supply circuit, for example, of the second embodiment described hereinabove with reference to FIG. 6 as a basic configuration thereof and includes a power factor correction circuit 13 in place of the power factor correction circuit 12 shown in FIG. 6. The power factor correction circuit 13 is a modification to but different from the power factor correction circuit 12 in the connection pattern of the series connection circuit of the switching diode D1 and the high frequency inductor L10.

In particular, also the power factor correction circuit 13 includes a filter capacitor CN, a high frequency inductor L10 and a switching diode D1 of the high speed recovery type.

The high frequency inductor L10 is connected at an end thereof to the positive output terminal of the bridge rectification circuit Di and at the other end thereof to the anode of the switching diode D1. The cathode of the switching diode D1 is connected to the positive terminal of the smoothing capacitor Ci. The filter capacitor CN for normal mode noise suppression is connected in parallel to the series connection of the high frequency inductor L10 and the switching diode D1.

The primary side series resonance circuit (C1, L1) is connected to the node of the high frequency inductor L10 and the anode of the switching diode D1.

The power supply circuit of such a configuration as just described performs such power regeneration operation that primary side series resonance current which is a switching output obtained by the primary side series resonance circuit is fed back to the smoothing capacitor Ci through the switching diode. Such power regeneration operation is hereinafter referred to as diode coupling type operation.

Also where the power factor correction circuit 13 of such a diode coupling type as described above is provided, the switching diode D1 uses the regenerated power to switch the rectification current to connect and disconnect the rectification current. As a result, the continuity angle of the ac input current IAC is expanded to achieve correction of the power factor in a similar manner as in the power factor correction circuits 11 and 12 of the electrostatic coupling type and the magnetic coupling type.

Also in the third embodiment, the structure of the insulating converter transformer PIT and so forth similar to those in the first and second embodiments are used so that the operation of the secondary side full-wave rectification circuit keeps the continuous mode irrespective of the load variation and so forth, and similar operation and effects to those of the first and second embodiments are achieved. Also the effect of reduction of power loss derived from the fact that the secondary side rectification circuit is formed as a synchronous rectification circuit according to the winding voltage detection system is achieved similarly.

FIG. 10 shows an example of a configuration of a switching power supply circuit according to a fourth embodiment of the present invention.

Referring to FIG. 10, the power supply circuit shown uses a configuration which includes a combination of a partial voltage resonance circuit with a separately excited current resonance type converter according to the half bridge coupling system as a basic configuration of the primary side thereof similarly as in the power supply circuits of the embodiments described hereinabove. Further, the insulating converter transformer PIT has a structure similar to those in the preceding embodiments so that, for example, the coupling coefficient k = approximately 0.75 is achieved. Consequently, the continuous mode is always obtained as the secondary side rectification operation irrespective of a load variation, a variation of the ac input voltage and so forth. Further, also the secondary side rectification circuit is formed as a synchronous rectification circuit according to the winding voltage detection system similarly as in the preceding embodiments.

The power supply circuit of the fourth embodiment further includes a power factor correction circuit 14. The power factor correction circuit 14 includes a combination of a voltage doubler rectification circuit serving as a rectification smoothing circuit system for producing a rectification smoothed voltage Ei (dc input voltage) from an ac input voltage VAC and a configuration of a power factor correction circuit according to the power regeneration system of the electrostatic coupling type.

Also the power supply circuit shown in FIG. 10 includes a noise filter formed from a filter capacitor CL and a common mode choke coil CMC for a line of a commercial ac power supply AC.

Further, the voltage doubler rectification circuit for producing the rectification smoothed voltage Ei from the ac input voltage VAC includes two rectification diodes D1 and D2 and a series connection circuit of two smoothing capacitors Ci1 and Ci2. The smoothing capacitors Ci1 and Ci2 have capacitance values equal to each other.

The anode of the rectification diode D1 is connected to the positive line side of the commercial ac power supply AC through a series connection of a high frequency inductor L10 in the power factor correction circuit 14 hereinafter described. The cathode of the rectification diode D1 is connected to a positive terminal of the smoothing capacitor Ci1.

The cathode of the rectification diode D2 is connected to the positive line side of the commercial ac power supply AC through the series connection of the high frequency inductor L10, and the anode of the rectification diode D2 is connected to the primary side ground.

The negative terminal of the smoothing capacitor Ci1 is connected to the positive terminal of the smoothing capacitor Ci2, and the negative terminal of the smoothing capacitor Ci2 is connected to the primary side ground. Further, a node of the smoothing capacitors Ci1 and Ci2 is connected to the negative line side of the commercial ac power supply AC.

In the power supply circuit having the configuration described above, within a half cycle within which the ac input voltage VAC has the positive polarity, rectification current based on ac input current IAC of the forward direction flows along a rectification current path of the commercial ac power supply AC line (positive) winding of the positive line side of the common mode choke coil CMC high frequency inductor L10 rectification diode D1 smoothing capacitor Ci1 winding of the common mode choke coil CMC commercial ac power supply AC line (negative). In short, operation of charging the smoothing capacitor Ci1 with the rectification output of the rectification diode D1 is obtained.

Within the other half cycle within which the ac input voltage VAC has the negative polarity, rectification current based on the ac input current IAC of the negative direction flows along another rectification current path of the commercial ac power supply AC line (negative) winding of the negative line side of the common mode choke coil CMC smoothing capacitor Ci2 rectification diode D2 high frequency inductor L10 winding of the positive line side of the common mode choke coil CMC commercial ac power supply AC line (positive). Consequently, operation of charging the smoothing capacitor Ci2 with the rectification output of the rectification diode D2 is obtained.

Consequently, a rectification smoothed voltage Ei having a level substantially equal to twice the ac input voltage VAC is obtained across the smoothing capacitors Ci1 and Ci2 within one cycle of the ac input voltage VAC. In other words, voltage doubler rectification smoothing operation of producing a rectification smoothed voltage (dc input voltage Ei) corresponding to twice the level of the ac input voltage VAC is obtained.

It is to be noted that, in operation of the power factor correction circuit 14 in the present embodiment, the rectification diodes D1 and D2 function as power factor correcting switching elements and performs switching operation in a switching cycle of the switching elements Q1 and Q2 to connect and disconnect the rectification current as hereinafter described. To this end, a diode element of the high speed recovery type is selectively used for the rectification diodes D1 and D2.

The power factor correction circuit 14 in the present embodiment is formed as a power factor correction circuit according to the power regeneration system of the electrostatic coupling type wherein the rectification diodes D1 and D2 of the voltage doubler rectification circuit are used also as power factor correcting switching elements. It can be considered that the power factor correction circuit 14 is inserted in the rectification current path of the rectification smoothing circuit (voltage doubler rectification circuit) for obtaining the dc input voltage Ei from the ac input voltage VAC.

In the power factor correction circuit 14, the high frequency inductor L10 is connected at an end thereof to the node of the rectification diode D1 and the rectification diode D2 as described hereinabove. The high frequency inductor L10 is connected at the other end thereof to the positive line side of the commercial ac power supply AC.

Consequently, the rectification diode D1 is connected in series to the high frequency inductor L10 in a rectification current path of the voltage doubler rectification circuit which is formed corresponding to the period of a half wave within which the ac input voltage VAC has the positive polarity. Meanwhile, the rectification diode D2 is connected in series to the high frequency inductor L10 in another rectification current path of the voltage doubler rectification circuit which is formed corresponding to the period of the other half wave within which the ac input voltage VAC has the negative polarity. Further, the rectification diodes D1 and D2 are connected mutually connected in parallel to the commercial ac power supply AC.

Further, in the power factor correction circuit 14, the filter capacitor CN is inserted in the line of the commercial ac power supply AC. More particularly, the filter capacitor CN is connected between a node of the high frequency inductor L10 and the common mode choke coil CMC on the positive line side of the commercial ac power supply AC and a node of the smoothing capacitors Ci1 and Ci2. According to the connection scheme just described, where it is considered that the smoothing capacitor Ci1 has a capacitance value which may be ignored in a high frequency condition, it may be considered that the filter capacitor CN is provided in parallel to a series circuit formed from the rectification diode D1 and the high frequency inductor L10 and another series circuit formed from the rectification diode D2 and the high frequency inductor L10. The filter capacitor CN provided in this manner suppresses normal mode noise generated in the rectification current paths formed within the periods within which the ac input voltage VAC has the positive polarity and the negative polarity.

Further, in the power factor correction circuit 14, a power factor correcting series resonance capacitor C20A and another power factor correcting series resonance capacitor C20B are connected in parallel to the rectification diode D1 and the rectification diode D2, respectively, as seen in FIG. 10. In this instance, each of the power factor correcting series resonance capacitors C20A and C20B has a series relationship to the high frequency inductor L10, and the capacitances of the power factor correcting series resonance capacitors C2.0A and C20B and the inductance of the high frequency inductor L10 form series resonance circuits in the power factor correction circuit 14 (in the rectification current paths of the voltage doubler rectification circuit).

Further, the primary winding N1 of the insulating converter transformer PIT is connected at an end thereof to the node of the anode of the rectification diode D1, the cathode of the rectification diode D2 and the high frequency inductor L10 through the series connection of the primary side series resonance capacitor C1. In other words, the primary side series resonance circuit (L1 - C1) is connected.

According to such a configuration of the power factor correction circuit 14 as described above, a switching output (primary side series resonance current) obtained at the primary side series resonance circuit is regenerated as power by operation of feeding back the switching output to the smoothing capacitor Ci (Ci1 and Ci2) through the parallel connection of the rectification diode D1 and the power factor correcting series resonance capacitor C20A and the parallel connection of the rectification diode D1 and the power factor correcting series resonance capacitor C20B, respectively. In this instance, since the capacitance (electrostatic capacity) of the power factor correcting series resonance capacitor C20 is interposed between the smoothing capacitor Ci and the primary side series resonance circuit, it can be considered that the power regeneration is performed through an electrostatic coupling.

A waveform diagram of FIG. 11 illustrates operation of the power factor correction circuit 14 having the configuration described above within an ac cycle.

Here, power regeneration is performed from the primary side series resonance circuit to the power factor correction circuit 14 side as described above on the assumption that the ac input voltage VAC of 50 Hz is inputted as seen in FIG. 10. It is to be noted that, in this instance, for example, the ac input voltage VAC = 100 V of the AC 100 V system is inputted.

In response to the power regeneration, the rectification output voltage V2 obtained as a voltage across the rectification diode D2 has a waveform wherein an alternating voltage component of the switching cycle of the primary side switching converter is superposed on the ac input voltage component of the ac cycle as seen in FIG. 11. The peak level of the rectification output voltage V2 obtained in this instance is 300 V as seen in FIG. 11.

Though not shown, also the rectification output voltage of the rectification diode D1 has a waveform having a phase shifted by 180° from that of the rectification output voltage V2. In other words, each of the rectification diodes D1 and D2 of the high speed recovery type performs switching operation in response to the voltage which includes the ac input voltage component on which the alternating voltage component described above is superposed.

In this instance, each of the rectification diodes D1 and D2 performs, when the voltage including the superposed alternating voltage component as described above is applied thereto, switching operation when the voltage is higher than approximately 1/2 the positive/negative peak value of the ac input voltage VAC to connect or disconnect the rectification current.

The rectification output current I1 flows in response to such switching by the rectification diodes D1 and D2 to connect and disconnect the rectification current. The rectification output current I1 obtained has an alternating waveform having a substantially W shape in the proximity of a peak thereof as seen in FIG. 11. In this instance, the level of the rectification output current I1 corresponding to a point of time at which the ac input voltage VAC exhibits a peak is 5 A.

The continuity time period of the rectification output current I1 flowing with such a waveform as described above is longer than the continuity time periods of the rectification diodes D1 and D2 where only the ac input voltage component is applied. In particular, since the rectification diodes D1 and D2 perform switching operation in response to the alternating voltage component when the applied voltage is higher than approximately 1/2 the positive or negative peak value of the ac input voltage VAC, the rectification diodes D1 and D2 exhibit a conducting state also within a period within which the rectification output voltage level originally is lower than the voltage across the smoothing capacitors Ci1 and Ci2 so that enlargement of the continuity angle of the rectification output current I1 is achieved.

Also the continuity period of the ac input current IAC illustrated in FIG. 11 substantially coincides with the continuity period of the rectification output current I1. Accordingly, the continuity angle of the ac input current IAC is expanded from that where the power factor corrector is not provided. Consequently, the waveform of the ac input current IAC further approaches the waveform of the ac input voltage VAC, and correction of the power factor is achieved. It is to be noted that the peak level of the ac input current IAC in this instance is 5 A.

The power supply circuits of the first to third embodiments described hereinabove are ready, for example, as regards the load power, for the condition from the maximum load power Po = 150 W (Eo = 5 V × 30 A) to the minimum load power Pomin = 0 W. Such a condition as just described is a comparatively heavy load condition of a low voltage/high current. Further, the commercial ac input voltage is a voltage of the ac 200 V system.

Based on such a load condition and a commercial ac input voltage condition as described above, the power supply circuits of the first to third embodiments include a full-wave resonance circuit (Di, Ci) in the rectification circuit system for producing the rectification smoothed voltage Ei (dc input voltage) from the ac input voltage VAC so that the rectification smoothed voltage Ei having a level equal to that of the ac input voltage is produced.

However, if the commercial ac input voltage is changed from a voltage of the ac 200 V system to another voltage of the ac 100 V system while such a comparatively heavy load condition as described above is maintained, then the current level to flow through the power supply circuit increases in accordance with a dropping amount of the commercial ac input voltage. Therefore, the power loss in the circuit including, for example, switching loss by switching elements and so forth increases, resulting in drop of the total power conversion efficiency.

In the fourth embodiment, the reason why the rectification circuit system for producing the rectification smoothed voltage Ei (dc input voltage) from the ac input voltage VAC is formed as a voltage doubler rectification circuit is that it is intended to eliminate the problem of drop of the power conversion efficiency where a voltage of the ac 100 V system is used as an input, for example, while the load condition is similar to that described above.

In particular, the rectification smoothed voltage Ei (dc input voltage) produced by the voltage doubler rectification circuit has a level corresponding to twice that of the ac input voltage VAC of the ac 100 V system. In other words, a level equal to that of the rectification smoothed voltage Ei which is obtained by a full-wave rectification circuit to which an ac input voltage VAC of the ac 200 V system is inputted is obtained. Consequently, also the level of electric current flowing through the power supply circuit is substantially equal to that obtained by the power supply circuits of the first to third embodiments which include a full-wave rectification circuit for a voltage of the ac 200 V system. For example, the peak level of the rectification output current I1 obtained where the maximum load power Pomax is Pomax = 150 Wh is 4 A (FIG. 3) in the first embodiment and is 5 A (FIG. 11) in the fourth embodiment, and it can be recognized that a level which may be regarded substantially equal is obtained. As a result, the problem of drop of the power conversion efficiency described hereinabove is eliminated.

Also in the present fourth embodiment, the necessity to insert a power choke coil in a commercial ac power supply line as means for correcting the power factor is eliminated, and such resulting effects as correction of the power conversion efficiency, reduction in size and weight of a power supply circuit board and correction in degree of freedom in arrangement design of the circuit board can be anticipated.

For example, where the configuration of the switching converter shown in FIG. 27 or 28 which includes a voltage doubler rectification circuit is used as a based configuration and a power choke coil PCH is inserted in place of the power factor correction circuit 22 or 23, the weight of the power choke coil PCH is approximately 153 g.

In contrast, in the power factor correction circuit 14 in the present embodiment, for example, a small size ferrite core of EER-19 is used as the high frequency inductor L10 to form a closed magnetic path. Further, the filter capacitor CN and the power factor correcting series resonance capacitors C20A and C20B may be capacitors having a voltage withstanding property of 200 V. Further, the total weight of the high frequency inductor L10 and the rectification diodes D1 and D2 is approximately 20 g. In this manner, also in the power supply circuit of the fourth embodiment shown in FIG. 10, the components of the power factor correction circuit 14 are all small in size and light in weight, and the weight of the power factor correction circuit 14 in its entirety is much lower than the weight of the power choke coil PCH described above.

For reference, variation characteristics of the ac to dc power conversion efficiency ACDC , power factor PF and rectification smoothed voltage Ei (dc input voltage) with respect to a load variation, which are results obtained by an experiment conducted actually with regard to the power supply circuit of the fourth embodiment shown in FIG. 10 are illustrated in FIG. 12.

It is to be noted that, in FIG. 12, such characteristics of the power supply circuit shown in FIG. 10 which has a circuit configuration (with a PFC: power factor corrector) including a power factor corrector and another power supply circuit (without a PFC) having a circuit configuration equivalent to the circuit configuration shown in FIG. 10 from which the power factor corrector is removed and which includes a rectification circuit formed from a diode element in place of a synchronous rectification circuit on the secondary side. In this instance, the insulating converter transformer PIT provided in the circuit which does not include a PFC does not have such a loose coupling as in the case of the embodiment and has an induced voltage set to, for example, 2.5 V/T or more.

In FIG. 12, the characteristics of the power supply circuit with a PFC are indicated by solid lines while those of the power supply circuit without a PFC are indicated by broken lines.

Further, to obtain the results of the experiment illustrated in FIG. 12, the ac input voltage VAC was 100 V and the load power Po was so conditioned to vary within the range between the maximum load power Pomax = 150 W (Eo = 5 V × 30 A) and the minimum load power Pomin = 0 W. Further, the ac input voltage VAC may vary within the range approximately from 85 V to 144 V of the 100 V system.

Further, parts having the following parameters were selectively used as the components of the power supply circuit with a PFC shown in FIG. 10:
· insulating converter transformer PIT: EER-40 ferrite core, gap G = 1.4 mm, primary winding N1 = 60 T, secondary windings N2A and N2B = 2 T, coupling coefficient k = 0.75
· primary side series resonance capacitor C1 = 0.022 F
· power factor correcting series resonance capacitor C20A = C20B = 0.022 F
· high frequency inductor L10 = 56 H
· rectification diode D1 = D2 = 3 A/600 V
· filter capacitor CN = 1 F /200 V

On the other hand, for the power supply circuit without a PFC based on the configuration shown in FIG. 10, constants were selected as follows:
· primary winding N1 = 65 T
· primary side series resonance capacitor C1 = 0.018 F

As a characteristic of the power supply circuit with a PFC shown in FIG. 10, it is indicated first that the power factor PF exhibits significantly high values when compared with those of the power supply circuit without a PFC. With regard to the load variation, the power supply circuit with a PFC indicates a characteristic that, as the load becomes heavier, the value of the power factor PF rises. Where the load power is the maximum load power Po = 150 Wh, the power factor PF exhibits correction to a value of PF = 0.80. It is to be noted that the power supply circuit without a PFC indicates the power factor PF = 0.54.

Further, as the ac to dc power conversion efficiency ACDC of the power supply circuit with a PFC just as shown in FIG. 10, ACDC = 91.2% was obtained at the maximum load power Po = 150 Wh. On the other hand, the ac to dc power conversion efficiency ACDC = 90.1% was measured with the power supply circuit without a PFC. Further, as can be seen from reference to FIG. 12, the ac to dc power conversion efficiency ACDC of the power supply circuit of the present embodiment upon load variation exhibits a higher efficiency than that by the configuration without a PFC.

Further, as regards the rectification smoothed voltage Ei (dc input voltage), the power supply circuit without a PFC and the power supply circuit with a PFC exhibit variations of variation widths substantially equal to each other with respect to a variation of the load power Po approximately from Po = 150 W to Po = 50 W. Also where the variation characteristic of the rectification smoothed voltage Ei is compared, for example, with the variation characteristic of the rectification smoothed voltage Ei where a choke input system is adopted in combination with the voltage doubler rectification circuit as shown in FIG. 32, it can be recognized that the variation width by the power supply circuit with a PFC exhibits significant reduction.

According to an experiment, a result was obtained that the variation width ( Ei) of the rectification smoothed voltage Ei by the power supply circuit without a PFC was Ei = 14 V while that by the power supply circuit with a PFC was Ei = 33 V.

It is to be noted that, with the power supply circuit with a PFC shown in FIG. 10, as the ripple voltage level ( Eo) of the secondary side dc output voltage Eo at the maximum load power Po = 150 Wh, Eo = 40 mV was measured. In contrast, with the power supply circuit without a PFC, as the ripple voltage level ( Eo) of the secondary side dc output voltage Eo at the maximum load power Po = 150 Wh, Eo = 20 mV was measured. As can be recognized from the comparison between the values of the ripple voltage level Eo of the power supply circuit with a PFC and the power supply circuit without a PFC, the increasing amount of ripples in the secondary side dc output voltage in the present embodiment is suppressed to approximately twice that where the power supply circuit does not include a power factor correction circuit as described hereinabove.

FIG. 13 shows an example of a configuration of a switching power supply circuit according to a fifth embodiment of the present invention.

Referring to FIG. 13, the power supply circuit shown includes, as a power factor correction circuit of the power regeneration system, a power factor correction circuit 15 of the magnetic coupling type in place of the power factor correction circuit 14 of the electrostatic coupling type.

Also the power factor correction circuit 15 of the magnetic coupling type is inserted in a rectification current path of a rectification smoothing circuit for producing a rectification smoothed voltage Ei (dc input voltage) from an ac input voltage VAC. The power factor correction circuit 15 includes a filter capacitor CN, a high frequency inductor L10, and a rectification diode D1 and another rectification diode D2 of the high speed recovery type.

In short, the power factor correction circuit 15 has a circuit configuration of the power factor correction circuit 14 shown in FIG. 1 from which the power factor correcting serial resonance capacitors C20A and C20B are omitted. In this regard, the power factor correction circuit 15 shown in FIG. 3 achieves reduction of the number of parts.

Power factor correcting operation of the power supply circuit shown in FIG. 13 which includes such a power factor correction circuit 15 as described above is illustrated in FIG. 14. Also in FIG. 14, the ac input voltage VAC, ac input current IAC, rectification output current I1 and voltage V2 are illustrated. Also in this instance, the ac input voltage VAC is VAC = 100 V of the AC 100 V system and has a frequency of 50 Hz.

Also in the power factor correction circuit 15 shown in FIG. 13, power regeneration from a primary side series resonance circuit is performed. Consequently, the voltage V2 at the rectification diode D2 has a waveform which includes an alternating voltage component of a switching cycle superposed thereon as seen in FIG. 14. According to the voltage V2 illustrated in FIG. 14, the peak level of the power supply circuit shown in FIG. 13 is 300 V.

Also from the fact that such a waveform of the voltage V2 as just described is obtained, it can be recognized that, in the circuit of FIG. 13, the rectification diode D2 and the rectification diode D1 of the high speed recovery type perform switching in response to application thereto of an alternating voltage component based on primary side series resonance current fed back thereto. Further, also in this instance, each of the rectification diodes D1 and D2 performs switching operation in response to such an alternating voltage component as described above, for example, when the alternating voltage component is higher than approximately 1/2 the positive/negative peak value of the ac input voltage VAC to connect or disconnect the rectification current.

Since the rectification current is connected and disconnected in this manner, also the rectification output current I1 in this instance has an alternating waveform as seen in FIG. 14. It is to be noted that the rectification output current I1 in this instance does not have a substantially W-shaped waveform in the proximity of positive and negative peak levels but has substantially half waves of a sine waveform. Also in this instance, the level of the rectification output current I1 corresponding to a point of time at which the ac input voltage VAC exhibits a peak is 5 A.

Also the continuity period of the rectification output current I1 flowing with such a waveform as described above is expanded because the rectification diodes D1 and D2 are conducting also within a period within which the rectification output voltage level originally is lower than the level of the voltage across the smoothing capacitors Ci1 and Ci2 similarly as in the case of the circuit of FIG. 10, and also the continuity period of the ac input current IAC is expanded so as to substantially coincide with the continuity period of the rectification output current I1. In short, also in this instance, the continuity angle of the ac input current IAC is expanded from that where no power factor correction circuit is provided, and accordingly, correction of the power factor is achieved. It is to be noted that the peak level of the ac input current IAC in this instance is 5 A.

Also in the power supply circuit of the fifth embodiment having such a circuit configuration as described above, since the insulating converter transformer PIT has a structure similar to that in the preceding embodiments, for example, the coupling coefficient k has a value reduced, for example, to k = approximately 0.75, and consequently, the continuous mode as the secondary side rectification operation is always obtained irrespective of a load variation, a variation of the ac input voltage and so forth.

As a result, increase of the ripple voltage to be superposed on the secondary side dc output voltage Eo is suppressed in a similar manner as in the power supply circuit of the embodiments described hereinabove, and also where the magnetic coupling type configuration is adopted for the power regeneration system, implementation thereof can be achieved readily. Further, a high power conversion efficiency is achieved similarly when compared with that of the power supply circuit of the choke input system.

Further, also in the power supply circuit shown in FIG. 13, the secondary side full-wave rectification circuit is formed as a synchronous rectification circuit according to the winding voltage detection system on the assumption that the continuous mode is always obtained as the secondary side rectification operation. Consequently, reduction of the power loss on the secondary side is achieved effectively with a minimum circuit configuration.

FIG. 15 illustrates variation characteristics of the ac to dc power conversion efficiency ACDC , power factor PF and rectification smoothed voltage Ei (dc input voltage) with respect to a load variation, which are results obtained by an experiment conducted actually with regard to the power supply circuit of the fifth embodiment shown in FIG. 13.

It is to be noted that, also in FIG. 15, such characteristics of the power supply circuit shown in FIG. 13 which has a circuit configuration (with a PFC: power factor corrector) including the power factor correction circuit 11 shown in FIG. 13 and another power supply circuit (without a PFC) having a circuit configuration equivalent to the circuit configuration shown in FIG. 13 from which the power factor correction circuit is removed and which includes a rectification circuit formed from a diode element in place of a synchronous rectification circuit on the secondary side. Also in this instance, the insulating converter transformer PIT provided in the circuit which does not include a PFC does not have such a loose coupling as in the case of the embodiments and has an induced voltage set to, for example, 2.5 V/T or more.

In FIG. 15, the characteristics of the power supply circuit with a PFC are indicated by solid lines while those of the power supply circuit without a PFC are indicated by broken lines.

It is described here for the confirmation that the power supply circuit which is based on the configuration shown in FIG. 13 but does not include a PFC has a configuration same as that of the power supply circuit which is based on the circuit configuration of FIG. 10 and does not include a PFC.

Also when the results of the experiment illustrated in FIG. 15 were obtained, the ac input voltage VAC was 100 V and the load power Po was so conditioned as to vary within the range between 150 W (Eo = 5 V × 30 A) and 0 W. Further, parts having the following parameters were selectively used as the components of the power supply circuit with a PFC shown in FIG. 13:
· insulating converter transformer PIT: EER-40 ferrite core, gap G = 1.4 mm, primary winding N1 = 65 T, secondary windings N2A and N2B = 2 T, coupling coefficient k = 0.75
· primary side series resonance capacitor C1 = 0.018 F/800 V
· high frequency inductor L10 = 120 H
· rectification diode D1 = D2 = 3 A/600 V
· filter capacitor CN = 1 F /200 V

Also in this instance, as a characteristic of the power factor PF of the power supply circuit with a PFC shown in FIG. 13, it exhibits a tendency that the value thereof increases as the load becomes heavier and exhibits significantly high values when compared with those of the power supply circuit without a PFC. Then, as the power factor PF at the maximum load power Po = 150 Wh, PF = 0.84 was obtained.

Further, as regards the ac to dc power conversion efficiency ACDC of the power supply circuit with a PFC shown in FIG. 13, ACDC = 91.4% was obtained at the maximum load power Po = 150 Wh. This is a characteristic substantially same as that, for example, of the fourth embodiment. Also in this instance, it can be seen from FIG. 15 that a higher efficiency than that of the power supply circuit without a PFC is maintained.

Further, as regards the rectification smoothed voltage Ei (dc input voltage), the power supply circuit with a PFC generally exhibits a level higher than that of the power supply circuit without a PFC. However, as regards the level variation with respect to a load variation, a characteristic that it is substantially fixed within a range of the load power Po from 150 W to a value proximate to 50 w. In short, also in the fifth embodiment, it can be regarded that the variation of the dc input voltage with respect to the load variation is small.

It is to be noted that, according to an experiment performed for the power supply circuit with a PFC shown in FIG. 13, a result was obtained that the variation width ( Ei) of the rectification smoothed voltage Ei with respect to the variation of the load power Po = 150 W to 0 W was Ei = 48 V. Meanwhile, as regards the ripple voltage level ( Eo) of the secondary side dc output voltage Eo, a similar result of Eo = 40 mV was obtained.

FIG. 16 shows an example of a configuration of a power supply circuit according to a sixth embodiment of the present invention.

Referring to FIG. 16, the power supply circuit shown has a basic configuration wherein the configuration of the primary side includes a combination of a power factor correction circuit 16 of the power regeneration system with a voltage doubler rectification circuit similarly, for example, as in the fourth and fifth embodiments described hereinabove and another combination a partial voltage resonance circuit with a separately excited current resonance type converter according to the half bridge coupling system. Further, the power regeneration system of the power factor correction circuit 16 is of the magnetic coupling type similar to that in the fifth embodiment.

Further, the insulating converter transformer PIT has a structure similar to that in the preceding embodiments such that it has, for example, a coupling coefficient k = approximately 0.75. Consequently, the continuous mode is always obtained as the secondary side rectification operation irrespective of a load variation, a variation of the ac input voltage and so forth. Further, also the secondary side rectification circuit is formed as a synchronous rectification circuit according to the wiring voltage detection system similarly as in the preceding embodiments.

Also the power factor correction circuit 16 shown in FIG. 16 is inserted in a rectification current path of a rectification smoothing circuit for producing a rectification smoothed voltage Ei (dc input voltage) from an ac input voltage VAC. As seen in FIG. 16, the power factor correction circuit 16 includes a high frequency inductor L10, two rectification diodes D1 and D2 which function as power factor correcting switching elements and form a voltage doubler rectification circuit, and a filter capacitor CN.

In this instance, a winding beginning end portion of a winding of the high frequency inductor L10 is connected to a node of the positive line side of a commercial ac power supply AC to the filter capacitor CN. A winding ending end of the high frequency inductor L10 is connected to an end portion of a primary winding N1 through a series connection of a primary side series resonance capacitor C1.

Further, the high frequency inductor L10 in this instance has a tap provided at a predetermined winding position thereof such that the high frequency inductor L10 is divided into a high frequency winding portion L10A (first inductor, first winding portion) and another high frequency winding portion L10B (second inductor, second winding portion). The high frequency winding portion L10A is inserted between the positive line of the commercial ac power supply AC and the tap. In short, the high frequency winding portion L10A is connected to the positive line of the commercial ac power supply AC. The high frequency winding portion L10B is inserted between the tap and the primary side series resonance capacitor C1 and connected to the primary side series resonance circuit.

The tap of the high frequency inductor L10 is connected to a node of the anode of the rectification diode (rectification element) D1 and the cathode of the rectification diode (rectification element) D2 which form the voltage doubler rectification circuit system.

Consequently, the voltage doubler rectification circuit for producing the rectification smoothed voltage Ei from the ac input voltage VAC has such a circuit configuration that, on a rectification current path on which the ac input voltage VAC exhibits the positive polarity, the high frequency winding portion L10A is connected in series to the rectification diode D1, and on another rectification current path on which the ac input voltage VAC exhibits the negative polarity, the high frequency winding portion L10A is connected in series to the rectification diode D2.

The series connection circuit of the primary side series resonance capacitor C1 and the primary winding N1 which form the primary side series resonance circuit is connected to the node of the rectification diodes D1 and D2 of the voltage doubler rectification circuit through a series connection of the high frequency winding portion L10B. Where this is viewed from the power factor correction circuit 16 which receives a switching output fed back thereto, the primary side series resonance circuit includes the inductance of the high frequency winding portion L10B in addition to the capacitance of the primary side series resonance capacitor C1 and the leakage inductance of the primary winding N1.

Further, in the power factor correction circuit 16, the filter capacitor CN is inserted between the positive line and the negative line of the commercial ac power supply AC. The filter capacitor CN suppresses normal mode noise appearing on the rectification current path in a similar manner as in the preceding embodiments.

According to such a circuit configuration of the power factor correction circuit 16 as described above, operation of regenerating and feeding back a switching output (primary side series resonance current) obtained by the primary side series resonance circuit to the smoothing capacitor Ci (Ci1 and Ci2) through rectification operation of the rectification diodes D1 and D2 is obtained. In this instance, it can be regarded that, in power regeneration and feeding back of the primary side series resonance current, the high frequency inductor L10 inserted in such a manner as described above intervenes. In other words, the power regeneration is performed through a magnetic coupling of the high frequency inductor L10.

While operation of the rectification diodes D1 and D2 which switch (connect and disconnect) the rectification current with the switching output fed back in such a manner as described above is obtained, power factor correction is achieved by the switching operation. From this, it can be considered that, in the circuit of FIG. 16, the rectification diodes D1 and D2 which form the voltage doubler rectification circuit are used also as switching elements for switching the rectification current for power factor correction. Consequently, the number of parts of the circuit is reduced when compared with that of an alternative arrangement wherein, for example, elements for rectification and switching elements for power factor correction are provided separately from each other.

It is to be noted that, in the present embodiment, a tap is provided for the high frequency inductor L10 and connected to the node of the rectification diodes D1 and D2 as described above. According to the circuit configuration, the primary side series resonance current is fed back to the voltage doubler rectification circuit system (node of the rectification diodes D1 and D2) through the high frequency winding portion L10B of the high frequency inductor L10.

For example, in the configuration of the power factor correction circuit of the magnetic coupling type described hereinabove in connection with the fifth embodiment, the high frequency inductor L10 does not have a tap as seen in FIG. 13, but the entire winding of the high frequency inductor L10 from a winding starting end to a winding ending end thereof is included in the rectification current path and any winding portion of the high frequency inductor L10 is not inserted between the primary side series resonance circuit and the node of the rectification diodes D1 and D2.

FIG. 17 illustrates operation of the power factor correction circuit 16 having the configuration described above within a period of a commercial ac power supply.

Here, power regeneration is performed from the primary side series resonance circuit to the power factor correction circuit 16 side in such a manner as described above on the assumption that an ac input voltage VAC of the AC 100 V system (for example, VAC = 100 V) of 50 Hz (one cycle = 20 ms) is inputted as seen in FIG. 17.

In response to the power regeneration, the voltage V2 across the rectification diode D2 has a waveform wherein an alternating voltage component of the switching cycle of the primary side switching converter is superposed on the ac input voltage component of the ac cycle as seen in FIG. 17. In this instance, the voltage V2 has a waveform wherein it has the zero level within a period within which the rectification diode D2 performs switching to allow the rectification current to pass therethrough but is clamped at 280 Vp for another period within which the rectification diode D1 is conducting. The clamp level of 280 Vp corresponds to the level of the voltage (Ei) across the series connection of the smoothing capacitors Ci1 and Ci2.

From the waveform of the voltage V2 described, it can be considered that the alternating voltage of the switching cycle is superposed on and applied together with the rectification voltage to the rectification diodes D1 and D2. As a result, the rectification diodes D1 and D2 perform switching operation at a comparatively high speed to connect and disconnect the rectification current when the voltage V2 is higher than approximately 1/2 the positive/negative peak value of the ac input voltage VAC.

The rectification output current I1 which is obtained in response to switching of the rectification diodes D1 and D2 to connect and disconnect the rectification current in this manner and flows along a line between the high frequency inductor L10 and the node of the rectification diodes D1 and D2 has an alternating waveform having half waves of a sine waveform within a period within which the rectification diodes D1 and D2 perform switching as seen in FIG. 17. In this instance, the peak level of the rectification output current I1 corresponding to a point of time at which the ac input voltage VAC exhibits a peak is 9 Ap.

Incidentally, high frequency components of the alternating waveform of the rectification output current I1 produced in this manner flow into the filter capacitor CN inserted in the power factor correction circuit 16. In particular, within a period within which the power factor correction circuit 11 has the positive polarity, the high frequency components flow along a path of the filter capacitor CN high frequency winding portion L10A rectification diode D1 smoothing capacitor Ci1 filter capacitor CN. On the other hand, within another period within which the power factor correction circuit 11 has the negative polarity, the high frequency components flow along another path of the filter capacitor CN smoothing capacitor Ci2 rectification diode D2 high frequency winding portion L10A filter capacitor CN.

Here, as can be recognized also from the fact that the rectification diodes D1 and D2 perform switching operation in response to an alternating voltage component when the voltage V2 is higher than approximately 1/2 the positive/negative peak value of the ac input voltage VAC, the continuity period of the rectification output current I1 is longer than the continuity period of the rectification diodes D1 and D2 in an alternative case wherein the switching operation is performed only with the ac input voltage component applied thereto. This signifies that, also within a period within which the ac input voltage level is lower than the voltage level across the smoothing capacitors Ci1 and Ci2, the rectification diodes D1 and D2 are conducting and perform rectification operation so that the rectification output current I1 flows thereby to expand the continuity angle. Then, also the continuity period of the ac input current IAC illustrated in FIG. 17 substantially coincides with the continuity period of the rectification output current I1, and accordingly, the continuity angle of the ac input current IAC is expanded from that where a power factor correction circuit is not provided. Consequently, the waveform of the ac input current IAC further approaches the waveform of the ac input voltage VAC, and correction of the power factor is achieved. It is to be noted that the peak level of the ac input current IAC in this instance is 5 Ap.

As described hereinabove, in the power factor correction circuit 16 of the power supply circuit shown in FIG. 16, a tap is provided for the high frequency inductor L10 to divide the high frequency inductor L10 into the high frequency winding portions L10A and L10B. One end of the high frequency winding portion L10A is connected to the positive line of the commercial ac power supply AC, and the other end of the high frequency winding portion L10A is connected to the rectification diodes D1 and D2. One end of the high frequency winding portion L10B is connected to the primary side series resonance circuit (C1 - L1), and the other end of the high frequency winding portion L10B is connected to the node of the rectification diodes D1 and D2.

According to such a connection scheme as described above, operation that the switching output of the primary side series resonance circuit is inputted on the high frequency winding portion L10B side and operation that the ac input voltage VAC is superposed on the power regenerated switching output are obtained compositely. Since the high frequency winding portions L10A and L10B are divided by forming a tap on the originally same inductor, they are coupled closely to each other. Thus, the operations of the high frequency winding portions L10A and L10B described above are performed in a state wherein the high frequency winding portions L10A and L10B are in a closely coupled state.

Since such operation is obtained, it has been confirmed through an experiment that the rectification output current I1 which should flow in the power factor correction circuit 16 including the high frequency inductor L10 has substantially perfect half waves of a sine waveform as described hereinabove with reference to FIG. 17. As the rectification output current I1 has a sine waveform in this manner, a substantially perfect sine waveform is obtained similarly with the ac input current IAC.

As can be recognized from comparison, for example, with the power supply circuits of the fourth and fifth embodiments which include the voltage doubler rectification circuit same as that in the present embodiment as a rectification circuit for producing the rectification smoothed voltage Ei, in the form wherein the high frequency inductor L10 is inserted as it is without a tap provided thereon on a rectification current path, the rectification current which flows through the rectification diode D1 or D2 has a waveform which has a substantially M-shaped envelope. Accordingly, also the waveform of the ac input current IAC similarly has a substantially M shape (refer to FIGS. 11 and 14).

The ac input current IAC having a substantially M-shaped waveform in this manner actually includes a comparatively high level of harmonic distortion of high and odd-numbered orders such as, for example, 9th, 11th and 13th order harmonics distortion. Such distortion as just mentioned may possibly give rise particularly to a disadvantage that, for example, the margin to a prescribed value prescribed by the power supply harmonics distortion regulation becomes poor.

In contrast, according to the present embodiment, since the ac input current IAC has a sine waveform, high and odd-numbered order harmonic distortion levels are suppressed, and a margin to the prescribed value prescribed by the power supply harmonics distortion regulation can be obtained sufficiently. Further, to obtain such an effect as just described, the correction of the power factor is achieved by a configuration wherein a tap is provided for the high frequency inductor L10 without additionally providing a part or an element and the opposite ends and the tap of the high frequency inductor L10 are connected in such a manner as described hereinabove with reference to FIG. 16.

Also with the sixth embodiment, a merit is obtained from the fact that the necessity for insertion of a power choke coil into a commercial ac power supply line is eliminated.

For comparison in this regard, for example, where the configuration of the switching converter shown in FIG. 27 or 28 which includes a voltage doubler rectification circuit is used as a basic configuration and a power choke coil PCH is inserted in place of the power factor correction circuit 22 or 23 in the basic configuration, the weight of the power choke coil PCH is approximately 153 g.

In contrast, according to the present embodiment, for the high frequency inductor L10 as a particular example of a component of the power factor correction circuit 16, for example, a small size ferrite core of EER-19 is used. Further, the filter capacitor CN may be a capacitor having a voltage withstanding property of 250 V. In this instance, the total weight of the high frequency inductor L10 and the filter capacitor CN is approximately 20 g. In this manner, in the case of the power supply circuit of FIG. 16, the components of the power factor correction circuit 16 are all small in size and light in weight, and also the overall weight of the power factor correction circuit 16 is much lower than the weight of the power choke coil PCH described above.

The EER-19 ferrite core used in the high frequency inductor L10 forms a closed magnetic path, and accordingly, there is no necessity to perform arrangement design of a circuit board taking an influence of leakage magnetic fluxes into consideration as in the case of arrangement design of a power choke coil PCH. Further, there is no necessity to apply a magnetic shield either. This can also promote reduction in size and weight of a circuit board for a power supply circuit.

Further, as described hereinabove, to cope with an ac cycle, the inductance necessary for the power choke coil PCH was, for example, approximately 7.2 mH. In contrast, since the high frequency inductor L10 is used for high frequency current of a switching cycle, the inductance thereof is, for example, 45 H at the high frequency winding portion L10A and 10 H at the high frequency winding portion L10B thereof. In this manner, considerably low inductance values can be set. Consequently, where the numbers of turns required for the high frequency inductor L10 and the power choke coil PCH are compared with each other, the number of turns of the high frequency inductor L10 may be much smaller than the number of turns of the power choke coil PCH, and such decrease in number of turns decreases the power loss by the coil element. This also makes a factor in that a higher power conversion efficiency than that where the power choke coil PCH is used for power factor correction is obtained.

For reference, variation characteristics of the ac to dc power conversion efficiency ACDC , power factor PF and rectification smoothed voltage Ei (dc input voltage) with respect to a load variation, which are results obtained by an experiment conducted actually with regard to the power supply circuit shown in FIG. 16 are illustrated in FIG. 18.

It is to be noted that, in FIG. 18, such characteristics of the power supply circuit shown in FIG. 16 which has a circuit configuration (with a PFC: power factor corrector) including a power factor corrector and another power supply circuit (without a PFC) having a circuit configuration equivalent to the circuit configuration shown in FIG. 16 from which the power factor corrector is removed and which includes a rectification circuit formed from a diode element in place of a synchronous rectification circuit on the secondary side. In this instance, the insulating converter transformer PIT provided in the circuit which does not include a PFC has a coupling coefficient (for example, 0.8 or more) set to a value higher than that in the present embodiment and has an induced voltage set to, for example, 2.5 V/T or more.

In FIG. 18, the characteristics of the power supply circuit with a PFC are indicated by solid lines while those of the power supply circuit without a PFC are indicated by broken lines.

Further, to obtain the results of the experiment illustrated in FIG. 18, the ac input voltage VAC was 100 V and the load power Po was so conditioned as to vary within the range between 150 W (Eo = 5 V × 30 A) and 0 W. Further, parts having the following parameters were selectively used as the components of the power supply circuit with a PFC shown in FIG. 16:
· insulating converter transformer PIT: EER-40 ferrite core, gap G = 1.4 mm, primary winding N1 = 65 T, secondary windings N2A and N2B = 2 T, coupling coefficient k = 0.75
· primary side series resonance capacitor C1 = 0.018 F
· high frequency inductor L10: L10A = 45 H, L10B = 10 H
· rectification diode D1 = D2 = 3 A/600 V
· filter capacitor CN = 1 F /250 V

As a characteristic of the power supply circuit with a PFC shown in FIG. 16, it is indicated first that the power factor PF exhibits significantly high values when compared with those of the power supply circuit without a PFC. With regard to the load variation, the power supply circuit with a PFC indicates a characteristic that, as the load becomes heavier, the value of the power factor PF rises. Where the load power is the maximum load power Po = 150 Wh, the power factor PF exhibits correction to a value of PF = 0.84. It is to be noted that the power supply circuit without a PFC indicates the power factor PF = 0.54.

Further, as the ac to dc power conversion efficiency ACDC of the power supply circuit with a PFC just as shown in FIG. 16, ACDC = 91.4% was obtained at the maximum load power Po = 150 Wh. On the other hand, the ac to dc power conversion efficiency ACDC = 90.1% was measured with the power supply circuit without a PFC, and according to the present embodiment, correction by 1.3% is achieved. Together with this, the ac input power decreased by 1.5 W. Further, as can be seen from reference to FIG. 18, the ac to dc power conversion efficiency ACDC of the power supply circuit of the present embodiment upon load variation exhibits a higher efficiency than that by the configuration without a PFC.

Further, as regards the characteristic of the rectification smoothed voltage Ei (dc input voltage) with respect to the load variation, the power supply circuit with a PFC steadily exhibits a higher level than that of the power supply circuit without a PFC. Particularly in a light load condition wherein the load power Po is Po = approximately 0 W to 50 W, while the power supply circuit with a PFC indicates a very high variation rate, the power supply circuit without a PFC exhibits a steady transition with a substantially fixed variation rate.

Also if the variation characteristic of the rectification smoothed voltage Ei is compared with that of the rectification smoothed voltage Ei where the choke input system according to a combination, for example, with a voltage doubler rectification circuit shown in FIG. 32 is adopted, it can be seen that the variation width in the power supply circuit with a PFC is reduced significantly.

According to an experiment, a result was obtained that the variation width ( Ei) of the rectification smoothed voltage Ei by the power supply circuit without a PFC was Ei = 14 V while that by the power supply circuit with a PFC was Ei = 33 V.

It is to be noted that, with the power supply circuit with a PFC shown in FIG. 16, as the ripple voltage level ( Eo) of the secondary side dc output voltage Eo at the maximum load power Po = 150 Wh, Eo = 20 mV was measured. In contrast, with the power supply circuit without a PFC, as the ripple voltage level ( Eo) of the secondary side dc output voltage Eo at the maximum load power Po = 150 Wh, Eo = 20 mV was measured. As can be recognized from the comparison between the values of the ripple voltage level Eo of the power supply circuit. with a PFC and the power supply circuit without a PFC, a good result is obtained that the increasing amount of ripples in the secondary side dc output voltage in the present embodiment is suppressed to an equal level to that of the power supply circuit which does not include a power factor correction circuit.

It can be regarded that the power supply circuit of the sixth embodiment has a configuration for correcting, where the rectification circuit for producing a rectification smoothed voltage Ei from an ac input voltage VAC is formed as a voltage doubler rectification circuit, a substantially M-shaped waveform of the ac input current IAC of the power factor correction circuit of the power regeneration system to obtain a better power factor correction characteristic.

However, such a configuration for correction of a substantially M-shaped waveform of the IAC as just described can be applied not only where the rectification circuit is formed as a voltage doubler rectification circuit but also where the rectification circuit is formed, for example, as an ordinary full-wave rectification circuit. Consequently, also in a configuration wherein a power factor correction circuit of the power regeneration system is provided for a full-wave rectification circuit, the M-shaped waveform tendency of the ac input current IAC is moderated and the waveform of the ac input current IAC approaches a more perfect sine wave. Consequently, high order/odd-numbered order harmonic distortion of the waveform of the ac input current IAC is reduced similarly as in the sixth embodiment described hereinabove.

Thus, seventh and eighth embodiments of the present invention described below include configurations of a power factor correction circuit of the power regeneration system which corrects a substantially M-shaped waveform of the ac input current IAC where a rectification circuit for producing a rectification smoothed voltage Ei from an ac input voltage VAC is an ordinary full-wave rectification circuit.

FIG. 19 shows a configuration of a power supply circuit according to the seventh embodiment.

Referring to FIG. 19, the power supply circuit shown uses a configuration which includes a combination of a partial voltage resonance circuit with a separately excited current resonance type converter according to the half bridge coupling system as a basic configuration of the primary side thereof similarly as in the power supply circuits of the embodiments described hereinabove. Further, the rectification circuit for producing the rectification smoothed voltage Ei is formed as a full-wave rectification circuit (Di, Ci) similarly as in the first to third embodiments described hereinabove. Furthermore, the insulating converter transformer PIT has a structure similar to those in the preceding embodiments so that, for example, the coupling coefficient k = approximately 0.75 is achieved. Consequently, the continuous mode is always obtained as the secondary side rectification operation irrespective of a load variation, a variation of the ac input voltage and so forth. Further, also the secondary side rectification circuit is formed as a synchronous rectification circuit according to the winding voltage detection system similarly as in the preceding embodiments.

The power factor correction circuit 17 shown in FIG. 19 is inserted in a rectification current path of a rectification smoothing circuit for producing the rectification smoothed voltage Ei (dc input voltage) from the ac input voltage VAC. The power factor correction circuit 17 adopts, as a power regeneration system thereof, a configuration of a power supply circuit according to the magnetic coupling type.

The power factor correction circuit 17 includes a high frequency inductor L10, a rectification diode D1 (power factor correcting switching element) and a filter capacitor CN.

The high frequency inductor L10 in this instance has a tap provided at a predetermined winding position thereof such that the high frequency inductor L10 is divided into a high frequency winding portion L10A (first inductor, first winding portion) and a high frequency winding portion L10B (second inductor, second winding portion). In this instance, a winding beginning end portion of the entire winding of the high frequency inductor L10 is a winding beginning end portion of the high frequency winding portion L10A side. Accordingly, a winding ending end portion of the high frequency winding portion L10A and a winding beginning end portion of the L10B make the tap position. A winding ending end portion of the high frequency winding portion L10B side makes a winding ending end portion of the entire winding of the high frequency inductor L10.

In the high frequency inductor L10, the end portion of the high frequency winding portion L10A on the winding beginning end side is connected to the cathode of the rectification diode D1. The anode of the rectification diode D1 is connected to a positive output terminal of a bridge rectification circuit Di. Further, in the high frequency inductor L10, the end portion of the high frequency winding portion L10B on the winding ending end side is connected to an end portion of the primary winding N1 through a series connection of the primary side series resonance capacitor C1. Further, the tap of the high frequency inductor L10 is connected to the positive terminal of the smoothing capacitor Ci.

According to the connection scheme described above, a circuit configuration is obtained wherein the high frequency winding portion L10A is connected in series to the rectification diode D1 in a rectification current path which is formed in each of half cycles within which the ac input voltage VAC has the positive polarity and the negative polarity in the rectification circuit system for producing the rectification smoothed voltage Ei from the ac input voltage VAC.

Further, the series connection circuit of the primary side series resonance capacitor C1 and the primary winding N1 which form the primary side series resonance circuit is connected to a node of the high frequency winding portion L10A and the positive terminal of the smoothing capacitor Ci through a series connection of the high frequency winding portion L10B. In other words, the series connection circuit is connected to a rectification current path of the full-wave rectification circuit for producing the rectification smoothed voltage Ei from the ac input voltage VAC. Where this is viewed from the power factor correction circuit 17 which receives a switching output fed back thereto through the primary side series resonance circuit, the primary side series resonance circuit includes the inductance of the high frequency winding portion L10B in addition to the capacitance of the primary side series resonance capacitor C1 and the leakage inductance of the primary winding N1.

The filter capacitor CN in this instance is inserted between the positive output terminal of the bridge rectification circuit Di and the positive terminal of the smoothing capacitor Ci. In the insertion form just described, the filter capacitor CN is connected in parallel to the series connection circuit of the rectification diode D1 and the high frequency winding portion L10A. The filter capacitor CN suppresses normal mode noise which may otherwise be generated in the rectification current path.

According to such a circuit configuration of the power factor correction circuit 17 as described above, an inductance component of the high frequency winding portion L10A and an element in the form of the rectification diode D1 for switching (connecting and disconnecting) current are connected in series and inserted in the rectification current path. Then, as the switching output (primary side series resonance current) obtained by the primary side series resonance circuit is applied to the series connection circuit described above (through the high frequency winding portion L10B), an alternating voltage is obtained by the series connection circuit. The rectification diode D1 performs switching operation so as to connect and disconnect the rectification output current I1 in response to the alternating voltage so that the rectification output current I1 may be supplied to the smoothing capacitor Ci suitably. In short, according to the power factor correction circuit 17, operation of regenerating the primary side series resonance current obtained by the primary side series resonance circuit as power and feeding back the power to the smoothing capacitor through the rectification current path is obtained.

Also in this instance, it can be regarded that, in the power regeneration and feeding back of the primary side series resonance current, the high frequency inductor L10 inserted in such a manner as described above intervenes.

It is to be noted that also the power supply circuit of the seventh embodiment has such a circuit configuration that a tap is provided for the high frequency inductor L10 and the connection scheme shown in FIG. 19 is adopted so that the primary side series resonance circuit is power regenerated through the high frequency winding portion L10B of the high frequency inductor L10.

For example, if a configuration of a power factor correction circuit of the magnetic coupling type as in the case of the second embodiment described hereinabove is adopted, then the high frequency inductor L10 has no tap provided thereon as seen in FIG. 6 and the entire winding of the high frequency inductor L10 from the winding starting end to the winding ending end is included in the rectification current path. Therefore, any winding portion of the high frequency inductor L10 is not inserted between the primary side series resonance circuit and the rectification current path.

FIG. 20 illustrates operation of the power factor correction circuit 17 within an ac cycle. It is assumed here that an ac input voltage VAC = 230 V of the AC 200 V system is inputted from the commercial ac power supply AC.

If switching operation is performed while the ac input voltage VAC is inputted as described above, then a switching output is fed back by operation as the power regeneration from the primary side series resonance circuit to the power factor correction circuit 17 in response to the switching operation. Consequently, the voltage V2 across the high frequency winding portion L10B interposed between the primary side series resonance capacitor C1 and the node (rectification current path) of the high frequency winding portion L10A and the positive terminal of the smoothing capacitor Ci in the primary side series resonance circuit has an alternating waveform corresponding to the switching cycle and having an envelope on which peaks of the positive polarity and the negative polarity appear as seen in FIG. 20. In the waveform of the voltage V2 across the high frequency winding portion L10B, the peak of the positive polarity with respect to the zero level is approximately 200 V. Meanwhile, the envelope on the negative polarity side has a fixed voltage of approximately 200 V except a conducting period of the rectification output current I1 and exhibits a projection corresponding to the conducting period of the rectification output current I1. The level of the projecting envelope waveform is approximately 300 V.

Meanwhile, the voltage V1 across the high frequency winding portion L10A inserted in the rectification current path side has a waveform substantially reverse to that of the voltage V2 as seen in FIG. 20. The envelope of the voltage V1 on the positive polarity side has a substantially fixed voltage of approximately 120 V except a conducting period of the rectification output current I1 and exhibits a projection corresponding to the conducting period of the rectification output current I1. The level of the envelope waveform is approximately 200 V. The envelope waveform of the negative polarity corresponds, for example, to the waveform of the rectification smoothed voltage Ei, and the peak level of the envelope waveform with reference to the zero level is approximately 120 V.

As can be recognized, for example, also from the fact that the voltage V1 across the high frequency winding portion L10A described hereinabove has an alternating waveform, an alternating voltage of the switching cycle is superposed on the rectification current path for producing the rectification smoothed voltage Ei (dc input voltage) from the switching output (primary side series resonance current) fed back by the power regeneration from the primary side series resonance circuit. The switching diode D1 of the high speed recovery type performs, when an alternating voltage component of the voltage V1 is applied thereto, switching operation, for example, when the alternating voltage component is higher than approximately 1/2 the positive/negative peak value of the ac input voltage VAC to connect or disconnect the rectification output current I1 flowing thereto from the positive output terminal of the bridge rectification circuit Di.

Since the rectification output current I1 is connected and disconnected in this manner, the rectification output current I1 flowing through the switching diode D1 has an alternating waveform which has a half wave envelope of the positive polarity of a sine waveform within a conducting period as seen in FIG. 20. It is to be noted that, in this instance, the level of the rectification output current I1 corresponding to a point of time at which the ac input voltage VAC exhibits a peak is 10 Ap.

Meanwhile, the electric current flowing along the line between the high frequency wiring portion L10A and the positive electrode of the smoothing capacitor Ci, that is, rectification current 12 which tends to flow from the high frequency wiring portion L10A into the smoothing capacitor Ci, has a waveform formed such that the rectification current I1 described hereinabove is superposed on the primary side series resonance current whose positive/negative peaks are, for example, approximately 5 A as seen in FIG. 20.

With regard to the continuity period of the rectification current I1 which flows with the waveform described above, the rectification current I1 flows also within a period within which the rectification output voltage level outputted from the bridge rectification circuit Di is lower than the voltage across the smoothing capacitor Ci. Thus, also the continuity period of the ac input current IAC illustrated in FIG. 20 substantially coincides with the continuity period of the rectification current I1. In short, the continuity angle of the ac input current IAC is expanded from that where the power factor correction circuit is not provided, and the waveform of the ac input current IAC approaches the waveform of the ac input voltage VAC. In other words, power factor correction is achieved. It is to be noted that the peak level of the ac input current IAC in this instance is 5 Ap.

As described hereinabove, in the power factor correction circuit 17 of the power supply circuit shown in FIG. 19, a tap is provided for the high frequency inductor L10 to divide the high frequency inductor L10 into the high frequency wiring portions L10A and L10B. The high frequency wiring portions L10A and L10B have a mutually serially connected relationship. The high frequency wiring portion L10A is inserted at a position of a rectification current path as a rectification output line of the rectification circuit which performs full-wave rectification at which it is connected in series to the switching diode D1. Meanwhile, the high frequency wiring portion L10B is connected in series to the primary side series resonance circuit (C1 - L1) such that it functions as part of the inductance component of the primary side series resonance circuit and is further connected to a line of the rectification current path described above between the high frequency wiring portion L10A and the positive output terminal of the smoothing capacitor Ci.

According to such a connection scheme as just described, operation that the switching output of the primary side series resonance circuit is inputted on the high frequency winding portion L10B side and operation. that the ac input voltage VAC is superposed on the power regenerated switching output on the high frequency wiring portion L10A side are obtained compositely by the high frequency inductor L10. Since the high frequency winding portions L10A and L10B are divided by forming a tap on the originally same inductor, they are coupled closely to each other. Thus, the operations of the high frequency winding portions L10A and L10B described above are performed in a state wherein the high frequency winding portions L10A and L10B are in a closely coupled state.

Since such operation is obtained, it has been confirmed that the rectification current I1 which should flow in the power factor correction circuit 17 including the high frequency inductor L10 has a substantially perfect sine waveform as described hereinabove with reference to FIG. 20. As the rectification current I1 has a sine waveform in this manner, the ac input current IAC is obtained in a substantially perfect sine waveform similarly.

For example, also where the rectification circuit for producing the rectification smoothed voltage Ei from the ac input voltage VAC is a full-wave rectification circuit, where such a configuration that the high frequency inductor L10 as a power factor correction circuit of the power regeneration system (magnetic coupling type or electrostatic coupling type) is inserted without being divided into a line of the commercial ac power supply AC side is adopted, the rectification current which actually flows through the rectification diodes D1 and D2 has a tendency that the envelope thereof has a substantially M-shaped waveform. Accordingly, also the waveform of the ac input current IAC has a tendency to have an M shape similarly.

In contrast, according to the present embodiment, since the rectification current I1 actually has a sine waveform, a margin to the prescribed value prescribed by the power supply harmonics distortion regulation can be obtained sufficiently. Further, to obtain such an effect as just described, the correction of the power factor is achieved by a configuration wherein a tap is provided for the high frequency inductor L10 without additionally providing a part or an element and the opposite ends and the tap of the high frequency inductor L10 are connected in such a manner as described hereinabove with reference to FIG. 19.

For comparison with the present embodiment in this regard, for example, where the configuration of the switching converter shown, for example, in FIG. 25 or 26 is used as a basic configuration and a power choke coil PCH is inserted in place of the power factor correction circuit 20 or 21 in the basic configuration, the weight of the power choke coil PCH is approximately 153 g.

In contrast, according to the present embodiment, for the high frequency inductor L10 as a particular example of a component of the power factor correction circuit 17, for example, a small size ferrite core of EER-19 is used. Further, the filter capacitor CN may be a capacitor having a voltage withstanding property of 200 V. In this instance, the total weight of the high frequency inductor L10 and the filter capacitor CN is approximately 20 g. Further, for the switching diode D1, a diode of 3 A/600 V is selectively used. In this manner, in the case of the power supply circuit of FIG. 19, the components of the power factor correction circuit 17 are all small in size and light in weight, and also the overall weight of the power factor correction circuit 17 is much lower than the weight of the power choke coil PCH described above.

Also in this instance, the EER-19 ferrite core used in the high frequency inductor L10 forms a closed magnetic path, and accordingly, there is no necessity to perform arrangement design of a circuit board taking an influence of leakage magnetic fluxes into consideration as in the case of arrangement design of a power choke coil PCH. Further, there is no necessity to apply a magnetic shield either. Also this can promote reduction in size and weight of a circuit board for a power supply circuit.

Further, to cope with an ac cycle, the inductance necessary for the power choke coil PCH was, for example, approximately 4.2 mH. In contrast, since the high frequency inductor L10 is used for high frequency current of a switching cycle, the inductance thereof can be set to a considerably low value such as, for example, 45 H at the high frequency winding portion L10A and 85 H at the high frequency winding portion L10B thereof. Consequently, where the numbers of turns required for the high frequency inductor L10 and the power choke coil PCH are compared with each other, the number of turns of the high frequency inductor L10 may be much smaller than the number of turns of the power choke coil PCH, and such decrease in number of turns decreases the power loss by the coil element. This also makes a factor in that a higher power conversion efficiency than that where the power choke coil PCH is used for power factor correction is obtained.

Variation characteristics of the ac to dc power conversion efficiency ACDC , power factor PF and rectification smoothed voltage Ei (dc input voltage) with respect to a load variation, which are results obtained by an experiment conducted actually with regard to the power supply circuit shown in FIG. 19 are illustrated in FIG. 21. It is to be noted that, in FIG. 21, such characteristics of the power supply circuit which has a circuit configuration (with L10B) including the power factor correction circuit 17 shown in FIG. 19 and another power supply circuit having a circuit configuration equivalent to the circuit configuration of the power factor correction circuit 17 shown in FIG. 19 from which the high frequency wiring portion L10B is omitted are illustrated. In FIG. 21, the characteristics of the power supply circuit which includes the power factor correction circuit 17 (with L10B) are indicated by solid lines while those of the power supply circuit from which the high frequency wiring portion L10B is omitted are indicated by broken lines.

Further, to obtain the results of the experiment illustrated in FIG. 21, the ac input voltage VAC was 230 V and the load power Po was so conditioned as to vary within the range between 150 W (Eo = 5 V × 30 A) and 0 W. It is to be noted that, as an input condition of the ac input voltage VAC, a range from 180 V to 288 V of the ac 200 V system is assured. Further, parts having the following parameters were selectively used as the components of the power supply circuit with a PFC shown in FIG. 19:
· insulating converter transformer PIT: EER-40 ferrite core, gap G = 1.4 mm, primary winding N1 = 60 T, secondary windings N2A and N2B = 2 T, coupling coefficient k = 0.75
· primary side series resonance capacitor C1 = 0.018 F/800 V
· high frequency inductor L10: L10A = 45 H, L10B = 85 H
· switching diode D1 = 3 A/600 V
· filter capacitor CN = 1 F /200 V

Further, the inductance of the high frequency wiring portion L10A where the power factor correction circuit is configured such that it omits the high frequency wiring portion L10B was set to 120 H. Further, although, in the following description, comparison in characteristic, for example, with the power supply circuit shown in FIG. 19 from which the power factor correction circuit 17 itself is omitted is described, in the power supply circuit which does not include the power factor correction circuit, the primary winding N1 was selectively set to N1 = 65 T, and the primary side series resonance capacitor C1 was selectively set to C1 = 0.018 H.

In regard to characteristics (solid lines) of the power supply circuit shown in FIG. 19 which includes the power factor correction circuit 17, first the power factor PF is compared with that (broken line) of the power supply circuit which includes the power factor correction circuit from which the high frequency wiring portion L10B is omitted. Thus, although the power factor PF is somewhat lower over the overall load variation range, it has a characteristic which indicates sufficient values for practical use and may be regarded substantially same. It is to be noted that the variation of the power factor PF with respect to the load variation in this instance exhibits a characteristic that it increases as the load becomes heavier in both cases of the power supply circuit which includes the power factor correction circuit 17 and the power supply circuit from which the high frequency wiring portion L10B is omitted. In the power supply circuit which includes the power factor correction circuit 17, a power factor PF = 0.80 was obtained at the maximum load power Po = 150 Wh.

It is to noted that, with the configuration of the power supply circuit which does not include the power factor correction circuit 17, the power factor PF was PF = 0.54.

Further, though not illustrated as a characteristic in FIG. 20, the waveform of the ac input current IAC is inclined to have a substantially M shape in the power supply circuit which includes the power factor correction circuit from which the high frequency wiring portion L10B is omitted, but exhibits a sine waveform in the power supply circuit which includes the power factor correction circuit 17. Accordingly, the power supply circuit which includes the power factor correction circuit 17 exhibits a more advantageous comprehensive power factor correction result including suppression of the distortion level of high and odd-numbered harmonics such as, for example, 9th, 11th and 13th order harmonics.

Further, as the ac to dc power conversion efficiency ACDC of the power supply circuit which includes the power factor correction circuit 17, ACDC = 92.0% was obtained at the maximum load power Po = 150 Wh. From FIG. 21, it can be seen that a higher power conversion efficiency is obtained over a wide load variation range of the load power Po = 50 W to 150 W than that of the power supply circuit which includes the power factor correction circuit from which the high frequency wiring portion L10B is omitted. In other words, where the connection scheme shown in FIG. 19 wherein a tap is provided for the high frequency inductor L10 to divide the high frequency inductor L10 into the high frequency wiring portions L10A and L10B is adopted, a higher power factor efficiency is obtained.

Incidentally, with the power supply circuit which does not include a power factor correction circuit, the ac to dc power conversion efficiency ACDC = 90.1% was measured. When compared with this, the power supply circuit shown in FIG. 19 exhibits correction by 1.9%. Together with this, the ac input power decreases by 3.5 W.

Further, as regards the rectification smoothed voltage Ei (dc input voltage), although the rectification smoothed voltage Ei of the power supply circuit which includes the power factor correction circuit 17 exhibits an increasing tendency as the load power Po is inclined to become a heavy load, it can be regarded that the variation of the rectification smoothed voltage Ei with respect to the load variation is generally substantially fixed. Where this characteristic is compared with that of the power supply circuit shown in FIG. 9 or 10, the variation width of the rectification smoothed voltage Ei with respect to the load variation is reduced significantly. This arises from the fact that the energy to be regenerated by the power factor correction circuit 17 is variable in response to the load variation. Also when compared with the variation characteristic of the rectification smoothed voltage Ei where the power supply circuit adopts, for example, the choke input system shown in FIG. 12, the variation width of the rectification smoothed voltage Ei is reduced significantly.

Further, where the characteristic of the rectification smoothed voltage Ei of the power supply circuit which includes the power factor correction circuit 17 is compared with the characteristic of the rectification smoothed voltage Ei of the power supply circuit from which the high frequency wiring portion L10B is omitted, it can be seen that a higher level is obtained over a wide range of the load power Po from a load power lower than 50 W to 150 W. That the level of the rectification smoothed voltage Ei rises in this manner makes a factor in that the power conversion efficiency of the circuit of the embodiment shown in FIG. 19 is corrected.

It is to be noted that, with the power supply circuit which includes the power factor correction circuit 17, as the ripple voltage level ( Ei) of the rectification smoothed voltage Ei at the maximum load power Po = 150 Wh, Ei = 5.5 V was measured. Further, as the ripple voltage level ( Eo) of the secondary side dc output voltage Eo, Eo = 20 mV was measured.

With the power supply circuit which includes the power factor correction circuit from which the high frequency wiring portion L10B is omitted, as the ripple voltage level ( Ei) of the rectification smoothed voltage Ei at the maximum load power Po = 150 Wh, 22.5 V was measured.

Further, with the power supply circuit which does not include the power factor correction circuit, as the ripple voltage level ( Ei) of the rectification smoothed voltage Ei at the maximum load power Po = 150 Wh, Ei = 14 V was measured. Further, as the ripple voltage level ( Eo) of the secondary side dc output voltage Eo, Eo = 10 mV was measured.

From the foregoing, if the power supply circuit which includes the power factor correction circuit 17 is first compared with the power supply circuit which includes the power factor correction circuit from which the high frequency wiring portion L10B is omitted, then it can be seen that, since the ripple voltage level (Ei) of the rectification smoothed voltage Ei is Ei = 5.5 V while that of the latter power supply circuit is Ei = 22.5 V, the ripple voltage level (Ei) is suppressed significantly to substantially 1/4. The fact that the ripple voltage level (Ei) of the rectification smoothed voltage Ei is suppressed in this manner signifies that also ripples of the commercial ac power supply cycle to be superposed on the secondary side dc output voltage Eo are suppressed significantly. In other words, the result relating to the ripple voltage level Ei indicates that the power supply circuit of the embodiment shown in FIG. 19 suppresses ripples of the secondary side dc output voltage by a great amount when compared with the power supply circuit which includes a power factor correction circuit of a conventional power regeneration system.

Further, if comparison is performed with regard to the ripple voltage level (E o) of the secondary side dc output voltage Eo, then while the power supply circuit which includes the power factor correction circuit 17 exhibits E o = 20 mV, the power supply circuit which does not include the power factor correction circuit exhibits Ei o = 10 mV. In short, as described hereinabove, the increasing amount of ripples of the secondary side dc output voltage in the present embodiment is suppressed to approximately twice that of the power supply circuit which does not include the power factor correction circuit.

FIG. 22 shows an example of a configuration of a switching power supply circuit according to an eighth embodiment of the present invention.

Referring to FIG. 22, the power supply circuit shown includes a power factor correction circuit 18 in place of the power factor correction circuit 17 provided in the configuration of the power supply circuit of the seventh embodiment. Also the power factor correction circuit 18 adopts a power regeneration system of the magnetic coupling type.

Also the power factor correction circuit 18 is inserted in a rectification current path between the bridge rectification circuit Di and the smoothing capacitor Ci for producing the rectification smoothed voltage Ei (dc input voltage) from the ac input voltage VAC. The power factor correction circuit 18 includes a filter capacitor CN, a high frequency inductor L10 (first inductor), and a switching diode D1 of the high speed recovery type.

In this instance, however, the high frequency inductor L10 has no tap provided thereon. Instead, in the circuit shown in FIG. 22, a tap is provided at a predetermined winding position of the primary winding N1 of the insulating converter transformer PIT such that the primary winding N1 is divided into two primary winding portions N1A and N1B. Of the primary winding portions N1A and N1B, the primary winding portion N1B is included in an inductor (second inductor) which forms the power factor correction circuit 18 as hereinafter described.

It is to be noted that, in the primary winding N1 in this instance, an end portion of the primary winding portion N1A side is a winding beginning end, and the winding beginning end is connected to a node (switching output point) of the source of the switching element Q1 and the drain of the switching element Q2 through a series connection of the primary side series resonance capacitor C1. In this instance, although the primary side series resonance capacitor C1 is inserted at a position on the switching output point side, since the primary winding N1 and the primary side series resonance capacitor C1 are connected in series to each other, a primary side series resonance circuit for making operation of the switching converter as that of the current resonance type is formed from the capacitance of the primary side series resonance capacitor C1 and the L1 of the primary winding N1 (N1A + N1B). Further, the switching output of the switching elements Q1 and Q2 is transmitted to the primary side series resonance circuit.

Further, since the winding beginning end portion of the entire primary winding N1 is the end portion on the primary winding portion N1A side as described hereinabove, the winding beginning end portion of the primary winding portion N1A becomes same as the winding beginning end portion of the primary winding N1 while the winding ending end portion of the primary winding portion N1A becomes the tap position of the primary winding N1. Further, the winding beginning end portion of the primary winding portion N1B becomes the tap position, and the winding ending end portion of the primary winding portion N1B becomes the same as the winding ending end portion of the entire primary winding N1.

The power factor correction circuit 18 which includes the filter capacitor CN, high frequency inductor L10, switching diode D1 and primary winding portion N1B as described above is formed in the following connection scheme.

The anode of the switching diode D1 is connected to the positive output terminal of the bridge rectification circuit Di. The cathode of the switching diode D1 is connected to the tap of the primary winding N1. This signifies that, in the power factor correction circuit 18, the cathode of the switching diode D1 is connected to the winding beginning end portion of the primary winding portion N1B.

The winding ending end portion of the primary winding portion N1B (winding ending end portion of the primary winding N1) is connected to the positive terminal of the smoothing capacitor Ci through the high frequency inductor L10. Accordingly, in the power factor correction circuit 18, the high frequency inductor L10 and the primary winding portion N1B are connected in series to each other.

The filter capacitor CN for suppressing normal mode noise is inserted between the anode of the switching diode D1 and the positive terminal of the smoothing capacitor Ci. The filter capacitor CN inserted in this manner can be considered to be connected in parallel to the series connection circuit of the switching diode D1, primary winding portion N1B and high frequency inductor L10.

Where the power factor correction circuit 18 is inserted in such a connection scheme as described above, rectification current outputted from the positive electrode terminal of the bridge rectification circuit Di flows into the smoothing capacitor Ci along a route of the switching diode D1 primary winding portion N1B high frequency inductor L10. In other words, the series connection circuit of the switching diode D1 primary winding portion N1B high frequency inductor L10 is inserted in the rectification current path of the full-wave rectification circuit for producing the rectification smoothed voltage Ei (dc input voltage) from the ac input voltage VAC.

Further, in this instance, since the primary winding portion N1B of the primary winding N1 is included in the rectification current path as described above, the switching output (primary side series resonance current) obtained from the primary side series resonance circuit is regenerated as electric power and fed back to the smoothing capacitor Ci through the magnetic coupling (high frequency inductor L10 and primary winding portion N1B).

For example, in the power factor correction circuit 17 shown in FIG. 19, the high frequency wiring portion L10B from between the high frequency wiring portions L10A and L10B formed by providing a tap for the high frequency inductor L10 is not inserted in the rectification current path, but is connected in series to the primary winding N1 through the primary side series resonance capacitor C1. Accordingly, the high frequency wiring portion L10B functions as an inductance component which forms the primary side series resonance circuit. Further, the high frequency wiring portion L10B transmits the switching output of the primary side series resonance circuit to the high frequency wiring portion L10A which is a closely coupled relationship thereto thereby to obtain power regeneration operation of superposing the ac input voltage component on the switching output in the power factor correction circuit 17.

Also in the power factor correction circuit 18 shown in FIG. 22, the primary winding portion N1B has an inductance component which forms the primary side series resonance circuit and is connected in series to the high frequency inductor L10. Consequently, the primary winding portion N1B can be substantially closely coupled to the high frequency inductor L10. Since such relationships are established, power regeneration operation similar to that of the power factor correction circuit 17 of FIG. 19 is obtained by transmitting the switching output from the primary winding portion N1B to the high frequency inductor L10.

From such operation as described above, it can be considered that the relationship between the high frequency wiring portion L10A and the high frequency wiring portion L10B of the power factor correction circuit 17 shown in FIG. 19 is equivalent to that between the high frequency inductor L10 (first inductor) and the primary winding portion N1B (second inductor) of the power factor correction circuit 18 shown in FIG. 22.

Power factor correcting operation of the power circuit of FIG. 22 which includes the power factor correction circuit 18 having the configuration described above is illustrated in FIG. 23. Also in FIG. 23, the ac input voltage VAC, ac input current IAC, rectification currents I1 and I2 and voltages V1 and V2 are illustrated similarly as in FIG. 20.

In the circuit of FIG. 22, the rectification current I1 flows from the positive output terminal of the bridge rectification circuit Di through the switching diode D1 while the rectification current I2 flows along a line between the high frequency inductor L10 and the positive terminal of the smoothing capacitor Ci. Further, the voltage V1 is a voltage between the node of the anode of the switching diode D1 and the tap of the primary winding N1 and the primary side ground. The voltage V2 is a voltage between the node of the high frequency inductor L10 and the end portion of the primary winding portion N1B and the primary side ground. The ac input voltage VAC is 230 V and has a frequency of 50 Hz, which are same conditions as those in the case of FIG. 20.

Also in the power factor correction circuit 18, the switching output is fed back by power regeneration operation from the primary side series resonance circuit as described hereinabove. In this instance, the voltage V2 which is a voltage at the end portion of the high frequency inductor L10 and the primary winding portion N1B has a waveform wherein the alternating voltage component of the switching cycle is superposed on the rectification smoothed voltage Ei on which the ripple component of the ac cycle is superposed as seen in FIG. 23. Also the voltage V2 has a waveform having an envelope which projects corresponding to a continuity period of the rectification current I1 Also in this instance, the maximum level of the envelope waveform of the voltage V2 at a point of time corresponding to a peak of the ac input voltage VAC (rectification current I1) is 570 V whereas the minimum level is 320 V.

Meanwhile, the voltage V1 which is a voltage between the node of the anode of the switching diode D1 and the tap of the primary winding N1 and the primary side ground has a waveform substantially similar to that of the voltage V2. However, since the primary winding portion N1B is not interposed, the voltage V1 exhibits a decreasing shift by 20 V as a whole as can be seen from the fact that the maximum level at a point of time corresponding to a peak of the rectification current I1 is 550 V and the minimum level is 300 V.

As can be recognized also from the fact that the voltages V1 and V2 have an alternating waveform, also in the power factor correction circuit 18 shown in FIG. 22, the alternating voltage of the switching cycle is superposed on the rectification current path for producing the rectification smoothed voltage Ei (dc input voltage) from the switching output (primary side series resonance current) fed back by the power regeneration from the primary side series resonance circuit. Also in this instance, the switching diode D1 performs, upon application of the alternating voltage component of the voltage V1 thereto, switching operation, for example, when the applied alternating voltage component is higher than approximately 1/2 the positive/negative peak value of the ac input voltage VAC to connect or disconnect the rectification current I1 flowing thereto from the positive output terminal of the bridge rectification circuit Di. Accordingly, also in this instance, the rectification current I1 has an alternating waveform having an envelope of half waves of the positive polarity of a sine waveform within the conducting period of the switching diode D1. It is to be noted that, also in this instance, the level of the rectification current I1 corresponding to a point of time at which the ac input voltage VAC exhibits a peak is 10 Ap.

Meanwhile, the rectification current I2 which tends to flow from the primary winding portion N1B into the smoothing capacitor Ci has a waveform wherein the rectification current I1 is superposed on the primary side series resonance current, whose positive /negative peak also in this instance is, for example, approximately 5 A, as seen in FIG. 23.

The rectification current I1 flowing with such a waveform as described above flows also within a period within which the level of the rectification output voltage outputted from the bridge rectification circuit Di is lower than the voltage across the smoothing capacitor Ci, and also the continuity period of the ac input current IAC substantially coincides with the continuity period of the rectification current I1. In other words, also in this instance, the continuity angle of the ac input current IAC is expanded from that where the power supply circuit does not include the power factor correction circuit, and accordingly, power factor correction is achieved. It is to be noted that the peak level of the ac input current IAC in this instance is 5 Ap.

As described hereinabove with reference to FIG. 22, the operations and functions of the high frequency inductor L10 and the primary winding portion N1B in the power factor correction circuit 18 are equivalent to those of the high frequency wiring portion L10A and the high frequency wiring portion L10B of the power factor correction circuit 17 of the power supply circuit of the seventh embodiment shown in FIG. 19, respectively. As described hereinabove, the rectification current I1 exhibits a sine waveform depending upon the operation of the high frequency wiring portion L10A and the high frequency wiring portion L10B of the power factor correction circuit 17, and as a result, also the ac input current IAC has a sine waveform. Accordingly, as a result of the power factor correction of the power factor correction circuit 18 shown in FIG. 22, the rectification current I1 and the ac input current IAC have sine waveforms as seen in FIG. 23.

In short, also the power supply circuit of the eighth embodiment shown in FIG. 22 suppresses the level of high and odd-numbered harmonics distortion, and, for example, a margin to the prescribed value prescribed by the power supply harmonics distortion regulation can be obtained sufficiently. Further, also in the eighth embodiment, to obtain such an effect as just described, only it is necessary to provide a tap for the primary winding N1 of the insulating converter transformer PIT and perform connection so that the circuit shown in FIG. 22 is formed, and there is no necessity to additionally provide a part or an element particularly.

Also in the power supply circuit of the eighth embodiment which has such a circuit configuration as described above, the insulating converter transformer PIT has a structure similar to that in the seventh embodiment described hereinabove so that, for example, the coupling coefficient k is lowered, for example, to k = approximately 0.75. Consequently, the continuous mode is always obtained as the secondary side rectification operation irrespective of a load variation, a variation of the ac input voltage and so forth.

Consequently, increase of the ripple voltage to be superposed on the secondary side dc output voltage Eo is suppressed in a similar manner as in the power supply circuit of the seventh embodiment described hereinabove, and also where the magnetic coupling type configuration is adopted for the power regeneration system, implementation thereof can be achieved readily. Further, a high power conversion efficiency is achieved similarly when compared with that of the power supply circuit of the choke input system.

Furthermore, also with the power supply circuit shown in FIG. 22, since the secondary side full-wave rectification circuit is formed as a synchronous rectification circuit according to the winding voltage detection system on the assumption that the continuous mode is always obtained as the secondary side rectification operation, reduction of the power loss on the secondary side can be achieved effectively by a minimum circuit configuration.

Further, also in this instance, the high frequency inductor L10 has inductance much lower than that of the power choke coil PCH for use for power factor correction according to the choke input system, and also a reduction effect of the power loss can be obtained as much.

FIG. 24 illustrates variation characteristics of the ac to dc power conversion efficiency ACDC, power factor PF and rectification smoothed voltage Ei (dc input voltage) with respect to a load variation, which are results obtained by an experiment conducted actually with regard to the power supply circuit of the eighth embodiment shown in FIG. 22.

Further, to obtain the results of the experiment illustrated in FIG. 24, the ac input voltage VAC was 230 V and the load power Po was so conditioned as to vary within the range between 150 W (Eo = 5 V × 30 A) and 0 W. Further, parts having the following parameters were selectively used as the components of the power supply circuit with a PFC shown in FIG. 22.
· insulating converter transformer PIT: EER-40 ferrite core, gap G = 1.4 mm, primary winding N1 (primary winding portion N1A = 60 T, secondary winding portion N1B = 4 T), secondary winding N2A = N2B = 2 T, coupling coefficient k = 0.75
· primary side series resonance capacitor C1 = 0.018 F /800 V
· high frequency inductor L10 = 75 H (EER-19 type core)
· switching diode D1 = 3 A/600 V
· filter capacitor CN = 1 F/2 00 V

The power factor PF of the power supply circuit shown in FIG. 22 has such a characteristic with respect to the load variation that it has a tendency that the value thereof increases as the load increases. As the power factor PF at the maximum load power Po = 150 Wh, PF = 0.81 was obtained.

Further, as the ac to dc power conversion efficiency ACDC of the power supply circuit shown in FIG. 22, ACDC = 92.0% was obtained at the maximum load power Po = 150 Wh, and this is a characteristic substantially similar to that in the seventh embodiment.

Further, as regards the characteristic of the rectification smoothed voltage Ei (dc input voltage), the power supply circuit of the present embodiment exhibits a higher level than that of the power supply circuit which does not include a power factor correction circuit. Also the characteristic of the level variation with respect to the load variation is such that, although it has an increasing tendency as the load power Po becomes heavier similarly as in the seventh embodiment, the variation with respect to the load variation can be generally regarded as substantially fixed. In short, also with the power supply circuit of the eighth embodiment, the variation of the dc input voltage with respect to the load variation is reduced.

Further, with the power supply circuit shown in FIG. 22, as the ripple voltage level ( Eo) of the secondary side dc output voltage Eo, Eo = 20 mV was measured, and consequently, a result similar to that of the power supply circuit of the seventh embodiment was obtained. Further, as the ripple voltage level ( Ei) of the rectification smoothed voltage Ei at the maximum load power Po = 150 Wh, it was measured that it was suppressed almost to the zero level.

It is to be noted that the present invention is not limited to the configurations of the power supply circuit described above.

First, the insulating converter transformer PIT may be altered suitably, for example into a core type as long as the insulating converter transformer PIT is configured such that the magnetic flux density therein is set to a value lower than a required value.

Further, for example, while the switching converters of the embodiments described hereinabove are based on a separately excited current resonance type converter, the power supply circuit of the present invention may otherwise include a self-excited current resonance type converter. In this instance, for example, a bipolar transistor can be selectively used for the switching elements. Further, also a current resonance type converter wherein four switching elements are connected in a full bridge coupling can be applied. Further, for the switching elements (Ql and Q2) on the primary side of the switching converter, elements other than MOS-FETs such as IGBTs (Insulated Gate Bipolar Transistors) can be adopted only if they can be applied in a separately excited form. Further, also the constants and other parameters of the parts and elements described hereinabove may be altered in accordance with actual conditions and so forth.

Still further, also particular configurations of the synchronous rectification circuits of the winding voltage detection system used as the secondary side full-wave rectification circuit may be altered suitably. Further, where a low voltage/high current condition is not required, a full-wave rectification circuit of a bridge configuration or a configuration based on two diodes may be used in place of the synchronous rectification circuit.

Furthermore, also the power factor correction circuit is not limited to those of the embodiments described hereinabove, but may have any one of various configurations based on circuit configurations according to various power regeneration (feedback) systems proposed by the assignee of the present invention in the past.

While preferred embodiments of the present invention have been described using specific terms, such description is for illustrative purposes only, and it is to be understood that changes and variations may be made without departing from the spirit or scope of the following claims.

## Claims

1. A switching power supply circuit comprising:
a rectification smoothing section for receiving an ac input voltage as an input thereto to produce a rectification voltage, said rectification smoothing section including a smoothing capacitor for smoothing the rectification voltage to produce a dc input voltage;
a switching section including a switching element for receiving the dc input voltage from said smoothing capacitor as an input thereto to perform switching operation;
a switching driving section for driving said switching element to perform the switching operation;
an insulating converter transformer including a primary winding to which a switching output obtained by the switching operation of said switching section is supplied and a secondary winding in which an alternating voltage is to be excited in response to the switching output to said primary winding;
a primary side series resonance circuit formed from a leakage inductance component of said primary winding of said insulating converter transformer and capacitance of a primary side series resonance capacitor connected in series to said primary winding for making the operation of said switching section as operation of the current resonance type;
a secondary side dc output voltage production section for receiving the alternating voltage excited in said secondary winding of said insulating converter transformer as an input thereto to perform rectification operation to produce a secondary side dc output voltage;
a fixed voltage control section for controlling said switching driving section in response to a level of the secondary side dc output voltage to vary the switching frequency of said switching section thereby to perform fixed voltage control for the secondary side dc output voltage; and
a power factor correction section for regenerating and feeding back the primary side resonance current obtained at said primary side series resonance circuit by the switching operation of said switching section as electric power to said smoothing capacitor, said power factor correction section including a power factor correcting switching element for switching the rectification current obtained by the rectification operation of said rectification smoothing section in response to the electric power fed back to said smoothing capacitor to connect or disconnect the rectification current;
said insulating converter transformer having a magnetic flux density set so as to allow the secondary side rectification current to exhibit a continuous mode irrespective of any variation of the secondary side dc output voltage.

2. A switching power supply circuit according to claim 1, wherein said power factor correction section includes:
a series connection circuit wherein a high frequency inductor inserted in series between a rectification output terminal of a rectification circuit in the form of a full-wave rectification circuit for rectifying the ac input voltage in said rectification smoothing section and a positive terminal of said smoothing capacitor and a diode which serves as said power factor correcting switching element are connected in series;
a power factor correcting series resonance capacitor connected in parallel to said diode element and cooperating with said high frequency inductor to form a series resonance circuit; and
a filter capacitor connected in parallel to said series connection circuit;
said primary side series resonance circuit being connected to a node of said high frequency inductor and said diode element of said series connection circuit.

3. A switching power supply circuit according to claim 1, wherein said power factor correction circuit includes:
a series connection circuit wherein a high frequency inductor inserted in series between a rectification output terminal of a rectification circuit in the form of a full-wave rectification circuit for rectifying the ac input voltage in said rectification smoothing section and a positive terminal of said smoothing capacitor and a diode which serves as said power factor correcting switching element are connected in series; and
a filter capacitor connected in parallel to said series connection circuit;
said primary side series resonance circuit being connected to a node of said high frequency inductor and said diode element of said series connection circuit.

4. A switching power supply circuit according to claim 1, wherein said rectification smoothing section is formed as a voltage doubler rectification circuit and includes a first rectification element inserted in a rectification current path formed within one of half cycles of the ac input voltage and a second rectification element inserted in another rectification current path formed within the other half cycle of the ac input voltage;
said first rectification element and said second element serving as said power factor correcting switching element of said power factor correction section;
said power factor correction section further including:
a high frequency inductor connected in series to said first rectification element in the rectification current path formed within the one half cycle of the ac input voltage and connected in series to said second rectification element in the rectification current path formed within the other half cycle of the ac input voltage;
a power factor correcting series resonance capacitor connected in parallel to said first and second rectification elements for cooperating with said high frequency inductor to form a series resonance circuit; and
a filter capacitor connected in parallel to the series connection circuit formed from said first rectification element and said high frequency inductor and also to the series connection circuit formed from said second rectification element and said high frequency inductor;
said primary side series resonance circuit being connected to a node of said first rectification element, second rectification element and high frequency inductor.

5. A switching power supply circuit according to claim 1, wherein said rectification smoothing section is formed as a voltage doubler rectification circuit and includes a first rectification element inserted in a rectification current path formed within one of half cycles of the ac input voltage and a second rectification element inserted in another rectification current path formed within the other half cycle of the ac input voltage;
said power factor correction section further including:
a high frequency inductor connected in series to said first rectification element in the rectification current path formed within the one half cycle of the ac input voltage and connected in series to said second rectification element in the rectification current path formed within the other half cycle of the ac input voltage; and
a filter capacitor connected in parallel to the series connection circuit formed from said first rectification element and said high frequency inductor and also to the series connection circuit formed from said second rectification element and said high frequency inductor;
said primary side series resonance circuit being connected to a node of said first rectification element, second rectification element and high frequency inductor.

6. A switching power supply circuit according to claim 1, wherein said power factor correcting switching element of said power factor correction section is provided in a rectification current path formed for each of periods of half cycles within which the ac input voltage exhibits positive and negative polarities in said rectification smoothing section, which forms a full-wave rectification circuit or a voltage doubler rectification circuit, for performing the switching operation in response to the electric power fed back thereto to connect or disconnect the rectification current, and said power factor correction section further includes:
a first inductor connected in series to said power factor correcting switching element in said rectification current path;
a second inductor connected in such a manner as to be connected in series to said first inductor and included in the inductance component for forming said primary side series resonance circuit; and
a filter capacitor connected so as to suppress normal mode noise.

7. A switching power supply circuit according to claim 6, wherein said first and second inductors of said power factor correction section are a first winding portion and a second winding portion, respectively, formed by dividing a winding of a single high frequency inductor by providing a tap to said winding of said high frequency inductor.

8. A switching power supply circuit according to claim 6, wherein said first inductor of said power factor correction section is provided as a single high frequency inductor, and said second inductor of said power factor correction section is one of winding portions formed by dividing said primary winding of said insulating converter transformer by providing a tap to said primary winding.

9. A switching power supply circuit according to claim 1, wherein said secondary side dc output voltage production section includes a rectification circuit in the form of a synchronous rectification circuit according to a winding voltage detection system.

10. A switching power supply circuit according to claim 1, wherein said insulating converter transformer further includes a core on which said primary winding and said secondary winding are wound and which has a gap formed therein such that said primary winding and said secondary winding are coupled to each other with a loose coupling.

11. A switching power supply circuit according to claim 10, wherein the magnetic flux density of said insulating converter transformer is further set such that an induced voltage level per one turn of said secondary winding is set to a value lower than a predetermined value through setting of the numbers of turns of said primary winding and said secondary winding.
